# EUROPEAN PATENT SPECIFICATION

(11) **EP 1 961 786 B1**
(45) Date of publication and mention of the grant of the patent: **06.04.2011**
(21) Application number: 06834506.5
(22) Date of filing: 12.12.2006
(51) Int. Cl.: C08L 33/00, C08F 4/40, C09K 3/00, F16F 15/02

(54) **CURABLE COMPOSITION FOR DAMPING MATERIAL AND DAMPING MATERIAL**
HÄRTBARE ZUSAMMENSETZUNG FÜR DÄMPFUNGSMATERIAL UND DÄMPFUNGSMATERIAL
COMPOSITION DURCISSABLE POUR MATERIAU D'AMORTISSEMENT ET MATERIAU D'AMORTISSEMENT

(30) Priority: 13.12.2005 JP 2005359638; 17.04.2006 JP 2006113269
(43) Date of publication of application: 27.08.2008
(73) Proprietor: Kaneka Corporation, Kita-ku Osaka-shi, Osaka 530-8288 (JP)
(72) Inventor: TAMAI, Hitoshi, Osaka 566-0072 (JP); OGAWA, Kohei, Osaka 566-0072 (JP); NAKAGAWA, Yoshiki, Osaka 566-0072 (JP)
(74) Representative: Hart-Davis, Jason
(86) International application number: PCT/JP2006/324751
(87) International publication number: WO 2007/069600

(56) References cited:
- EP-A- 1 598 402
- JP-A- 02 296 871
- JP-A- 03 188 166
- JP-A- 11 012 427
- JP-A- 2004 244 528
- JP-A- 2005 082 750
- JP-A- 2005 290 244
- JP-A- 2006 219 504

## Description

### TECHNICAL FIELD

The present invention relates to a curable composition for damping materials and a damping material obtained from the composition. The present invention relates more specifically to a curable composition for damping materials, containing a vinyl-based polymer (I) having more than one crosslinkable functional groups on average and having at least one of the crosslinkable functional groups at the terminus thereof, and a vinyl-based polymer (II) having one or less crosslinkable functional group on average, wherein the content of the vinyl-based polymer (II) is 50 to 95 parts by weight based on 100 parts by weight of the vinyl-based polymers (I) and (II), as well as a damping material obtained from the composition.

### BACKGROUND ART

For the purpose of reducing noise and vibration, damping materials are used in a broad range of fields such as electric/electronic devices, semiconductors, detectors, ships, automobiles, cameras/office machines, industrial machines, and railway. Damping materials have been designed based on polymer materials, among which base polymers of flame-retardant materials include butyl rubber, EVA, polynorbornene, silicone gel, polyurethane, epoxy resin, various liquid materials and thermoplastic elastomers, and materials excellent in damping characteristics have been developed by design of polymer and design of mix (Non Patent Document 1).

In recent years, there is a demand for damping materials having high performance such as high heat resistance and high oil resistance. Rubber materials improving such characteristics include an acrylic rubber, an ethylene/acrylate copolymer, and fluorosilicon. However, such rubber materials have problems such as an insufficient damping property (small values of tan δ) (Patent Document 1), a narrow temperature range in which the rubber materials show damping property (Patent Document 2), and uneconomical production in industrial scale because costs for forming are problematic due to necessity for heat kneading in a material forming process (Patent Document 3).
Patent Document 1: Japanese Patent Laying-Open No. 6-207079
Patent Document 2: Japanese Patent Laying-Open No. 7-90126
Patent Document 3: Japanese Patent Laying-Open No. 2000-44820
Non Patent Document 1: "Kobunshi Seishin Zairyo/Oyoseihin no Shin-Doko (New Trend in Polymer Damping Material/Applied Product (supervised by Jin Nishizawa and published on September 30, 1997, by CMC Publishing Co., Ltd.).

### DISCLOSURE OF THE INVENTION

### PROBLEMS TO BE SOLVED BY THE INVENTION

An object of the present invention is to solve the problems described above. That is, the object of the present invention is to provide a curable composition for damping materials excellent in heat resistance, oil resistance and damping property, as well as a damping material therefrom.

### MEANS FOR SOLVING THE PROBLEMS

In view of the circumstances described above, the present inventors made intensive study, and as a result, they found that the problems can be solved by a curable composition for damping materials, containing a vinyl-based polymer (I) having more than one crosslinkable functional groups on average and having at least one of the crosslinkable functional groups at the terminus thereof, and a vinyl-based polymer (II) having one or less crosslinkable functional group on average, wherein the content of the vinyl-based polymer (II) is 50 to 95 parts by weight based on 100 parts by weight of the vinyl-based polymers (I) and (II), and the present invention was thereby completed.

That is, the present invention relates to a curable composition for damping materials, containing a vinyl-based polymer (I) having more than one crosslinkable functional groups on average and having at least one of the crosslinkable functional groups at the terminus thereof, and a vinyl-based polymer (II) having one or less crosslinkable functional group on average, wherein the content of the vinyl-based polymer (II) is 50 to 95 parts by weight based on 100 parts by weight of the vinyl-based polymers (I) and (II).

The maximum value of loss tangent (tan δ) in dynamic viscoelastic characteristics of a rubber-like substance obtained by curing the curable composition for damping materials is preferably 0.7 or more.

The crosslinkable functional group of the vinyl-based polymer (I) is preferably at least one member selected from the group consisting of a crosslinkable silyl group, an alkenyl group, a hydroxyl group, an amino group, and a group having a polymerizable carbon-carbon double bond.

The crosslinkable functional group of the vinyl-based polymer (II) is preferably at least one member selected from the group consisting of a crosslinkable silyl group, an alkenyl group, a hydroxyl group, an amino group, a group having a polymerizable carbon-carbon double bond, and an epoxy group.

In the curable composition for damping materials according to the present invention, the crosslinkable functional group of the vinyl-based polymer (I) and/or the vinyl-based polymer (II) is a group having a polymerizable carbon-carbon double bond, and the composition may further contain an initiator (III).

The initiator (III) is preferably a photoradical initiator and/or a heat radical initiator.

The photoradical initiator is preferably at least one member selected from the group consisting of a compound having a hydroxyl group and a phenyl ketone structure, a compound having a benzophenone structure, and a compound having an acylphosphine oxide structure.

The vinyl-based polymer (I) and/or the vinyl-based polymer (II) preferably has a molecular-weight distribution of less than 1.8.

The main chain of the vinyl-based polymer (I) and/or the vinyl-based polymer (II) is produced preferably by polymerizing predominantly at least one monomer selected from the group consisting of (meth)acrylic monomers, acrylonitrile monomers, aromatic vinyl-based monomers, fluorine-containing vinyl-based monomers and silicon-containing vinyl-based monomers.

The vinyl-based polymer (I) and/or the vinyl-based polymer (II) is preferably a (meth)acrylic polymer, more preferably an acrylic acid-based polymer, still more preferably an acrylate-based polymer.

The vinyl-based polymer (I) and the vinyl-based polymer (II) is a polymer produced by controlled radical polymerization.

The controlled radical polymerization is living radical polymerization, more preferably atom transfer radical polymerization. The atom transfer radical polymerization preferably uses, as a catalyst, a metal complex selected from the group consisting of transition metal complexes composed of a VII, VIII, IX, X, or XI group element in the periodic table as a central metal, more preferably a metal complex selected from the group consisting of complexes of copper, nickel, ruthenium, or iron, still more preferably a complex of copper.

The damping material of the present invention is obtained by curing the above-described curable composition for damping materials.

### EFFECTS OF THE INVENTION

A rubber-like cured product obtained by curing the curable composition for damping materials according to the present invention has excellent oil resistance, heat resistance and weather resistance and can be endowed with functions as a damping material and a shock absorber in a wide temperature range, and the curable composition for damping materials of the present invention can give a suitable cured product as a damping material exhibiting an excellent viscoelastic behavior.

### BEST MODES FOR CARRYING OUT THE INVENTION

The curable composition for damping materials according to the present invention contains, as components, a vinyl-based polymer (I) having more than one crosslinkable functional groups on average and having at least one of the crosslinkable functional groups at the terminus thereof (hereinafter, referred to sometimes as merely "vinyl-based polymer (I)"), and a vinyl-based polymer (II) having one or less crosslinkable functional group on average (hereinafter, referred to sometimes as merely "vinyl-based polymer (II)"). Hereinafter, the components contained in the curable composition for damping materials according to the present invention are described in detail.

### <<With Respect to the Vinyl-based Polymers (I) and (II)>>

### <Main Chain>

The monomers constituting the main chains of the vinyl-based polymers (I) and (II) according to the present invention are not particularly limited, and various monomers can be used. Examples of the monomer include (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoramethylethyl (meth)acrylate, perfluoramethylperfluoroethylmethyl (meth)acrylate, 2-perfluoromethyl-2-perfluaroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate and 2-perfluorohexadecylethyl (meth)acrylate; aromatic vinyl-based monomers such as styrene, vinylketone, α-methylstyrene, chlorostyrene, and styrenesulfonic acid and its salts; fluorine-containing vinyl-based monomers such as perfluoroethylene, perfluoropropylene, and vinylidene fluoride; silicon-containing vinyl-based monomers such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile-based monomers such as acrylonitrile and methacrylonitrile; amide group-containing vinyl-based monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. These monomers may be used alone, or at least two may be copolymerized. Herein, the term "(meth)acrylic acid" means acrylic acid and/or methacrylic acid.

The main chain of the vinyl-based polymer (I) and/or the vinyl-based polymer (II) is preferably one produced by polymerizing predominantly at least one monomer selected from the group consisting of (meth)acrylic monomers, acrylonitrile-based monomers, aromatic vinyl-based monomers, fluorine-containing vinyl-based monomers and silicon-containing vinyl-based monomers. The term "predominantly" as used herein means that the above-mentioned monomer accounts for not less than 50 mol%, preferably not less than 70 mol%, of the monomer units constituting the vinyl-based polymer (I).

In particular, from the viewpoint of physical properties of a product, aromatic vinyl-based monomers and (meth)acrylic monomers are preferred. Acrylate monomers and/or methacrylate monomers are more preferred, and acrylate monomers are particularly preferred. Specifically, particularly preferred acrylate monomers are ethyl acrylate, 2-methoxyethyl acrylate, stearyl acrylate, butyl acrylate, 2-ethylhexyl acrylate, and 2-methoxybutyl acrylate. In the present invention, these preferred monomers may be copolymerized, e.g., block-copolymerized, with another monomer or other monomers. In this case, the content by weight of the preferred monomers is preferably 40% by weight or more.

For applications such as general building and construction, butyl acrylate-based monomers are further more preferred from the viewpoint that physical properties such as low viscosity of the curable composition, low modulus, high elongation, good weather resistance, and good heat resistance of cured products obtained therefrom are required. On the other hand, for applications such as automobiles where the oil resistance and the like are required, copolymers predominantly composed of ethyl acrylate are further more preferred. The polymer predominantly composed of ethyl acrylate is somewhat inferior in low-temperature characteristics (cold resistance), although it is excellent in oil resistance. Therefore, it is possible to substitute a part of ethyl acrylate units into butyl acrylate units for improving the low-temperature characteristics. However, since the good oil resistance is gradually deteriorated as a proportion of butyl acrylate increases, the proportion of butyl acrylate is preferably not more than 40 mol% (hereinafter also referred to simply as %), more preferably not more than 30 mol%, depending on the applications where the oil resistance is required. Furthermore, to improve low-temperature characteristics or the like without deteriorating oil resistance, it is also preferable that 2-methoxyethyl acrylate or 2-ethoxyethyl acrylate having oxygen introduced into an alkyl group in its side chain is used. However, when heat resistance is required, the ratio thereof is preferably not more than 40 mol%, since heat resistance tends to be poor by introduction of an alkoxy group having an ether bond in a side chain. A polymer suitable for various uses or required purposes can be obtained by changing the ratios of monomers in view of desired physical properties such as oil resistance, heat resistance and low-temperature characteristics. For example, as the polymer having well-balanced physical properties among oil resistance, heat resistance, low-temperature characteristics and the like, there may be mentioned, without limitation, a copolymer of ethyl acrylate/butyl acrylate/2-methoxyethyl acrylate (40 to 50/20 to 30/30 to 20, by molar ratio), among others.

The molecular weight distribution [the ratio of the weight-average molecular weight (Mw) to the number-average molecular weight (Mn) determined by gel permeation chromatography (Mw/Mn)] of the vinyl-based polymer (I) and/or the vinyl-based polymer (II) according to the present invention is not particularly limited, but the ratio is preferably less than 1.8, more preferably 1.7 or less, still more preferably 1.6 or less, further more preferably 1.5 or less, even more preferably 1.4 or less, and most preferably 1.3 or less. In GPC measurement in the present invention, a molecular weight is generally determined in terms of polystyrene using a polystyrene gel column and chloroform as a mobile phase.

The number-average molecular weight of the vinyl-based polymer (I) in the present invention is not particularly limited, but is preferably in the range of 500 to 1,000,000, more preferably 5,000 to 100,000, still more preferably 10,000 to 50,000, as determined by gel permeation chromatography (GPC). The number-average molecular weight of the vinyl-based polymer (II) is not particularly limited, but is preferably in the range of 500 to 1,000,000, more preferably 3,000 to 50,000, still more preferably 5,000 to 30,000, as determined by gel permeation chromatography (GPC).

### <Method of Synthesis of Main Chain>

The method of synthesizing the vinyl-based polymer in the present invention is particularly not limited, but preferably controlled radical polymerization is used. The controlled radical polymerization is not limited, but is preferably living radical polymerization, more preferably atom transfer radical polymerization. These polymerization techniques are described in the following.

### (Controlled Radial Polymerization)

Radical polymerization processes are classified into a "general radical polymerization process" in which a monomer having a specific functional group and a vinyl-based monomer are simply copolymerized using an azo compound, a peroxide, or the like as a polymerization initiator, and a "controlled radial polymerization process" in which a specific functional group can be introduced into a controlled position such as a terminus or the like.

The "general radical polymerization process" is a simple process, and a monomer having a specific functional group can be introduced into a polymer only stochastically. When a polymer with high functionalization ratio is desired, therefore, a considerable amount of the monomer must be used. Conversely, use of a small amount of the monomer has the problem of increasing the ratio of a polymer into which the specific functional group is not introduced. There is also the problem of producing only a polymer with a wide molecular weight distribution and high viscosity because the process is free radical polymerization.

The "controlled radical polymerization process" is further classified into a "chain transfer agent process" in which polymerization is performed using a chain transfer agent having a specific functional group to produce a vinyl-based polymer having the functional group at a terminus, and a "living radical polymerization process" in which polymerization propagation termini propagate without causing termination reaction to produce a polymer having a molecular weight substantially as designed.

The "chain transfer agent process" is capable of producing a polymer with high functionalization ratio, but a considerable amount of a chain transfer agent having a specific functional group must be used relative to the initiator, thereby causing an economical problem of the cost including the treatment cost. Like the "general radical polymerization process", the chain transfer agent process also has the problem of producing only a polymer with a wide molecular weight distribution and high viscosity because it is free radical polymerization.

It is said that the "living radical polymerization process" belongs to radical polymerization which has a high polymerization rate and is difficult to control because termination reaction easily occurs due to radical coupling or the like. However, in the "living radical polymerization process" unlike the above-mentioned processes, termination reaction hardly occurs, a polymer having a narrow molecular weight distribution (Mw/Mn of about 1.1 to 1.5) can be produced, and the molecular weight can be freely controlled by changing the charge ratio of the monomer to the initiator.

Therefore, the "living radical polymerization process" is capable of producing a polymer with a narrow molecular weight distribution and low viscosity and introducing a monomer having a specific functional group into a substantially desired position of a polymer. Thus, this process is more preferred as a process for producing the vinyl-based polymer having the specific functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent years, the "living radical polymerization process" has been actively studied by various groups. Examples of studies include a process using a cobalt porphyrin complex, as shown in Journal of American Chemical Society (J. Am. Chem. Soc.), 1994, vol. 116, p. 7943; a process using a radical scavenger such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these "living radical polymerization processes", the "atom transfer radical polymerization process" in which a vinyl-based monomer is polymerized using an organic halide or a halogenated sulfonyl compound as an initiator and a transition metal complex as a catalyst has the above-mentioned characteristics of the "living radical polymerization process" and also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl-based polymer having a specific functional group. Examples of the atom transfer radical polymerization process include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421, WO97/18247, WO98/01480 and WO98/40415; Sawamoto, et al., Macromolecules, 1995, vol. 28, p. 1721; and JP-A 9-208616, JP-A 8-41117.

In the present invention, any one of these living radical polymerization processes may be used without limitation, but the atom transfer radical polymerization process is preferred.

Hereinafter, the living radical polymerization is described in detail, but before that, one of controlled radical polymerization processes that can be used in production of the vinyl-based polymer to be described later, that is, polymerization using a chain transfer agent is described. The radical polymerization process using the chain transfer agent (telomer) is not particularly limited, but examples of a process for producing a vinyl-based polymer having a terminal structure suitable for the present invention include the following two processes:

A process for producing a halogen-terminated polymer by using a halogenated hydrocarbon as the chain transfer agent as disclosed in JP-A 4-132706, and a process for producing a hydroxyl group-terminated polymer using a hydroxyl group-containing mercaptan or a hydroxyl group-containing polysulfide or the like as the chain transfer agent as disclosed in JP-A 61-271306, Japanese Patent No. 2594402, and JP-A 54-47782.

Next, the living radical polymerization will be described.

First, the process using a nitroxide compound and the like as the radical scavenger will be described. This polymerization process generally uses a stable nitroxy free radical (=N-O) as a radical capping agent. Preferred examples of such a compound include, but are not limited to, nitroxy free radicals produced from cyclic hydroxyamines such as 2,2,6,6-substituted-1-piperidinyloxy radical and 2,2,5,5-substituted-1-pyrrolidinyloxy radical. As a substituent, an alkyl group having 4 or less carbon atoms such as a methyl group or an ethyl group is suitable. Specific examples of a nitroxy free radical compound include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Instead of the nitroxy free radical, a stable free radical such as a galvinoxyl free radical may be used.

The radical capping agent is used in combination with a radical generator. The reaction product of the radical capping agent and the radical generator possibly serves as a polymerization initiator to promote polymerization of an addition-polymerizable monomer The ratio between both agents used is not particularly limited, but the amount of the radical initiator is preferably 0.1 to 10 moles per mole of the radical capping agent.

As a radical generator, any one of various compounds can be used, but a peroxide capable of generating a radical under a polymerization temperature condition is preferred. Examples of the peroxide include, but are not limited to, diacyl peroxides such as benzoyl peroxide and lauroyl peroxide; dialkyl peroxides such as dicumyl peroxide and di-tert-butyl peroxide; peroxycarbonates such as diisopropyl peroxydicarbonate and bis(4-tert-butylcyclohexyl)peroxydicarbonate; and alkyl peresters such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, p. 2993, the alkoxyamine compound shown below may be used as the initiator instead of a combination of the radical capping agent and the radical generator.

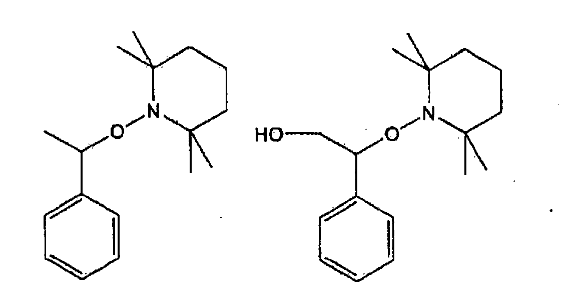

When the alkoxyamine compound is used as the initiator, the use of a compound having a functional group such as a hydroxyl group among those represented by the formula above produces a polymer having the functional group at a terminus. When this compound is used in the method of the present invention, a polymer having the functional group at a terminus is produced.

The conditions of polymerization using the nitroxide compound described above and the like as the radical scavenger such as the conditions of the monomer, the solvent, and the polymerization temperature are not limited. However, these conditions may be the same as those in atom transfer radical polymerization which will be described in the following.

### (Atom Transfer Radical Polymerization)

Next, the atom transfer radical polymerization process more preferable as the living radical polymerization in the present invention will be described.

The atom transfer radical polymerization uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound. Specific examples of such an initiator include:

C₆H₅-CH₂X,

C₆H₅ - C (H)(X)CH₃,

C₆H₅ - C(X)(CH₃)₂

(wherein C₆H₅ is a phenyl group, X is chlorine, bromine, or iodine);

R¹-C(H)(X)-CO₂R²,

R¹-C(CH₃)(X) - CO₂R²,

R¹-C(H)(X) - C(O)R²,

R¹-C(CH₃)(X) - C(O)R²

(wherein R¹ and R² are each a hydrogen atom or an alkyl, aryl, or aralkyl group having 1 to 20 carbon atoms, and X is chlorine, bromine, or iodine); and

R¹ - C₆H₄- SO₂X

(wherein R¹ is a hydrogen atom or an alkyl, aryl, or aralkyl group having 1 to 20 carbon atoms, and X is chlorine, bromine, or iodine).

As the initiator of the atom transfer radical polymerization, an organic halide or a halogenated sulfonyl compound having a functional group other than a functional group which initiates polymerization can be used. In this case, the resultant vinyl-based polymer has the functional group at one of the main chain termini and a propagating terminal structure of the atom transfer radical polymerization at the other terminus. Examples of such a functional group include an alkenyl group, a crosslinkable silyl group, a hydroxyl group, an epoxy group, an amino group, an amide group and the like.

Examples of an organic halide having an alkenyl group include, but are not limited to, compounds having the structure represented by the general formula (1):

R⁴R⁵C(X) - R⁶-R⁷-C(R³)= CH₂ (1)

(wherein R³ is hydrogen or a methyl group; R⁴ and R⁵ are each hydrogen, a monovalent alkyl, aryl or aralkyl group having 1 to 20 carbon atoms, or R⁴ and R⁵ are bonded together at the other termini; R⁶ is -C(O)O- (an ester group), -C(O)- (a keto group), or an o-, m-, or p-phenylene group; R⁷ is a direct bond or a divalent organic group having 1 to 20 carbon atoms, which may contain at least one ether bond; and X is chlorine, bromine, or iodine).

Specific examples of the substituents R⁴ and R⁵ include hydrogen, a methyl group, an ethyl group, an n-propyl group, an isopropyl group, a butyl group, a pentyl group, a hexyl group and the like. Substituents R⁴ and R⁵ may be bonded together at the other termini to form a cyclic skeleton.

Specific examples of an alkenyl group-containing organic halide represented by the general formula (1) include:

XCH₂C(O)O(CH₂)ₙCH = CH₂,

H₃CC(H)(X)C(O)O(CH₂)ₙCH = CH₂,

(H₃C)₂C(X)C(O)O(CH₂)ₙCH = CH₂,

CH₃CH₂C(H)(X)C(O)O(CH₂)ₙCH = CH₂,

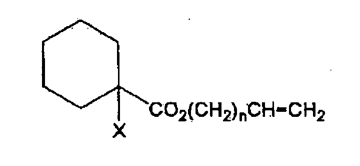

(wherein X is chlorine, bromine, or iodine, and n is an integer of 0 to 20);

XCH₂C(O)O(CH₂)ₙO(CH₂)ₘCH = CH₂,

H₃CC(H)(X)C(O)O(CH₂)ₙO(CH₂)ₘCH = CH₂,

(H₃C)₂C(X)C(O)O(CH₂)ₙO(CH₂)ₘCH = CH₂,

CH₃CH₂C(H)(X)C(O)O(CH₂)ₙO(CH₂)ₘCH = CH₂,

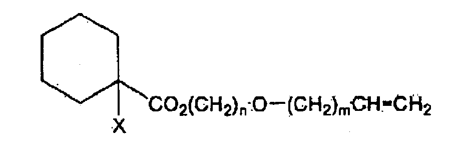

(wherein X is chlorine, bromine, or iodine, n is an integer of 1 to 20, and m is an integer of 0 to 20);

o, m, p - XCH₂ - C₆H₄ - (CH₂)ₙ - CH = CH₂,

o, m, p - CH₃C(H)(X) - C₆H₄-(CH₂)ₙ - CH = CH₂,

o, m, p - CH₃CH₂C(H)(X) - C₆H₄ - (CH₂)ₙ-CH = CH₂

(wherein X is chlorine, bromine, or iodine, and n is an integer of 0 to 20);

o, m, p - XCH₂ - C₆H₄ - (CH₂)ₙ-O-(CH₂)ₘ-CH = CH₂,

o, m, p - CH₃C(H)(X) - C₆H₄ - (CH₂)ₙ-O- (CH₂)ₘ - CH = CH₂,

o, m, p - CH₃CH₂C(H)(X)-C₆H₄-(CH₂)ₙ-O-(CH₂)ₘCH = CH₂

(wherein X is chlorine, bromine, or iodine, n is an integer of 1 to 20, and m is an integer of 0 to 20);

o, m, p - XCH₂ - C₆H₄ - O-(CH₂)ₙ-CH = CH₂,

o, m, p - CH₃C(H)(X) - C₆H₄ - O-(CH₂)ₙ-CH = CH₂,

o, m, p - CH₃CH₂C(H)(X) - C₆H₄ - O-(CH₂)ₙ-CH = CH₂

(wherein X is chlorine, bromine, or iodine, and n is an integer of 0 to 20); and

o, m, p - XCH₂-C₆H₄- O-(CH₂)ₙ-O-(CH₂)ₘ-CH = CH₂,

o, m, p - CH₃C(H)(X) - C₆H₄-O-(CH₂)ₙ-O-(CH₂)ₘ-CH = CH₂,

o, m, p - CH₃CH₂C(H)(X) - C₆H₄ -O-(CH₂)ₙ-O-(CH₂)ₘ-CH = CH₂

(wherein X is chlorine, bromine, or iodine, n is an integer of 1 to 20, and m is an integer of 0 to 20).

Other examples of an organic halide having an alkenyl group include compounds represented by the general formula (2):

H₂C = C(R³) - R⁷ -C(R⁴)(X) - R⁸ - R⁵ (2)

(wherein R³, R⁴, R⁵, R⁶, R⁷, and X represent the same as the above, and R⁸ represents a direct bond or -C (O)O- (an ester group), -C(O)- (a keto group), or an o-, m-, or p-phenylene group).

R⁷ is a direct bond or a divalent organic group having 1 to 20 carbon atoms (which may contain at least one ether bond). When R⁷ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as R⁸, and a direct bond may be present. When R⁷ is not a direct bond, R⁸ is preferably a -C(O)O-, -C(O)-, or phenylene group for activating the carbon-halogen bond.

Specific examples of the compounds represented by the general formula (2) include the following:

CH₂ = CHCH₂X,

CH₂ = C (CH₃)CH₂X,

CH₂ = CHC(H)(X)CH₃,

CH₂ = C(CH₃)C(H)(X)CH₃,

CH₂ = CHC(X)(CH₃)₂,

CH₂ = CHC(H)(X)C₂H₅,

CH₂ =CHC(H)(X)CH(CH₃)₂,

CH₂ = CHC(M(X)C₆H₅,

CH₂= CHC(H)(X)CH₂C₆H₅,

CH₂ = CHCH₂C(H)(X) - CO₂R,

CH₂ = CH(CH₂)₂C(H)(X) - CO₂R,

CH₂ = CH(CH₂)₃C(H)(X) - CO₂R,

CH₂ = CH(CH₂)₈C(H)(X) - CO₂R,

CH₂ = CHCH₂C(H)(X) - C₆H₅,

CH₂ = CH(CH₂)₂C (H)(X) - C₆H₅,

CH₂ = CH(CH₂)₃C(H)(X) - C₆H₅

(wherein X is chlorine, bromine, or iodine, and R is an alkyl, aryl, or aralkyl group having 1 to 20 carbon atoms).

Specific examples of a halogenated sulfonyl compound having an alkenyl group include the following:

o-, m -, p- CH₂ = CH - (CH₂)ₙ -C₆H₄ - SO₂X,

o-, m-, p - CH₂ = CH - (CH₂)ₙ - O - C₆H₄ - SO₂X

(wherein X is chlorine, bromine, or iodine, and n is an integer of 0 to 20).

Specific examples of an organic halide having a crosslinkable silyl group include, but are not limited to, compounds with a structure represented by the general formula (3):

R⁴R⁵C(X) - R⁶ - R⁷- C(H)(R³)CH₂ - [Si(R⁹)_{2-b}(Y)_{b}O]ₘ- Si(R¹⁰)₃₋ₐ(Y)ₐ (3)

(wherein R³, R⁴, R⁵, R⁶, R⁷, and X are as defined above, R⁹ and R¹⁰ each represent an alkyl, aryl, or aralkyl group having 1 to 20 carbon atoms, or a triorganosiloxy group represented by (R')₃SiO- (the three R's are each a monovalent hydrocarbon group having 1 to 20 carbon atoms and may be the same or different); when two or more groups R⁹ or R¹⁰ are present, they may be the same or different; Y represents a hydroxyl group or a hydrolysable group, and when two or more groups Y are present, they may be the same or different; a represents 0, 1, 2, or 3; b represents 0, 1, or 2; m represents an integer of 0 to 19; and a + mb ≥ 1 is satisfied).

Specific examples of the compounds represented by the general formula (3) include the following:

XCH₂C(O)O(CH₂)ₙSi(OCH₃)₃,

CH₃C(H)(X)C(O)O(CH₂)ₙSi(OCH₃)₃

(CH₃)₂C(X)C(O)O(CH₂)ₙSi(OCH₃)₃,

XCH₂C(O)O(CH₂)ₙSi(CH₃)(OCH₃)₂,

CH₂C(H)(X)C(O)O(CH₂)ₙSi(CH₂)(OCH₃)₂,

(CH₃)₂C(X)C(O)O(CH₂)ₙSi(CH₃)(OCH₃)₂

(wherein X is chlorine, bromine, or iodine, and n is an integer of 0 to 20);

XCH₂C(O)O(CH₂)ₙO(CH₂)ₘSi(OCH₃)₃,

H₃CC(H)(X)C(O)O(CH₂)ₙO(CH₂)ₘSi(OCH₃)₃,

(H₃C)₂C(X)C(O)O(CH₂)ₙO(CH₂)ₘSi(OCH₃)₃,

CH₃CH₂C(H)(X)C(O)O(CH₂)ₙO(CH₂)ₘSi(OCH₃)₃,

XCH₂C(O)O(CH₂)ₙO(CH₂)ₘSi(CH₃)(OCH₃)₂,

H₃CC(H)(X)C(O)O(CH₂)ₙO(CH₂)ₘ - Si(CH₃)(OCH₃)₂,

(H₃C)₂C(X)C(O)O(CH₂)ₙO(CH₂)ₘ - Si (CH₃)(OCH₃)₂,

CH₃CH₂C(H)(X)C(O)O(CH₂)ₙO(CH₂)ₘ -Si (CH₃)(OCH₃)₂

(wherein X is chlorine, bromine, or iodine, n is an integer of 1 to 20, and m is an integer of 0 to 20); and

o, m, p - XCH₂ - C₆H₄ - (CH₂)₂Si(OCH₃)₃,

o, m, p - CH₃C(H)(X) - C₆H₄ - (CH₂)₂Si(OCH₃)₃,

o, m, p - CH₃CH₂C(H)(X) - C₆H₄ - (CH₂)₂Si(OCH₃)₃,

o, m, p - XCH₂ -C₆H₄ - (CH₂)₃Si(OCH₃)₃,

o, m, p - CH₃C(H)(X) - C₆H₄ - (CH₂)₃Si(OCH₃)₃,

o, m, p - CH₃CH₂C(H)(X) - C₆H₄ - (CH₂)₃Si(OCH₃)₃,

o, m, p - XCH₂ - C₆H₄ - (CH₂)₂ - O - (CH₂)₃Si(OCH₃)₃,

o, m, p - CH₃C(H)(X) - C₆H₄- (CH₂)₂ - O - (CH₂)₃Si (OCH₃)₃,

o, m, p - CH₃CH₂C(H)(X) - C₆H₄ - (CH₂)₂ - O - (CH₂)₃Si(OCH₃)₃,

o, m, p - XCH₂ - C₆H₄ - O -(CH₂)₃Si(OCH₃)₃,

o, m, p - CH₃C(H)(X) - C₆H₄-O-(CH₂)₃Si(OCH₃)₃,

o, m, p - CH₃CH₂C(H)(X) - C₆H₄ - O - (CH₂)₃ - Si(OCH₃)₃,

o, m, p - XCH₂ - C₆H₄ - O - (CH₂)₂ - O - (CH₂)₃ - Si(OCH₃)₃,

o, m, p - CH₃C(H)(X) - C₆H₄ - O - (CH₂)₂ - O - (CH₂)₃Si(OCH₃)₃,

o, m, p - CH₃CH₂C(H)(X)-C₆H₄ - O - (CH₂)₂ - O - (CH₂)₃Si(OCH₃)₃

(wherein X is chlorine, bromine, or iodine).

Other examples of the organic halide having a crosslinkable silyl group include compounds with a structure represented by the general formula (4):

(R¹⁰)₃₋ₐ (Y)ₐ Si - [OSi(R⁹)_{2-b}(Y)_{b}]ₘ - CH₂-C(H)(R³)-R⁷ - C(R⁴)(X) - R⁸ - R⁵ (4)

(wherein R³, R⁴, R⁵, R⁷, R⁸, R⁹, R¹⁰, a, b, m, X and Y represent the same as the above).

Specific examples of such compounds include the following:

(CH₃O)₃SiCH₂CH₂C(H)(X)C₆H₅,

(CH₃O)₂(CH₃)SiCH₂CH₂C(H)(X)C₆H₅,

(CH₃O)₃Si(CH₂)₂CH)(X) - CO₂R,

(CH₃O)₂(CH₃)Si(CH₂)₂C(H)(X) - CO₂R,

(CH₃O)₃Si(CH₂)₃C (H) (X) - CO₂R,

(CH₃O)₂(CH₃)Si(CH₂)₃C(H)(X) - CO₂R,

(CH₃O)₃Si (CH₂)₄C (H) (X) - CO₂R,

(CH₃O)₂(CH₃)Si(CH₂)₄C(H)(X) - CO₂R,

(CH₃O)₃Si(CH₂)₉C(H)(X) - CO₂R,

(CH₃O)₂(CH₃)Si(CH₂)₉C(H)(X) - CO₂R,

(CH₃O)₃Si(CH₂)₃C (H)(X) - C₆H₅,

(CH₃O)₂(CH₃)Si(CH₂)₃C(H)(X) - C₆H₅,

(CH₃O)₃Si(CH₂)₄C(H)(X) - C₆H₅,

(CH₃O)₂(CH₃)Si(CH₂)₄C(H)(X) - C₆H₅

(wherein X is chlorine, bromine, or iodine, and R is an alkyl, aryl, or aralkyl group having 1 to 20 carbon atoms).

Examples of the hydroxyl group-containing organic halide or halogenated sulfonyl compound include, but are not limited to, the following:

HO - (CH₂)ₙ - OC(O)C(H)(R)(X)

(wherein X is chlorine, bromine, or iodine, R is a hydrogen atom or an alkyl, aryl, or aralkyl group having 1 to 20 carbon atoms, and n is an integer of 1 to 20).

Examples of the amino group-containing organic halide or halogenated sulfonyl compound include, but are not limited to, the following:

H₂N - (CH₂)ₙ-OC(O)C(H)(R)(X)

(wherein X is chlorine, bromine, or iodine, R is a hydrogen atom or an alkyl, aryl, or aralkyl group having 1 to 20 carbon atoms, and n is an integer of 1 to 20).

Examples of the epoxy group-containing organic halide or halogenated sulfonyl compound include, but are not limited to, the following: 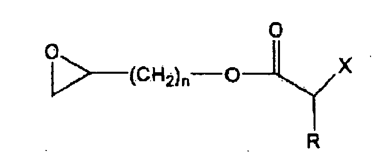 (wherein X is chlorine, bromine, or iodine, R is a hydrogen atom or an alkyl, aryl, or aralkyl group having 1 to 20 carbon atoms, and n is an integer of 1 to 20).

In order to obtain a polymer having at least two propagating terminal structures in the polymer per molecule, an organic halide or halogenated sulfonyl compound having at least two initiation points is preferably used as the initiator. Examples of such an initiator include the following:

o,m,p-X-CH₂-C₆H₄-CH₂-X

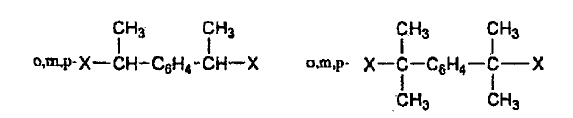

(wherein C₆H₄) is a phenylene group, and X is chlorine, bromine, or iodine); 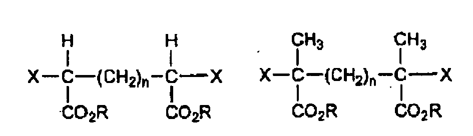 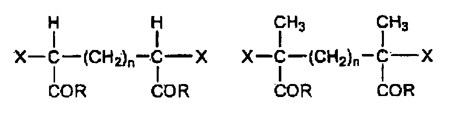 (wherein R is an alkyl, aryl, or aralkyl group having 1 to 20 carbon atoms, n is an integer of 0 to 20, and X is chlorine, bromine, or iodine); 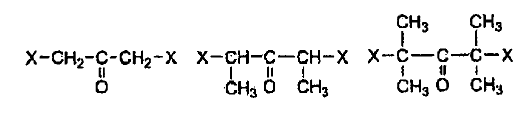 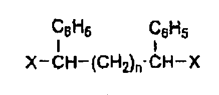 (wherein X is chlorine, bromine, or iodine, and n is an integer of 0 to 20); 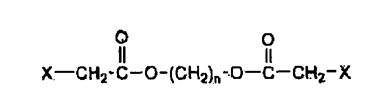 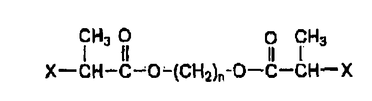 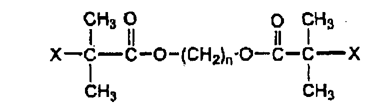 (wherein n is an integer of 1 to 20, and X is chlorine, bromine, or iodine); and

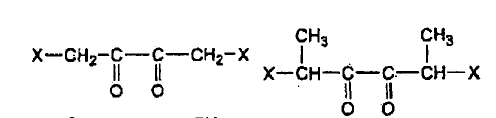

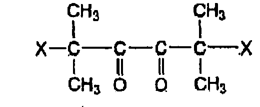

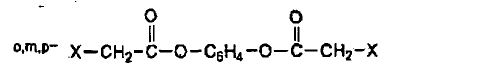

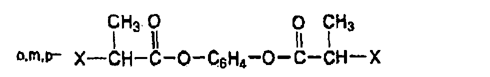

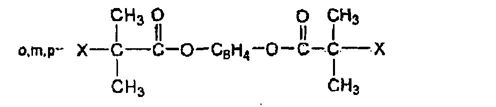

o,m,p- X-SO₂-C₆H₄-SO₂-X

(wherein X is chlorine, bromine, or iodine).

The monomer used in this polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A complex of zero-valent copper, monovalent copper, divalent ruthenium, divalent iron, or divalent nickel is more preferred. Among these complexes, a copper complex is preferred. Specific examples of a monovalent copper compound include cuprous chloride, cuprous bromide, cuprous iodide, cuprous cyanide, cuprous oxide, and cuprous perchlorate. When a copper compound is used, a ligand such as 2,2'-bipyridyl or its derivative, 1,10-phenanthroline or its derivative, or a polyamine, e.g., tetramethylethylenediamine, pentamethyldiethylenetriamine, or hexamethyl tris(2-aminoethyl)amine, can be added for increasing catalyst activity. As a ligand, nitrogen-containing compounds are preferred, chelate nitrogen-containing compounds are more preferred, and N,N,N',N",N"-pentamethyldiethylenetriamine is further preferred. Also, a tristriphenylphosphine complex of divalent ruthenium chloride (RuCl₂(PPh₃)₃) is suitable as the catalyst. When a ruthenium compound is used as the catalyst, an aluminum alkoxide is added as an activator. Furthermore, a bistriphenylphosphine complex of divalent iron (FeCl₂(PPh₃)₂), a bistriphenylphosphine complex of divalent nickel (NiCl₂(PPh₃)₂), or a bistributylphosphine complex of divalent nickel (NiBr₂(PBu₃)₂) is also preferred as the catalyst.

The polymerization can be performed without a solvent or in any of various solvents. Examples of the solvent include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone, and methyl isobutyl ketone; alcohol solvents such as methanol, ethanol, propanol, isopropanol, n-butyl alcohol, and tert-butyl alcohol; nitrile solvents such as acetonitrile, propionitrile, and benzonitrile; ester solvents such as ethyl acetate and butyl acetate; and carbonate solvents such as ethylene carbonate and propylene carbonate. These solvents can be used alone or as a mixture of two or more.

The polymerization can be performed in the range of 0°C to 200°C, and preferably 50°C to 150°C, though this is not critical.

The atom transfer radical polymerization of the present invention includes so called reverse atom transfer radical polymerization. The reverse atom transfer radical polymerization is a process including reacting an ordinary atom transfer radical polymerization catalyst in its high oxidation state resulting from radical generation, for example Cu(II') when Cu(I) is used as the catalyst, with an ordinary radical initiator such as a peroxide, to thereby bring about an equilibrium state like in atom transfer radical polymerization (see Macromolecules, 1999, 32, 2872).

### <Crosslinkable Functional Groups>

### (Number of Crosslinkable Functional Groups)

The vinyl-based polymer (I) has more than one crosslinkable functional groups on average and has at least one crosslinkable functional group at the molecular terminus thereof. From the viewpoint of the curability of the composition and the physical properties of the cured product, the number of crosslinkable functional groups per molecule is preferably 1.1 to 4.0, more preferably 1.2 to 3.5, on average.

The vinyl-based polymer (II) has 1 or less crosslinkable functional group on average. The average number of crosslinkable functional groups possessed by one molecule of the vinyl-based polymer (II) is preferably 0.5 or more, more preferably 0.6 or more, still more preferably 0.7 or more, in respect of reactivity.

The average number of crosslinkable functional groups per molecule is a value determined by dividing the density of crosslinkable functional groups per unit weight determined by ¹H-NMR measurement, with the number of molecules per unit weight determined from the molecular weight by GPC measurement, the copolymerization ratio and the molecular weight of each monomer copolymerized.

### (Positions of Crosslinkable Functional Groups)

In cases where the cured products resulting from curing of the curable composition of the present invention are especially required to have rubber-like properties, it is preferred that at least one of crosslinkable functional groups be positioned at the terminus of the molecular chain so that the molecular weight between crosslinking sites, which has a great influence on the rubber elasticity, can be increased. More preferably, all crosslinkable functional groups are located at the molecular chain termini.

Processes of producing vinyl-based polymers having at least one crosslinkable functional group such as mentioned above at the molecular terminus thereof are disclosed in JP-B 3-14068, JP-B 4-55444 and JP-A 6-211922, among others. However, these processes are free radical polymerization processes in which the above-mentioned "chain transfer agent process" is used, and therefore, the polymers obtained generally have problems, namely they show a molecular weight distribution represented by Mw/Mn as broad as not less than 2 as well as a high viscosity, although they have crosslinkable functional groups, in relatively high proportions, at the molecular chain termini. Therefore, for obtaining vinyl-based polymers showing a narrow molecular weight distribution and a low viscosity and having crosslinkable functional groups, in high proportions, at the molecular chain termini, the above-described "living radical polymerization process" is preferably used.

In the curable composition of the present invention, the vinyl-based polymer (I) is used in combination with the vinyl-based polymer (II), where the amount of the vinyl-based polymer (II) based on 100 parts by weight of the vinyl-based polymers (I) and (II) is 50 to 95 parts by weight, more preferably 60 to 95 parts by weight, still more preferably 70 to 95 parts by weight. The temperature range in which a cured product of only the vinyl-based polymer (I) shows a loss tangent (tan δ) in dynamic viscoelastic characteristics of ≥ 0.7 in which the cured product is considered to be excellent in vibrational absorption is in the vicinity of Tg, while the curable composition for damping materials according to the present invention can exhibit a loss tangent (tan δ) in dynamic viscoelastic characteristics of ≥ 0.7 in a broader temperature range, and can be endowed with functions as a damping material and a shock absorber in a wide temperature range.

When the amount of the vinyl-based polymer (II) based on 100 parts by weight of the vinyl-based polymers (I) and (II) is 60 to 95 parts by weight, the upper limit of the temperature range in which tan δ ≥ 0.7 is shown can be 100°C or more.

Examples of the crosslinkable functional groups of the vinyl-based polymers (I) and (II) include, but are not limited to, a crosslinkable silyl group, an alkenyl group, a hydroxyl group, an amino group, a group having a polymerizable carbon-carbon double bond, and an epoxy group.

Hereinafter, these functional groups are described in detail.

### [Crosslinkable Silyl Group]

The crosslinkable silyl groups in the present invention include, but are not limited to, the groups represented by the general formula (5):

- [Si(R⁹)_{2-b}(Y)_{b}O]ₘ-Si(R¹⁰)₃₋ₐ(Y)ₐ (5)

(wherein R⁹ and R¹⁰ each represent an alkyl group having 1 to 20 carbon atoms, an aryl group having 6 to 20 carbon atoms, or an aralkyl group having 7 to 20 carbon atoms, or a triorganosiloxy group represented by (R')₃SiO- (the three R's are each a monovalent hydrocarbon group having 1 to 20 carbon atoms and may be the same or different); when two or more groups R⁹ or R¹⁰ are present, they may be the same or different; Y represents a hydroxyl group or a hydrolysable group, and when two or more groups Y are present, they may be the same or different; a represents 0, 1, 2, or 3; b represents 0, 1, or 2; m represents an integer of 0 to 19; and a + mb ≥ 1 is satisfied).

Examples of the hydrolyzable group in the formula above include generally used groups such as a hydrogen atom, an alkoxy group, an acyloxy group, a ketoxymate group, an amino group, an amide group, an aminoxy group, a mercapto group, and an alkenyloxy group. Among these groups, an alkoxy group, an amide group and an aminoxy group are preferred. In view of mild hydrolyzability and ease of handling, an alkoxy group is particularly preferred. An alkoxy group having less carbon atoms is higher in reactivity, and its reactivity is decreased in the order of methoxy group, ethoxy group, propoxy group, ..., and a suitable alkoxy group can be selected depending the intended purpose and use.

One to three hydrolysable groups and hydroxyl groups can be bound to each silicon atom and it is preferred that (a + Σb) be in the range of 1 to 5. When there are two or more hydrolysable groups or hydroxyl groups in one crosslinkable silyl group, they may be the same or different. The number of silicon atoms forming the crosslinkable silyl group is not less than 1, and in the case of silicon atoms connected by siloxane bonding or the like, it is preferably not more than 20. Because of ready availability, crosslinkable silyl groups represented by the general formula (6) are particularly preferable:

- Si(R¹⁰)₃₋ₐ(Y)ₐ (6)

(wherein R¹⁰ and Y are as defined above; and a is an integer of 1 to 3).

Considering the curability, the integer a is preferably 2 or more, though this is not critical.

In many cases, a polymer which has a hydrolysable silicon group including two hydrolysable groups bound to one silicon atom is used as the vinyl-based polymer containing a crosslinkable silyl group. In the case where the polymer is used for an adhesive or at a low temperature, particularly where a very high curing rate is required, the curing rate of the polymer is insufficient. On the contrary, in the case where flexibility is required after curing, the crosslinking density has to be lowered and accordingly due to the insufficient crosslinking density, the stickiness (surface tack) is sometimes increased. In such a case, one in which a is 3 (e.g. a trimethoxy functional group) is preferable.

One in which a is 3 (e.g. a trimethoxy functional group) is faster in curing than one in which a is 2 (e.g. a dimethoxy functional group), but as for the storage stability and/or mechanical properties (e.g. elongation), one in which a is 2 is sometimes superior. For attaining a balance between curability and physical properties, one in which a is 2 (e.g. a dimethoxy functional group) and one in which a is 3 (e.g. a trimethoxy functional group) may be used in combination.

For example, in the case where each of Ys is the same, the reactivity of the group represented by Y increases as the number represented by a increases, and therefore the curability and the mechanical properties of the cured product can be controlled by properly selecting Y and a, and Y and a may be selected in accordance with the intended purpose and use.

### [Alkenyl Group]

The alkenyl group in the present invention is not limited, but is preferably one represented by the general formula (7):

H₂C = C(R¹¹) - (7)

(wherein R¹¹ represents a hydrogen atom or a hydrocarbon group having 1 to 20 carbon atoms).

In the general formula (7), R¹¹ is a hydrogen atom or a hydrocarbon group having 1 to 20 carbon atoms and is specifically exemplified by the following groups:

- (CH₂)ₙ - CH₃,

- CH(CH₃) - (CH₂)ₙ - CH₃,

- CH(CH₂CH₃) - (CH₂)ₙ-CH₃,

- CH(CH₂CH₃)₂,

- C(CH₃)₂ - (CH₂)ₙ - CH₃,

- C(CH₃)(CH₂CH₃) - (CH₂)ₙ - CH₃,

-C₆H₅,

- C₆H₅(CH₃),

- C₆H₅(CH₃)₂,

- (CH₂)ₙ - C₆H₅,

- (CH₂)ₙ - C₆H₅(CH₃),

- (CH₂)ₙ - C₆H₅(CH₃)₂

(wherein n represents an integer of 0 or more, and the total number of carbon atoms in each group is 20 or less).

Among these groups, a hydrogen atom is preferred.

Preferably, the alkenyl group in the vinyl-based polymer (I) and/or the vinyl-based polymer (II) is not activated by a carbonyl group, alkenyl group or aromatic ring conjugated with the carbon-carbon double bond in the alkenyl group, although this is not a necessary condition.

The mode of bonding between the alkenyl group and the main chain of the polymer is not particularly limited, but both are preferably bound to each other via a bond such as a carbon-carbon bond, an ether bond, an ester bond, a carbonate bond, an amide bond or an urethane bond.

### [Amino Group]

The amino group in the present invention includes, but is not limited to:

- NR¹²₂

(wherein R¹² is hydrogen or a monovalent organic group having 1 to 20 carbon atoms, the two R¹² may be the same or different and may be bound to each other at other termini to form a cyclic structure).

However, there is no problem even if the amino group in the present invention is an ammonium salt represented by the following formula:

- (NR¹²₃)⁺X⁻

(wherein R¹² is the same as defined above, and X⁻ is a counter anion).

In the formulae above, R¹² is hydrogen or a monovalent organic group having 1 to 20 carbon atoms, and examples thereof include hydrogen, an alkyl group having 1 to 20 carbon atoms, an aryl group having 6 to 20 carbon atoms, an aralkyl group having 7 to 20 carbon atoms, and the like. The two R¹² may be the same or different and may be bound to each other at other termini to form a cyclic structure.

### [Group Having a Polymerizable Carbon-carbon Double Bond]

The group having a polymerizable carbon-carbon double bond is preferably a group represented by the general formula (8):

- OC(O)C(R¹³) = CH₂ (8)

(wherein R¹³ is hydrogen or a monovalent organic group having 1 to 20 carbon atoms), more preferably a group wherein R¹³ is hydrogen or a methyl group.

In the general formula (8), specific examples of R¹³ are not particularly limited, and include for example -H, -CH₃, -CH₂CH₃, -(CH₂)ₙCH₃ (n represents an integer of 2 to 19), -C₆H₅, CH₂OH, and -CN, among which -H and -CH₃ are preferred.

### [Epoxy Group]

Preferable examples of the epoxy group include a glycidyl group, a glycidyl ether group, a 3,4-epoxycyclohexyl group and an oxetane group, among which a glycidyl group, a glycidyl ether group and a 3,4-epoxycyclohexyl group are more preferable from the viewpoint of reactivity.

### (Crosslinkable Functional Group Introduction Method)

In the following, several methods of introducing a crosslinkable functional group into the vinyl-based polymer are described without any purpose of restriction.

First, a method of introducing the crosslinkable silyl group, alkenyl group, and hydroxyl group by conversion of the terminal functional groups will be described.

Since these functional groups may be precursors for other groups, it is described in the backward order from the crosslinkable silyl group.

Methods of synthesizing vinyl-based polymers having at least one crosslinkable silyl group include:
(A) a method which includes subjecting a crosslinkable silyl group-containing hydrosilane compound to addition to a vinyl-based polymer having at least one alkenyl group in the presence of a hydrosilylation catalyst,
(B) a method which includes reacting a vinyl-based polymer having at least one hydroxyl group with a compound having, in each molecule, a crosslinkable silyl group and a group capable of reacting with the hydroxyl group such as isocyanate group,
(C) a method which includes subjecting a compound having, in each molecule, a polymerizable alkenyl group and a crosslinkable silyl group to reaction in synthesizing a vinyl-based polymer by radical polymerization,
(D) a method which uses a chain transfer agent having a crosslinkable silyl group in synthesizing a vinyl-based polymer by radical polymerization, and
(E) a method which includes reacting a vinyl-based polymer having at least one highly reactive carbon-halogen bond with a compound having, in each molecule, a crosslinkable silyl group and a stable carbanion.

The vinyl-based polymer having at least one alkenyl group, which is to be used in the above method (A), can be obtained by various methods. Several methods of synthesis are mentioned in the following without any purpose of restriction.
(A-a) Method including subjecting, to reaction, a compound having, in each molecule, a polymerizable alkenyl group together with a low polymerizable alkenyl group, such as one represented by the general formula (9) shown below as a second monomer in synthesizing a vinyl-based polymer by radical polymerization:

   H₂C = C(R¹⁴) -R¹⁵ - R¹⁶ - C(R¹⁷) = CH₂ (9)

   (wherein R¹⁴ represents hydrogen or a methyl group, R¹⁵ represents -C(O)O- or an o-, m- or p-phenylene group, R¹⁶ represents a direct bond or a divalent organic group having 1 to 20 carbon atoms, which may contain one or more ether bonds, and R¹⁷ represents hydrogen, an alkyl group having 1 to 20 carbon atoms, an aryl group having 6 to 20 carbon atoms or an aralkyl group having 7 to 20 carbon atoms).
   The time when the compound having, in each molecule, a polymerizable alkenyl group together with a low polymerizable alkenyl group is subjected to reaction is not particularly limited, but particularly in living radical polymerization and when rubber-like properties are expected, the compound is preferably subjected to reaction as a second monomer at the final stage of the polymerization reaction or after completion of the reaction of the employed monomers.
(A-b) Method including subjecting, to reaction, a compound having at least two low polymerizable alkenyl groups, for example 1,5-hexadiene, 1,7-octadiene or 1,9-decadiene, at the final stage of the polymerization or after completion of the reaction of the monomers employed in vinyl-based polymer synthesis by living radical polymerization.
(A-c) Method including reacting a vinyl-based polymer having at least one highly reactive carbon-halogen bond with one of various alkenyl group-containing organometallic compounds, for example an organotin such as allyltributyltin or allyltrioctyltin, for substitution of the halogen.
(A-d) Method including reacting a vinyl-based polymer having at least one highly reactive carbon-halogen bond with a stabilized, alkenyl group-containing carbanion, such as one represented by the general formula (10), for substitution of the halogen:

   M⁺C⁻(R¹⁸)(R¹⁹) - R²⁰ - C(R¹⁷) = CH₂ (10)

   (wherein R¹⁷ is as defined above, R¹⁸ and R¹⁹ each is an electron-withdrawing group capable of stabilizing the carbanion C⁻ or one of them is such an electron-withdrawing group and the other represents hydrogen, an alkyl group having 1 to 10 carbon atoms or a phenyl group, R²⁰ represents a direct bond or a divalent organic group containing 1 to 10 carbon atoms, which may contain one or more ether bonds, and M⁺ represents an alkali metal ion or a quaternary ammonium ion).
   Particularly preferred as the electron-withdrawing group R¹⁸ and/or R¹⁹ are those which have a structure of -CO₂R, -C(O)R or -CN.
(A-e) Method including reacting a vinyl-based polymer having at least one highly reactive carbon-halogen bond with a simple substance metal such as zinc, or an organometallic compound and then reacting the thus-prepared enolate anion with an alkenyl group-containing, electrophilic compound such as an alkenyl group-containing compound having a leaving group such as halogen or an acetyl group, an alkenyl group-containing carbonyl compound, an alkenyl group-containing isocyanate compound or an alkenyl group-containing acid halide.
(A-f) Method including reacting a vinyl-based polymer having at least one highly reactive carbon-halogen bond with an alkenyl group-containing oxyanion or carboxylate anion, such as one represented by the general formula (11) or (12), for substitution of the halogen:

   H₂C = C(R¹⁷)- R²¹ - O⁻M⁺ (11)

   (wherein R¹⁷ and M⁺ are as defined above and R²¹ is a divalent organic group having 1 to 20 carbon atoms, which may contain one or more ether bonds);

   H₂C = C(R¹⁷) - R²² - C(O)O⁻M⁺ (12)

   (wherein R¹⁷ and M⁺ are as defined above and R²² is a direct bond or a divalent organic group having 1 to 20 carbon atoms, which may contain one or more ether bonds).

   The method of synthesizing the above-mentioned vinyl-based polymer having at least one highly reactive carbon-halogen bond includes, but is not limited to, atom transfer radical polymerization processes using an organic halide or the like as an initiator and a transition metal complex as a catalyst, as mentioned above.
   It is also possible to obtain the vinyl-based polymer having at least one alkenyl group from a vinyl-based polymer having at least one hydroxyl group. As utilizable methods, there may be mentioned, for example, the following, without any purpose of restriction.
(A-g) Method including reacting the hydroxyl group of a vinyl-based polymer having at least one hydroxyl group with a base such as sodium methoxide, followed by reaction with an alkenyl group-containing halide such as allyl chloride.
(A-h) Method including reacting such hydroxyl group with an alkenyl group-containing isocyanate compound such as allyl isocyanate.
(A-i) Method including reacting such hydroxyl group with an alkenyl group-containing acid halide such as (meth)acrylic acid chloride, in the presence of a base such as pyridine.
(A-j) Method including reacting such hydroxyl group with an alkenyl group-containing carboxylic acid such as acrylic acid, in the presence of an acid catalyst.

In the present invention, when no halogen is directly involved in the alkenyl group introduction such as in the method (A-a) or (A-b), the vinyl-based polymer is preferably synthesized by living radical polymerization. From the viewpoint of ready controllability, the method (A-b) is more preferred.

In cases where alkenyl group introduction is effected by conversion of the halogen of a vinyl-based polymer having at least one highly reactive carbon-halogen bond, use is preferably made of a vinyl-based polymer having at least one highly reactive terminal carbon-halogen bond as obtained by subjecting a vinyl-based monomer to radical polymerization (atom transfer radical polymerization) using, as an initiator, an organic halide or halogenated sulfonyl compound having at least one highly reactive carbon-halogen bond, and as a catalyst, a transition metal complex. In view of easier controllability, the method (A-f) is more preferred.

The crosslinkable silyl group-containing hydrosilane compound is not particularly limited, but typical examples include compounds represented by the general formula (13):

H - [Si(R⁹)_{2-b}(Y)_{b}O]ₘ - Si(R¹⁰)₃₋ₐ(Y)ₐ (13)

(wherein R⁹ and R¹⁰ each represent an alkyl group having 1 to 20 carbon atoms, an aryl group having 6 to 20 carbon atoms, an aralkyl group having 7 to 20 carbon atoms or a triorganosiloxy group represented by (R')₃SiO- (in which R' is a monovalent hydrocarbon group having 1 to 20 carbon atoms and the three R' groups may be the same or different), and when there are two or more R⁹ or R¹⁰ groups, they may be the same or different; Y represents a hydroxyl group or a hydrolysable group, and when there are two or more Y groups, they may be the same or different; a represents 0, 1, 2 or 3, b represents 0, 1 or 2 and m is an integer of 0 to 19, provided that the relation a + mb ≥ 1 should be satisfied).

Particularly preferred among those hydrosilane compounds in view of ready availability are crosslinkable group-containing compounds represented by the general formula (14):

H - Si(R¹⁰)₃₋ₐ(Y)ₐ (14)

(wherein R¹⁰ and Y are as defined above, and a is an integer of 1 to 3).

In subjecting the above crosslinkable silyl group-containing hydrosilane compound to addition to the alkenyl group, a transition metal catalyst is generally used. The transition metal catalyst includes, for example, simple substance platinum, solid platinum dispersed on a support such as alumina, silica or carbon black, chloroplatinic acid, chloroplatinic acid complexes with alcohols, aldehydes, ketones or the like, platinum-olefin complexes, and platinum(0)-divinyltetramethyldisiloxane complex. Catalysts other than platinum compounds include, for example, RhCl(PPh₃)₃, RhCl₃, RuCl₃, IrCl₃, FeCl₃, AlCl₃, PdCl₂·H₂O, NiCl₂ and TiCl₄.

The method of producing the vinyl-based polymer having at least one hydroxyl group, which is used in the method (B) and the methods (A-g) to (A-j) includes, but is not limited to, the following:
(B-a) Method including subjecting to reaction, as a second monomer, a compound having both a polymerizable alkenyl group and a hydroxyl group in each molecule, for example one represented by the general formula (15) given below, in synthesizing the vinyl-based polymer by radical polymerization:

   H₂C = C(R¹⁴) - R¹⁵ - R¹⁶ - OH (15)

   (wherein R¹⁴, R¹⁵ and R¹⁶ are as defined above).
   The time for subjecting to reaction the compound having both a polymerizable alkenyl group and a hydroxyl group in each molecule is not limited, but particularly in living radical polymerization and when rubber-like properties are demanded, the compound is preferably subjected to reaction as a second monomer at the final stage of the polymerization reaction or after completion of the reaction of the employed monomer.
(B-b) Method including subjecting an alkenyl alcohol such as 10-undecenol, 5-hexenol or allyl alcohol, to reaction at the final stage of polymerization reaction or after completion of the reaction of the employed monomer in synthesizing the vinyl-based polymer by living radical polymerization.
(B-c) Method including radical-polymerizing a vinyl-based monomer using a hydroxyl group-containing chain transfer agent such as a hydroxyl group-containing polysulfide, in large amounts, as described in JP-A 5-262808, for instance.
(B-d) Method including subjecting a vinyl-based monomer to radical polymerization using hydrogen peroxide or a hydroxyl group-containing initiator, as described in JP-A 6-23 9912 and JP-A 8-283310, for instance.
(B-e) Method including subjecting a vinyl-based monomer to radical polymerization using an alcohol in excess, as described in JP-A 6-116312, for instance.
(B-f) Method including introducing a terminal hydroxyl group by hydrolyzing the halogen of a vinyl-based polymer having at least one highly reactive carbon-halogen bond or reacting such halogen with a hydroxyl group-containing compound, according to the method described in JP-A 4-132706, for instance.
(B-g) Method including reacting a vinyl-based polymer having at least one highly reactive carbon-halogen bond with a hydroxyl group-containing stabilized carbanion such as one represented by the general formula (16) for substitution of the halogen:

   M⁺C⁻(R¹⁸)(R¹⁹) - R²⁰ - OH (16)

   (wherein R¹⁸, R¹⁹ and R²⁰ are as defined above).
   Particularly preferred as the electron-withdrawing groups R¹⁸ and R¹⁹ are those having a structure of -CO₂R, -C(O)R or -CN.
(B-h) Method including reacting a vinyl-based polymer having at least one highly reactive carbon-halogen bond with a simple substance metal such as zinc, or an organometallic compound and then reacting the resultant enolate anion with an aldehyde or ketone.
(B-i) Method including reacting a vinyl-based polymer having at least one highly reactive carbon-halogen bond with a hydroxyl group-containing oxyanion or carboxylate anion such as one represented by the general formula (17) or (18) given below, for substitution of the halogen:

   HO -R²¹ - O⁻M⁺ (17)

   (wherein R²¹ and M⁺ are as defined above);

   HO - R²² - C(O)O⁻M⁺ (18)

   (wherein R²² and M⁺ are as defined above).
(B-j) Method including subjecting, as a second monomer, a compound having a low polymerizable alkenyl group and a hydroxyl group in each molecule to reaction at the final stage of the polymerization reaction or after completion of the reaction of the employed monomer in synthesizing the vinyl-based polymer by living radical polymerization.

Such compound includes, but is not limited to, compounds represented by the general formula (19):

H₂C = C(R¹⁴) - R²¹ - OH (19)

(wherein R¹⁴ and R²¹ are as defined above).

The compound represented by the above general formula (19) is not particularly limited, but in view of ready availability, alkenyl alcohols such as 10-undecenol, 5-hexenol and allyl alcohol are preferred.

In the present invention, when no halogen is directly involved in hydroxyl group introduction such as in the methods (B-a) to (B-e) and (B-j), the vinyl-based polymer is preferably synthesized by living radical polymerization. The method (B-b) is more preferred from the viewpoint of ease of control.

In cases where hydroxyl group introduction is effected by conversion of the halogen of a vinyl-based polymer having at least one highly reactive carbon-halogen bond, use is preferably made of a vinyl-based polymer having at least one highly reactive terminal carbon-halogen bond as obtained by subjecting a vinyl-based monomer to radical polymerization (atom transfer radical polymerization) using an organic halide or halogenated sulfonyl compound as an initiator and, as a catalyst, a transition metal complex. From the viewpoint of ease of control, the method (B-i) is more preferred.

The compound having, in each molecule, a crosslinkable silyl group and a group capable of reacting with a hydroxyl group (e.g. isocyanate group) includes, for example, γ-isocyanatopropyltrimethoxysilane, γ-isocyanatopropylmethyldimethoxysialne, γ-isocyanatopropyltriethoxysilane and the like. If necessary, any of urethane formation reaction catalysts generally known in the art can be used.

The compound having both a polymerizable alkenyl group and a crosslinkable silyl group in each molecule, which is used in the method (C), includes the compounds represented by the following general formula (20):

H₂C = C(R¹⁴) - R¹⁵ -R²³ - [Si(R⁹)_{2-b}(Y)_{b}O]ₘ -Si(R¹⁰)₃₋ₐ(Y)ₐ (20)

(wherein R⁹, R¹⁰, R¹⁴, R¹⁵, Y, a, b and m are as defined above and R²³ is a direct bond or a divalent organic group having 1 to 20 carbon atoms, which may contain one or more ether bonds) such as trimethoxysilylpropyl (meth)acrylate, and methyldimethoxysilylpropyl (meth)acrylate.

The time for subjecting the compound having both a polymerizable alkenyl group and a crosslinkable silyl group in each molecule is not limited, but particularly in living radical polymerization and when rubber-like properties are demanded, the compound is preferably subjected to reaction as a second monomer at the final stage of the polymerization reaction or after completion of the reaction of the employed monomer.

The chain transfer agent having a crosslinkable silyl group, which is used in the chain transfer agent process (D), includes mercaptan having a crosslinkable silyl group, hydrosilane having a crosslinkable silyl group, and the like, described in JP-B 3-14068 and JP-B 4-55444, for instance.

The method of synthesizing the vinyl-based polymer having at least one highly reactive carbon-halogen bond, which is used in the method (E), includes, but is not limited to, the atom transfer radical polymerization process which uses an organic halide or the like as an initiator and a transition metal complex as a catalyst as described above. The compound having both a crosslinkable silyl group and a stabilized carbanion in each molecule includes compounds represented by the general formula (21):

M⁺C⁻(R¹⁸)(R¹⁹) - R²⁴-C(H)(R²⁵)-CH₂ - [Si(R⁹)_{2-b}(Y)_{b}O]ₘ - Si(R¹⁰)₃₋ₐ(Y)ₐ (21)

(wherein R⁹, R¹⁰, R¹⁸, R¹⁹, Y, a, b and m are as defined above, R²⁴ is a direct bond or a divalent organic group having 1 to 10 carbon atoms, which may contain one or more ether bonds, and R²⁵ represents a hydrogen atom, an alkyl group having 1 to 10 carbon atoms, an aryl group having 6 to 10 carbon atoms or an aralkyl group having 7 to 10 carbon atoms).

Particularly preferred as the electron-withdrawing groups R¹⁸ and R¹⁹ are those having a structure of -CO₂R, -C(O)R or -CN.

Hereinafter, the method of introducing an epoxy group is described.

The method of producing the vinyl-based polymer having an epoxy group at the terminus thereof used in the present invention is not limited, but includes the following steps:
(1) a step of subjecting vinyl-based monomers to living radical polymerization to produce a Br-terminated vinyl-based polymer, and
(2) a step of converting the Br-terminus of the polymer into a substituent having a reactive functional group.

After the reaction, the reactive functional group of the polymer is substituted with a halogen-containing epoxy compound, whereby an epoxy group can be introduced into the terminus of the polymer.

The method of converting the terminus of the polymer includes, for example, a nucleophilic substitution reaction using a nucleophilic agent having a reactive functional group. Examples of such nucleophilic agent includes, for example, alcohol compounds, phenol compounds, carboxylic acid compounds, amine compounds and amide compounds each having a reactive functional group, and alkali metal salts or ammonium salts thereof. Carbanions having a reactive functional group and stabilized by an electron-attracting substituent can also be preferably used.

The amine having a reactive functional group includes, for example, an amine having a hydroxyl group, such as ethanolamine. Alkali metal salts and ammonium salts of the above-mentioned various nucleophilic agents may also be used as nucleophilic agents. The alkali metal salts and ammonium salts are obtained by reacting the above nucleophilic agents with a basic compound.

A vinyl-based polymer having a reactive functional group at both termini can also be produced by polymerizing vinyl-based monomers using an initiator having a reactive functional group, followed by coupling of a polymer terminus with one another. The method of coupling includes, for example, a method which includes coupling terminal halogens with each other using a compound having a total of two or more functional groups which may be the same or different, each functional group being capable of substituting the terminal halogen. The vinyl-based polymer having a reactive functional group at both termini obtained by the coupling method is reacted with a halogen-containing epoxy compound to replace the reactive functional group by the compound, whereby a vinyl-based polymer having an epoxy group introduced into each of both termini can be produced.

A vinyl-based polymer having a reactive functional group at a terminus of the main chain thereof can be produced by radical polymerization of vinyl-based monomers by using a chain transfer agent having a reactive functional group.

There is another method which includes reacting allyl alcohol at the final stage of atom transfer radical polymerization and then forming an epoxy ring with a hydroxyl group and a halogen group.

Hereinafter, the method of introducing an amino group is described.

The method of producing the vinyl-based polymer having at least one amino group in the terminus of a main chain includes the following steps:
(1) A step of producing a vinyl-based polymer having at least one halogen group in the terminus of a main chain, and
(2) A step of converting the terminal halogen into a substituent having an amino group by using an amino group-containing compound.

The substituent having an amino group includes, but is not limited to, groups represented by the general formula (22):

- O - R²⁶ - NR¹²₂ (22)

(wherein R²⁶ represents a divalent organic group having 1 to 20 carbon atoms, which may contain one or more ether bonds or ester bonds, R¹² represents hydrogen or a monovalent organic group having 1 to 20 carbon atoms, and the two R¹² may be the same or different and may be bound to each other at other termini to form a cyclic structure).

In the general formula (22), R²⁶ is a divalent organic group having 1 to 20 carbon atoms, which may contain one or more ether bonds or ester bonds, and examples thereof include an alkylene group having 1 to 20 carbon atoms, an arylene group having 6 to 20 carbon atoms, an aralkylene group having 7 to 20 carbon atoms. Preferable among those shown above are the following:

-C₆H₄ - R²⁷-

(wherein C₆H₄ is a phenylene group, and R²⁷ represents a direct bond or a divalent organic group having 1 to 14 carbon atoms, which may contain one or more ether bonds or ester bonds) or

- C(O) -R²⁸-

-(wherein R²⁸ represents a direct bond or a divalent organic group having 1 to 19 carbon atoms, which may contain one or more ether bonds or ester bonds).

By substituting the terminal halogen of the vinyl-based polymer, an amino group can be introduced into the terminus of the polymer. The substitution method is not particularly limited, but a nucleophilic substitution reaction with an amino group-containing compound as a nucleophilic agent is preferable from the viewpoint of easy control of the reaction. Such nucleophilic agent includes a compound having both a hydroxyl group and an amino group, represented by the general formula (23):

HO - R²⁶ - NR¹²₂ (23)

(wherein R²⁶ represents a divalent organic group having 1 to 20 carbon atoms, which may contain one or more ether bonds or ester bonds, R¹² represents hydrogen or a monovalent organic group having 1 to 20 carbon atoms, and the two R¹² may be the same or different and may be bound to each other at other termini to form a cyclic structure.)

In the general formula (23), R²⁶ is a divalent organic group having 1 to 20 carbon atoms, which may contain one or more ether bonds or ester bonds, and examples thereof include an alkylene group having 1 to 20 carbon atoms, an arylene group having 6 to 20 carbon atoms, an aralkylene group having 7 to 20 carbon atoms. Preferable among these compounds having both a hydroxyl group and an amino group are the following:
aminophenols wherein R²⁶ is represented by:

   -C₆H₁ - R²⁷-

   (wherein C₆H₄ is a phenylene group, and R²⁷ represents a direct bond or a divalent organic group having 1 to 14 carbon atoms, which may contain one or more ether bonds or ester bonds) or
amino acids wherein R²⁶ is represented by:

   - C(O) - R²⁸ -

   (wherein R²⁸ represents a direct bond or a divalent organic group having 1 to 19 carbon atoms, which may contain one or more ether bonds or ester bonds).

Specific compounds include, for example, ethanolamine; o, m, p-aminophenol; o, m, p-NH₂-C₆H₄-CO₂H; glycine, alanine, aminobutanoic acid, and the like.

A compound having both an amino group and an oxy anion can also be used as a nucleophilic agent. Such compound includes, but is not limited to, compounds represented by the general formula (24):

M⁺O⁻- R²⁶ - NR¹²₂ (24)

(wherein R²⁶ represents a divalent organic group having 1 to 20 carbon atoms, which may contain one or more ether bonds or ester bonds, R¹² represents hydrogen or a monovalent organic group having 1 to 20 carbon atoms, the two R¹² may be the same or different and may be bound to each other at other termini to form a cyclic structure, and M⁺ represents an alkali metal ion or a quaternary ammonium ion).

In the general formula (24), M⁺ is a counter cation for oxyanion and represents an alkali metal ion and a quaternary ammonium ion. The alkali metal ion includes lithium ion, sodium ion and potassium ion, preferably sodium ion or potassium ion. The quaternary ammonium ion includes tetramethylammonium ion, tetraethylammonium ion, trimethylbenzylammonium ion, trimethyldodecylammonium ion, tetrabutylammonium ion, and dimethylpiperidinium ion.

Among the compounds having both an amino group and an oxy anion, salts of aminophenols represented by the general formula (25) below or salts of amino acids represented by the general formula (26) below are preferable from the viewpoint of easy control of the substitution reaction and easy availability.

M⁻O⁻ - C₆H₄ -R²⁷ - NR¹²₂ (25)

M⁺O⁻ - C(O) - R²⁸ - NR¹²₂ (26)

(wherein C₆H₄ is a phenylene group, R²⁷ represents a direct bond or a divalent organic group having 1 to 14 carbon atoms, which may contain one or more ether bonds or ester bonds, R²⁸ represents a direct bond or a divalent organic group having 1 to 19 carbon atoms, which may contain one or more ether bonds or ester bonds, R¹² represents hydrogen or a monovalent organic group having 1 to 20 carbon atoms, and the two R¹² may be the same or different and may be bound to each other at other termini to form a cyclic structure, and M⁺ is the same as defined above).

The compounds having an oxy anion represented by the general formulae (24) to (26) can be easily obtained by reacting a compound represented by the general formula (23) with a basic compound.

The basic compound may be any kind of basic compound. Examples thereof include sodium methoxide, potassium methoxide, lithium methoxide, sodium ethoxide, potassium ethoxide, lithium ethoxide, sodium tert-butoxide, potassium tert-butoxide, sodium carbonate, potassium carbonate, lithium carbonate, sodium hydrogen carbonate, sodium hydroxide, potassium hydroxide, sodium hydride, potassium hydride, methyllithium, ethyllithium, n-butyllithium, tert-butyllithium, lithium diisopropylamide, and lithium hexamethyldisilazide. The amount of the basic compound used is not particularly limited, but is preferably in an amount of 0.5 to 5 equivalents, preferably 0.8 to 1.2 equivalents, relative to the above precursor.

The solvent used in reacting the above precursor with the basic compound includes, for example, hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropanol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate; amide solvents such as dimethylformamide and dimethylacetamide; sulfoxide solvents such as dimethyl sulfoxide; and so on. These solvents may be used singly or as a mixture of two or more thereof.

The compound having an oxy anion wherein M⁺ is a quaternary ammonium ion is obtained by preparing a compound wherein M⁺ is an alkali metal ion and then reacting it with a quaternary ammonium halide. The quaternary ammonium halide includes tetramethylammonium halide, tetraethylammonium halide, trimethylbenzylammonium halide, trimethyldodecylammonium halide, tetrabutylammonium halide and the like.

As the solvent used in substitution reaction of a halogen at the terminus of the polymer, various solvents may be used. Examples of such solvents include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropanol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate; amide solvents such as dimethylformamide and dimethylacetamide; sulfoxide solvents such as dimethyl sulfoxide; and so on. These may be used singly or as a mixture of two or more thereof.

The reaction can be carried out at a temperature of 0 to 150°C, The amount of the amino group-containing compound used is not particularly limited, but is 1 to 5 equivalents, preferably 1 to 1.2 equivalents, relative to the terminal halogen of the polymer.

For accelerating the nucleophilic substitution reaction, a basic compound may be added to the reaction mixture. Such basic compound includes not only those mentioned above, but also alkylamines such as trimethylamine, triethylamine and tributylamine; polyamines such as tetramethylethylenediamine and pentamethyldiethylenetriamine; pyridine-based compounds such as pyridine and picoline, and the like.

When the amino group of the amino group-containing compound used in the nucleophilic substitution reaction exerts an influence on the nucleophilic substitution reaction, the amino group is preferably protected with a suitable substituent. Such substituent includes a benzyloxycarbonyl group, a tert-butoxycarbonyl group, a 9-fluorenylmethoxycarbonyl group and the like.

There is also a method wherein the halogen terminus of the vinyl-based polymer is replaced by an azide anion followed by reduction with LAH or the like.

The method of introducing a polymerizable carbon-carbon double bond into the vinyl-based polymer is not limited, but the following methods can be mentioned.
1) Method of replacing the halogen group of the vinyl-based polymer by a compound having a radical-polymerizable carbon-carbon double bond to produce the polymer having the polymerizable carbon-carbon double bond. A specific example is a method which includes reacting a vinyl-based polymer having a structure represented by the general formula (27) with a compound represented by the general formula (28);

   - CR²⁹R³⁰X (27)

   (wherein R²⁹ and R³⁰ each represent a group bound to an ethylenically unsaturated group of a vinyl-based monomer, and X represents chlorine, bromine or iodine)

   M⁺OC(O)C(R¹³) = CH₂ (28)

   (wherein R¹³ represents hydrogen or an organic group having 1 to 20 carbon atoms, and M⁺ represents an alkali metal ion or a quaternary ammonium ion).
2) Method of reacting a vinyl-based polymer having a hydroxyl group with a compound represented by the general formula (29):

   XC(O)C(R¹³) = CH₂ (29)

   (wherein R¹³ represents hydrogen or an organic group having 1 to 20 carbon atoms, and X represents chlorine, bromine, or a hydroxyl group).
3) Method of reacting a vinyl-based polymer having a hydroxyl group with a diisocyanate compound and then reacting the residual isocyanate group with a compound represented by the general formula (30):

   HO - R³¹ - OC(O)C(R¹³) = CH₂ (30)

   (wherein R¹³ represents hydrogen or an organic group having 1 to 20 carbon atoms, and R³¹ represents a divalent organic group having 2 to 20 carbon atoms).

Hereinafter, each of these methods is described in detail.

The method 1) above is described.
1) Method which includes reacting a vinyl-based polymer having the terminal structure represented by the general formula (27) with a compound represented by the general formula (28);

   - CR²⁹R³⁰X (27)

   (wherein R²⁹ and R³⁰ each represent a group bonded to an ethylenically unsaturated group of a vinyl-based monomer, and X represents chlorine, bromine, or iodine)

   W-OC(O)C(R¹³) = CH₂ (28)

   (wherein R¹³ represents hydrogen or an organic group having 1 to 20 carbon atoms, and M⁺ represents an alkali metal ion or quaternary ammonium ion).

The vinyl-based polymer having the terminal structure represented by the general formula (27) can be produced by a process of polymerizing a vinyl-based monomer using the organic halide or halogenated sulfonyl compound as the initiator and the transition metal complex as the catalyst, or a process of polymerizing a vinyl-based monomer using a halogen compound as the chain transfer agent. However, the former process is preferred.

The compound represented by the general formula (28) is not particularly limited. Specific examples of R¹³ include, for example, -H, -CH₃, -CH₂CH₃, -(CH₂)ₙCH₃ (n represents an integer of 2 to 19), -C₆H₅, -CH₂OH, and -CN. Among these groups, -H and -CH₃ are preferred. M⁺ is a counter cation of oxyanion, and the type of M⁺ includes an alkali metal ion, specifically a lithium ion, a sodium ion, a potassium ion and a quaternary ammonium ion. Examples of the quaternary ammonium ion include tetramethylammonium ion, tetraethylammonium ion, tetrabenzylammonium ion, trimethyldodecylammonium ion, tetrabutylammonium ion, and dimethylpiperidiniuum ion, and preferably sodium ion or potassium ion. The oxyanion in the general formula (28) is preferably used in an amount of 1 to 5 equivalents, more preferably 1.0 to 1.2 equivalents, relative to the halogen group represented by the general formula (27). The solvent used for carrying out the reaction is not particularly limited, but a polar solvent is preferred because the reaction is nucleophilic substitution reaction. Examples of the solvent include tetrahydrofuran, dioxane, diethyl ether, acetone, dimethylsulfoxide, dimethylformamide, dimethylacetamide, hexamethylphosphoric triamide, and acetonitrile. The reaction temperature is not particularly limited, but it is generally 0 to 150°C and more preferably room temperature to 100°C for maintaining the polymerizable terminal group.

The method 2) above is described.

The method 2) includes reacting a vinyl-based polymer having a hydroxyl group with a compound represented by the general formula (29):

XCCO)C(R¹³) = CH₂ (29)

(wherein R¹³ represents hydrogen or an organic group having 1 to 20 carbon atoms, and X represents chlorine, bromine, or a hydroxyl group).

The compound represented by the general formula (29) is not particularly limited. Specific examples of R¹³ include, for example, -H, -CH₃, -CH₂CH₃, -(CH₂)ₙCH₃ (n represents an integer of 2 to 19), -C₆H₅, -CH₂OH, and -CN. Among these groups, -H and -CH₃ are preferred.

The vinyl-based polymer having a hydroxyl group, preferably at a terminus, can be produced by a process of polymerizing a vinyl-based monomer using the organic halide or halogenated sulfonyl compound as the initiator and the transition metal complex as the catalyst as described above, or a process of polymerizing a vinyl-based monomer using a hydroxyl group-containing compound as the chain transfer agent. However, the former process is preferred. The process for producing the vinyl-based polymer having a hydroxyl group is not particularly limited, but examples of the process include the following:
(a) A process of reacting a second monomer such as a compound having both a polymerizable alkenyl group and a hydroxyl group in its molecule represented by the general formula (31) below in living radical polymerization for synthesizing a vinyl-based polymer;

   H₂C = C (R³²) - R³³ -R³⁴ - OH (31)

   (wherein R³² represents an organic group having 1 to 20 carbon atoms, preferably hydrogen or a methyl group, and may be the same or different, R³³ represents -C(O)O-(an ester group) or an o-, m-, or p-phenylene group, and R³⁴ represents a direct bond or a divalent organic group having 1 to 20 carbon atoms, which may contain at least one ether bond; the compound having an ester group as R³³ is a (meth)acrylate compound, and the compound having a phenylene group as R³³ is a styrene-based compound).
   The time to react the compound having both a polymerizable alkenyl group and a hydroxyl group in its molecule is not particularly limited. However, particularly when rubber-like properties are expected, the second monomer is preferably reacted at the final stage of polymerization reaction or after the completion of reaction of the employed monomers.
(b) A process of reacting a second monomer such as a compound having both a low-polymerizable alkenyl group and a hydroxyl group in its molecule at the final stage of polymerization reaction or after the completion of reaction of the employed monomers in living radical polymerization for synthesizing a vinyl-based polymer.
   The compound includes, but is not limited to, compounds represented by the general formula (32):

   H₂C = C(R³²) - R³⁵ - OH (32)

   (wherein R³² represents the same as the above, and R³⁵ represents a divalent organic group having 1 to 20 carbon atoms, which may contain at least one ether bond).
   The compound represented by the general formula (32) is not particularly limited, but an alkenyl alcohol such as 10-undecenol, 5-hexenol, or allyl alcohol is preferred from the viewpoint of easy availability.
(c) A process of introducing a terminal hydroxyl group by hydrolysis or by reacting a hydroxyl group-containing compound with a halogen of a vinyl-based polymer having at least one carbon-halogen bond represented by the general formula (27), which is produced by atom transfer radical polymerization, as disclosed in JP-A 4-132706.
(d) A process of substituting a halogen by reacting a vinyl-based polymer having at least one carbon-halogen bond represented by the general formula (27) and produced by atom transfer radical polymerization with a stabilized carbanion represented by the general formula (33) having a hydroxyl group;

   M⁺C⁻(R³⁶)(R³⁷) - R³⁵ - OH (33)

   (wherein R³⁵ represents the same as the above, and R³⁶ and R³⁷ each represent an electron-withdrawing group capable of stabilizing carbanion C⁻ or one of R³⁶ and R³⁷ represents an electron-withdrawing group, the other representing hydrogen or an alkyl or phenyl group having 1 to 10 carbon atoms). Examples of the electron-withdrawing group as R³⁶ and R³⁷ include -CO₂R (an ester group), -C(O)R (a keto group), -CON(R₂) (an amide group), -COSR (a thioester group), -CN (a nitrile group), and -NO₂ (a nitro group). Substituent R is an alkyl group having 1 to 20 carbon atoms, an aryl group having 6 to 20 carbon atoms, or an aralkyl group having 7 to 20 carbon atoms, and preferably an alkyl or phenyl group having 1 to 10 carbon atoms. In particular, -CO₂R, -C(O)R, and -CN are preferred as R³⁶ and R³⁷.
(e) A process of reacting a vinyl-based polymer having at least one carbon-halogen bond represented by the general formula (27) and produced by atom transfer radical polymerization with a simple substance metal such as zinc, or an organometallic compound to prepare an enolate anion, and then reacting the anion with an aldehyde or ketone.
(f) A process of reacting a vinyl-based polymer having at least one terminal halogen, preferably at least one halogen represented by the general formula (27), with a hydroxyl group-containing oxyanion represented by the general formula (34) or a hydroxyl group-containing carboxylate anion represented by the general formula (35) to substitute the halogen with a hydroxyl group-containing substituent;

   HO - R³⁵ - O⁻M⁺ (34)

   (wherein R³⁵ and M⁺ represent the same as the above)

   HO - R³⁵ - C(O)O⁻M⁺ (35)

   (wherein R³⁵ and M⁺ represent the same as the above).

Among processes (a) and (b) for introducing a hydroxyl group without directly involving a halogen, process (b) is more preferred in the present invention, from the viewpoint of ease of control.

Among processes (c) to (f) for introducing a hydroxyl group by converting the halogen of the vinyl-based polymer having at least one carbon-halogen bond, process (f) is more preferred from the viewpoint of ease of control.

The method 3) is described.

The method 3) includes reacting a vinyl-based polymer having a hydroxyl group with a diisocyanate compound and then reacting the residual isocyanate group with a compound represented by the general formula (36):

HO - R³¹ - OC(O)C(R¹³) = CH₂ (36)

(wherein R¹³ represents hydrogen or an organic group having 1 to 20 carbon atoms, and R³¹ represents a divalent organic group having 2 to 20 carbon atoms).

The compound represented by the general formula (36) is not particularly limited, and specific examples of R¹³ include -H, -CH₃, -CH₂CH₃, -(CH₂)ₙCH₃ (n represents an integer of 2 to 19), -C₆H₅, -CH₂OH, and -CN. Among these groups, -H and -CH₃ are preferred. As the specific compound, 2-hydroxypropyl methacrylate is mentioned.

The vinyl-based polymer having a hydroxyl group at a terminus is as described above.

The diisocyanate compound is not particularly limited, and any known compounds can be used. Examples of the compound include isocyanate compounds such as toluylene diisocyanate, 4,4'-diphenylmethane diisocyanate, hexamethyl diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These compounds can be used alone or in combination of two or more. Also, a block isocyanate may be used.

In order to achieve higher weather resistance, a diisocyanate compound with no aromatic ring, such as hexamethylene diisocyanate or hydrogenated diphenylmethane diisocyanate, is preferably used.

### «Curable Composition»

The curable composition according to the present invention may include a curing catalyst and a curing agent as essential components. In addition, various additives can be added depending on intended physical properties.

### <Curing Catalyst, Curing Agent>

### [In the Case of the Crosslinkable Silyl Group-containing Vinyl-based Polymer]

The crosslinkable silyl group-containing vinyl-based polymer is crosslinked and cured by forming a siloxane bond in the presence or absence of various condensation catalysts known in the art. The properties of the cured products can widely range from rubber-like to resinous ones depending on the molecular weight and main chain skeleton of the polymer.

Such condensation catalysts include, for example, tetravalent tin compounds such as dibutyltin dilaurate, dibutyltin diacetate, dibutyltin diethylhexanolate, dibutyltin diocotate, dibutyltin di(methyl maleate), dibutyltin di(ethyl maleate), dibutyltin di(butyl maleate), dibutyltin di(isooctyl maleate), dibutyltin di(tridecyl maleate), dibutyltin di(benzyl maleate), dibutyltin maleate, dioctyltin diacetate, dioctyltin distearate, dioctyltin dilaurate, dioctyltin di(ethyl maleate) and dioctyltin di(isooctyl maleate); divalent tin compounds such as tin octylate, tin naphthenate and tin stearate; monoalkyl tins, for example monobutyltin compounds such as monobutyltin trisoctoate, monobutyltin triisopropoxide, and monooctyltin compounds; titanate esters such as tetrabutyl titanate and tetrapropyl titanate; organoaluminum compounds such as aluminum trisacetylacetonate, aluminum trisethylacetoacetate and diisopropoxyaluminum ethylacetoacetate; carboxylic acid (e.g. 2-ethylhexanoic acid, neodecanoic acid, versatic acid, oleic acid, and naphthenic acid) metal salts such as bismuth carbonate, iron carbonate, titanium carbonate, lead carbonate, vanadium carbonate, zirconium carbonate, calcium carbonate, potassium carbonate, barium carbonate, manganese carbonate, cerium carbonate, nickel carbonate, cobalt carbonate, zinc carbonate and aluminum carbonate, and reaction products and mixtures of these with an amine compound such as laurylamine described later; chelate compounds such as zirconium tetraacetylacetonate and titanium tetraacetylacetoante; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine and cyclohexylamine; aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine and butylstearylamine; aliphatic tertiary amines such as tiramylamine, trihexylamine and trioctylamine, aliphatic unsaturated amines such as triallyamine and oleylamine; aromatic amines such as laurylaniline, stearylaniline, and triphenylamine; other amines, that is amine compounds such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo(5,4,0)undecene-7 (DBU), and salts of these amine compounds and carboxylic acids and the like; reaction products and mixtures of an amine compound and an organic tin compound, such as reaction products or mixtures of laurylamine and tin octylate; low molecular weight polyamide resins obtained from excess polyamines and polybasic acids; reaction products of excess polyamines and epoxy compounds; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldithoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbnezyl-γ-aminopropyltriethoxysilane. Further, examples of the catalysts may include conventionally known silanol condensation catalysts such as silanol condensation catalysts such as modified derivatives of the above-mentioned compounds, such as amino-modified silyl polymers, silylated aminopolymers, unsaturated aminosilane complexes, amino group-containing silane coupling agents such as phenylamino-long chain alkylsilane and aminosilylated silicones; other acidic catalysts and basic catalysts, and the like.

These catalysts may be used singly or two or more of them may be used in combination. The amount of such condensation catalyst incorporated is preferably about 0.1 to 20 parts by weight, more preferably 1 to 10 parts by weight, per 100 parts by weight of the vinyl-based polymers (I) and (II) having at least one crosslinkable silyl group. When the amount of the silanol condensation catalyst incorporated is below the above range, the curing rate may be decreased and the curing reaction may hardly proceed to a satisfactory extent. Conversely, when the amount of the silanol condensation catalyst incorporated exceeds the above range, local heat generation and/or foaming may occur in the step of curing, making it difficult to obtain good cured products; in addition, the pot life becomes too short and this is unfavorable from the viewpoint of workability. The catalyst is not particularly limited, but a tin-based curing catalyst is preferably used to regulate curability.

In the curable composition for damping materials according to the present invention, the above-mentioned amino group-containing silane coupling agent, similar to the amine compound, can be used as a co-catalyst to further increase the activity of the condensation catalyst. The amino group-containing silane coupling agent is a compound having a group containing a silicon atom to which a hydrolysable group is bound (hereinafter, referred to as a hydrolysable silicon group) and an amino group. Examples of the hydrolysable group may be those exemplified above, among which a methoxy group, an ethoxy group, and the like are preferable from the viewpoint of hydrolysis rate. The number of hydrolysable groups is preferably 2 or more, particularly preferably 3 or more.

The amount of such amine compound incorporated is preferably about 0.01 to 50 parts by weight, more preferably 0.1 to 20 parts by weight, per 100 parts by weight of the vinyl-based polymers (I) and (II). When the amount of the amine compound incorporated is less than 0.01 parts by weight, the curing rate may be decreased and the curing reaction may hardly proceed to a satisfactory extent. Conversely, when the amount of the amine compound incorporated exceeds 30 parts by weight, the pot life becomes too short and this is unfavorable from the viewpoint of workability

These amine compounds may be used alone or as a mixture of two or more thereof.

Further, an amino group- or silanol group-free silicon compound represented by the general formula (37):

R⁴⁹ₐSi(OR⁵⁰)₄₋ₐ (37)

(wherein R⁴⁹ and R⁵⁰ each independently represent a substituted or unsubstituted hydrocarbon group having 1 to 20 carbon atoms and a is 0, 1, 2 or 3) may be added as a co-catalyst.

The above silicon compound is not limited, but those compounds of the general formula (37) in which R⁴⁹ is an aryl group having 6 to 20 carbon atoms, such as phenyltrimethoxysilane, phenylmethyldimethoxysilane, phenyldimethylmethoxysilane, diphenyldimethoxysilane, diphenyldiethoxysilane and triphenylmethoxysilane, are preferred since their accelerating effect on the curing reaction of the composition is significant. In particular, diphenyldimethoxysilane and diphenyldiethoxysilane are low in cost and readily available, hence are most preferred.

The amount of this silicon compound incorporated is preferably about 0.01 to 20 parts by weight, more preferably 0.1 to 10 parts by weight, per 100 parts by weight of the vinyl-based polymers (I) and (II). When the amount of the silicon compound incorporated is below this range, the curing reaction-accelerating effect may decrease in certain cases. When, conversely, the amount of the silicon compound incorporated exceeds this range, the hardness and/or tensile strength of the cured products may be decreased.

The amount of the curing catalyst/curing agent added and their type can be selected depending on the type of Y and the number of a in the vinyl-based polymer having a crosslinkable silyl group represented by the above general formula (5) or (6), and the curability, mechanical property and the like in the present invention can be regulated depending on the purpose and use. When Y is an alkoxy group, the reactivity is made higher as the number of carbon atoms in Y is decreased, and the reactivity is made higher as the number of a is increased, so sufficient curing is made feasible by a smaller amount of the curing catalyst/curing agent.

### [In the Case of the Vinyl-based Polymer Having an Alkenyl Group]

In the case of crosslinking with an alkenyl group, crosslinking is carried out preferably using a hydrosilyl group-containing compound as a curing agent and a hydrosilylation catalyst for hydrosilylation reaction, though this is not critical.

The hydrosilyl group-containing compound is not particularly limited as long as it is a hydrosilyl group-containing compound that can be cured by crosslinking with the vinyl-based polymer having an alkenyl group, and various hydrosilyl group-containing compounds can be used. It is possible to use, for example, compounds including:
linear polysiloxanes represented by the general formula (38) or (39):

   R⁵¹₃SiO - [Si(R⁵¹)₂O]ₐ - [Si(H)(R⁵²)O]_{b} - [Si(R⁵²)(R⁵³)O]_{c} - SiR⁵¹₃ (38)

   HR⁵¹₂SiO - [Si(R⁵¹)₂O]ₐ - [Si(H)(R⁵²)O]_{b} - [Si(R⁵²)(R⁵³)O]_{c} - SiR⁵¹₂H (39)

   (wherein R⁵² and R⁵² each represent an alkyl group having 1 to 6 carbon atoms or a phenyl group, and R⁵³ represents an alkyl or aralkyl group having 1 to 10 carbon atoms; and a, b and c each represent an integer satisfying the relations: 0 ≤ a ≤ 100, 2 ≤ b ≤ 100, and 0 ≤ c ≤ 100), and
cyclic siloxanes represented by the general formula (40): 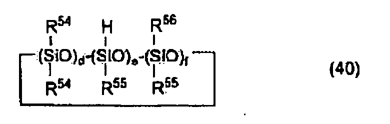 (wherein R⁵⁴ and R⁵⁵ each represent an alkyl group having 1 to 6 carbon atoms or a phenyl group, and R⁵⁶ represents an alkyl or aralkyl group having 1 to 10 carbon atoms; and d, e and f each represent an integer satisfying the relations: 0 ≤ d ≤ 8, 2 ≤ e ≤ 10, 0 ≤ f ≤ 8,and 3 ≤ d+e + f ≤ 10).

These may be used singly or as a mixture of two or more thereof. Among those siloxanes described above, phenyl group-containing linear siloxanes represented by the general formula (41) or (42) below and cyclic siloxanes represented by the general formula (43) or (44) below are preferred from the viewpoint of compatibility with the vinyl-based polymers (I) and (II);

(CH₃)₃SiO - [Si(H)(CH₃)O]_{g} - [Si(C₆H₅)₂O]ₕ- Si(CH₃)₃ (41)

(CH₃)₃SiO - [Si(H)(CH₃)O]_{g} - [Si(CH₃){CH₂C(H)(R⁵⁷)C₆H₅}O]ₕ - Si(CH₃)₃ (42)

(wherein R⁵⁷ represents hydrogen or a methyl group, g and h each is an integer satisfying the relations: 2 ≤ g ≤ 100 and 0 ≤ h ≤ 100; and C₆H₅ represents a phenyl group) 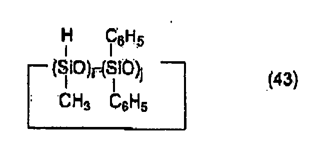 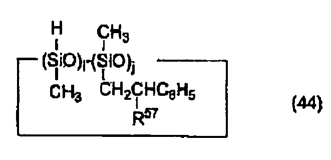 (wherein R⁵⁷ represents hydrogen or a methyl group, i and j each is an integer satisfying the relations: 2 ≤ i ≤ 10, 0 ≤ j ≤ 8, and 3 ≤ i + j ≤10; and C₆H₅ represents a phenyl group).

Also useful as the hydrosilyl group-containing compounds are those compounds obtained by addition reaction of a hydrosilyl group-containing compound represented by one of the formulas (38) to (44) to a low-molecular compound having, in its molecule, two or more alkenyl groups in such a manner that the hydrosilyl group partly remains even after the reaction. Various compounds can be used as the compound having, in its molecule, two or more alkenyl groups. Examples thereof include hydrocarbon compounds such as 1,4-pentadiene, 1,5-hexadiene, 1,6-heptadiene, 1,7-octadiene, 1,8-nonadiene and 1,9-decadiene; ether compounds such as O,Q'-diallylbisphenol A and 3,3'-diallylbisphenol A; ester compounds such as diallyl phthalate, diallyl isophthalate, triallyl trimellitate and tetraallyl pyromellitate; and carbonate compounds such as diethylene glycol diallyl carbonate.

The above-mentioned compounds can be obtained by slowly adding the above-mentioned alkenyl group-containing compound dropwise to an excess of the hydrosilyl group-containing compound represented by one of the formulas (38) to (44) in the presence of a hydrosilylation catalyst. In consideration of the ready availability of raw materials, ease of removing the siloxane used in excess and further the compatibility with the vinyl-based polymers (I) and (II), preferable among such compounds are those illustrated below: 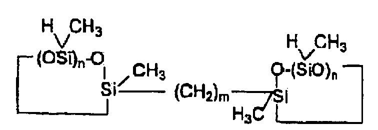 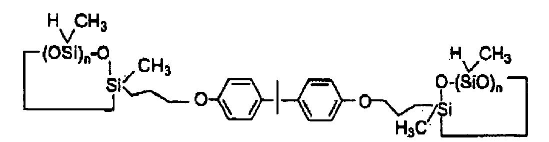 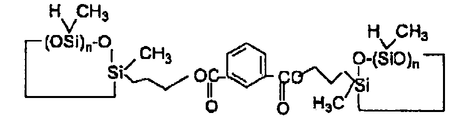 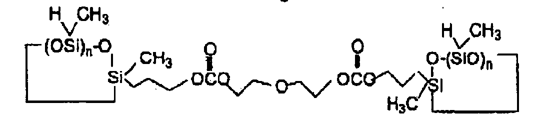 (wherein n is an integer of 2 to 4 and m is an integer of 5 to 10).

The vinyl-based polymers (I) and (II) can be mixed with the curing agent in an arbitrary ratio. From the curability viewpoint, however, the molar ratio between the alkenyl group and hydrosilyl group is preferably in the range of 5 to 0.2, more preferably 2.5 to 0.4. When the molar ratio exceeds 5, curing is insufficient and only sticky cured products having low strength will be obtained. When the molar ratio is less than 0.2, a large amount of the active hydrosilyl group remains in cured products even after curing, so that cracks and voids will appear and thus uniform cured products having high strength will not be obtained.

The curing reaction of the vinyl-based polymers (I) and (II) with the curing agent proceeds upon mixing of the two components and heating. For accelerating the reaction, however, a hydrosilylation catalyst may be added. Such hydrosilylation catalyst includes, but is not limited to, radical initiators such as organic peroxides and azo compounds, and transition metal catalysts.

The radical initiator is not particularly limited and can be exemplified by dialkyl peroxides such as di-t-butyl peroxide, 2,5-dimethyl-2,5-di(t-butylperoxy)hexane, 2,5-dimethyl-2,5-di(t-butylperoxy)-3-hexyne, dicumyl peroxide, t-butyl cumyl peroxide and α,α'-bis(t-butylperoxy)isopropylbenzene; diacyl peroxides such as benzoyl peroxide, p-chlorobenzoyl peroxide, m-chlorobenzoyl peroxide, 2,4-dichlorobenzoyl peroxide and lauroyl peroxide; peracid esters such as t-butyl perbenzoate; peroxydicarbonates such as diisopropyl peroxydicarbonate and di-2-ethylhexyl peroxydicarboante; and peroxyketals such as 1,1-di(t-butylperoxy)cyclohexane and 1,1-di(t-butylperoxy)-3,3,5-trimethylcyclohexane.

The transition metal catalyst is not particularly limited either, and can be exemplified by simple substance platinum, solid platinum dispersed on a support such as alumina, silica or carbon black, chloroplatinic acid, complexes of chloroplatinic acid with alcohols, aldehydes, ketones and the like, platinum-olefin complexes and platinum(0) divinyltetramethyldisiloxane complex. Examples of the catalyst other than platinum compounds include RhCl(PPh₃)₃, RhCl₃, RuCl₃, IrCl₃, FeCl₃, AlCl₃, PdCl₂-H₂O, NiCl₂, TiCl₄, and the like. These catalyst may be used singly or in combination of two or more thereof. The amount of the catalyst is not particularly limited, but is used preferably in the range of 10⁻¹ to 10⁻⁸ mole, preferably in the range of 10⁻³ to 10⁻⁶ mole, per 1 mole of the alkenyl group of the vinyl-based polymers (I) and (II). When it is less than 10⁻⁸ mole, the curing may not proceed to a sufficient extent. The hydrosilylation catalyst is expensive and is thus preferably not used in an amount exceeding 10⁻¹ mole.

A curing modifier may be compounded to keep a proper balance between storage stability and curability. The curing modifier that can be compounded include compounds containing an aliphatic unsaturated bond. Such compounds include, for example, acetylene alcohols, and the acetylene alcohols which are well-balanced between storage stability and curability include 2-phenyl-3-butyn-2-ol, 1-ethynyl-1-cyclohexanol, 3,5-dimethyl-1-hexyn-3-ol, 3-methyl-1-hexyn-3-ol, 3-ethyl-1-pentyn-3-ol, 2-methyl-3-butyn-2-ol and 3-methyl-1-pentyn-3-o1.

Besides acetylene alcohols, compounds containing an aliphatic unsaturated bond for improving storage stability at high temperature include ene-ine compounds, silane compounds, polysiloxane compounds, olefinic compounds, olefinic alcohol aliphatic carboxylic acid esters such as vinyl acetate, tetravinylsiloxane cyclic compounds, aliphatic unsaturated bond-containing nitriles such as 2-pentenenitrile, alkyl acetylenedicarboxylates, maleic acid esters and diorgano fumarates.

The amount of the curing modifier added can be selected substantially arbitrarily, but the curing modifier is preferably used in an amount in the range of 2 to 10,000 mole equivalents relative to the hydrosilylation catalyst. The curing modifiers may be used singly or in combination of two or more thereof.

The curing temperature is not particularly limited, but generally curing is carried out at 0°C to 200°C, preferably 30°C to 150°C, more preferably 80°C to 150°C.

### [In the Case of the Vinyl-based Polymer Having a Hydroxyl Group]

When the vinyl-based polymer having a hydroxyl group is used in the present invention, a compound having at least two functional groups capable of reacting with a hydroxyl group is used as a curing agent, thereby uniformly curing the polymer. Examples of the curing agent includes, for example, polyisocyanate compounds having two or more isocyanate groups per molecule; aminoplast resins such as methylolated melamine and alkyl ethers thereof or low condensates thereof; polyfunctional carboxylic acids and halides thereof. When these curing agents are used to form cured products, suitable curing catalysts can be used respectively.

### [In the Case of the Vinyl-based Polymer Having an Amino Group]

When the vinyl-based polymer having an amino group is used in the present invention, a compound having at least two functional groups capable of reacting with an amino group is used as a curing agent, thereby uniformly curing the polymer. Examples of the curing agent includes, for example, polyisocyanate compounds having two or more isocyanate groups per molecule; aminoplast resins such as methylolated melamine and alkyl ethers thereof or low condensates thereof; polyfunctional carboxylic acids and halides thereof. When these curing agents are used to form cured products, suitable curing catalysts can be used respectively.

### [In the Case of the Vinyl-based Polymer Having an Epoxy Group]

In the present invention, a curing agent for the vinyl-based polymer having an epoxy group is not particularly limited, but use may be made of photo- or ultraviolet-curing agents such as aliphatic amines, alicyclic amines, aromatic amines; acid anhydrides; polyamides; imidazoles; amineimides; urea; melamine and derivatives thereof; polyamine salts; phenol resins; polymercaptans, polysulfides; aromatic diazonium salts; diallyliodonium salts, triallylsulfonium salts, triallylselenium salts and the like.

### [In the Case of the Vinyl-based Polymer Having a Polymerizable Carbon-carbon Double Bond]

The vinyl-based polymer having a polymerizable carbon-carbon double bond can be crosslinked by polymerization reaction of its polymerizable carbon-carbon double bond.

The crosslinking method includes curing with an active energy ray or curing with heat. In the active energy ray system, a photoradical initiator or a photoanion initiator is preferably used as a photopolymerization initiator. In the heat curing system, an initiator selected from the group consisting of an azo-based initiator, a peroxide, a persulfate and a redox initiator is preferably used as a heat polymerization initiator. The initiators used may be used singly or as a mixture of two or more thereof, and when the initiators are used as a mixture, the amount of the respective initiators is preferably in a range described later.

When the vinyl-based polymer having a polymerizable carbon-carbon double bond is crosslinked, a polymerizable monomer and/or an oligomer and various additives may be simultaneously used depending on the purpose. As the polymerizable monomer and/or oligomer, a monomer and/or oligomer having a radical polymerizable group or a monomer and/or oligomer having an anionic polymerizable group is preferred. Examples of the radical polymerizable group include acryl functional groups such as a (meth)acryl group, a styrene group, an acrylonitrile group, a vinylester group, an N-vinylpyrrolidone group, an acrylamide group, a conjugated diene group, a vinyl ketone group, and a vinyl chloride group. In particular, a monomer and/or oligomer having a (meth)acryl group is preferred. Examples of the anionic polymerizable group include a (meth)acryl group, a styrene group, an acrylonitrile group, an N-vinylpyrrolidone group, an acrylamide group, a conjugated diene group, and a vinyl ketone group. In particular, a monomer and/or oligomer having an acryl functional group is preferred.

Specific examples of the monomer include (meth)acrylate monomers, cyclic acrylates, N-vinylpyrrolidone, styrene-based monomers, acrylonitrile, N-vinylpyrrolidone, acrylamide-based monomers, conjugated diene-based monomers, and vinyl ketone-based monomers. Examples of (meth)acrylate monomers include n-butyl (meth)acrylate, 2-ethylhexyl (meth)acrylate, isooctyl (meth)acrylate, isonoyl (meth)acrylate, and compounds represented by the following formulae:

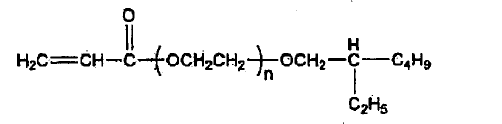

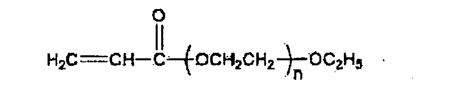

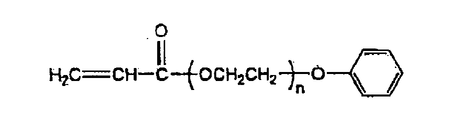

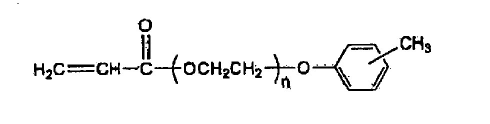

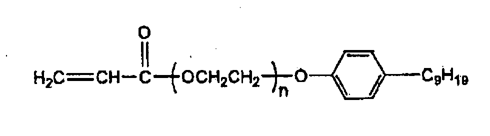

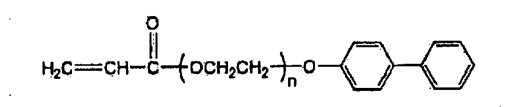

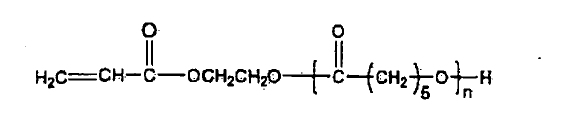

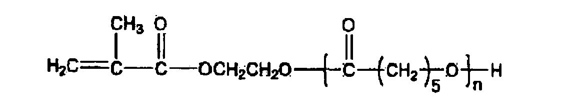

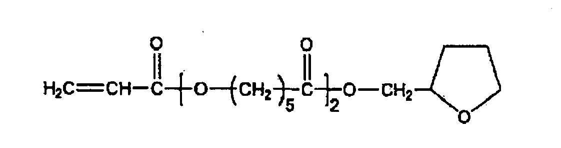

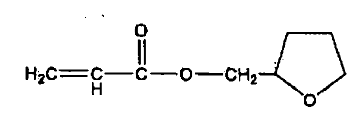

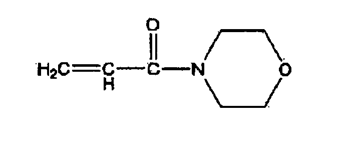

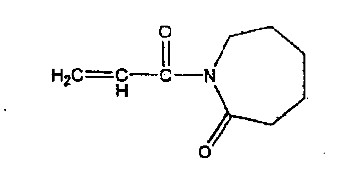

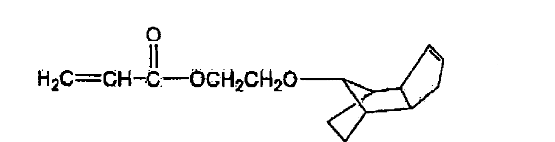

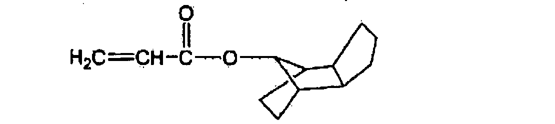

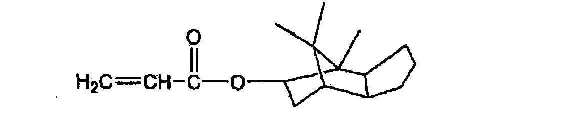

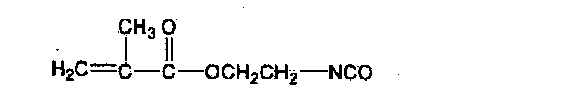

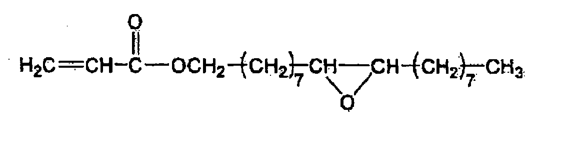

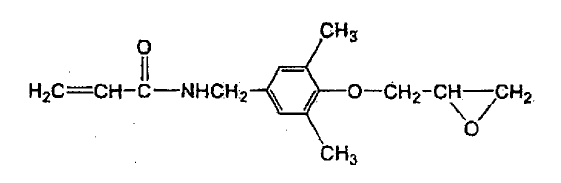

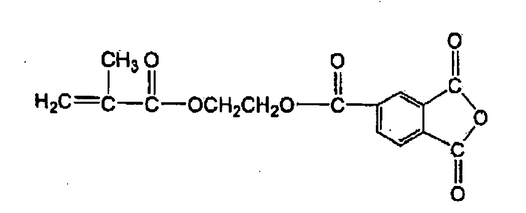

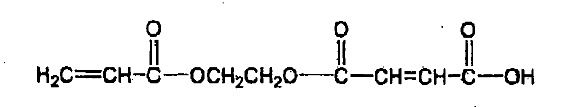

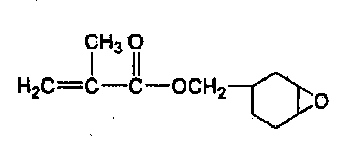

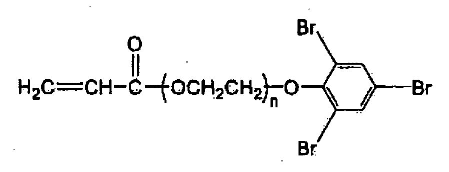

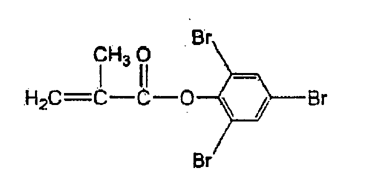

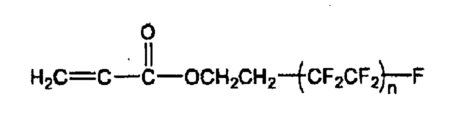

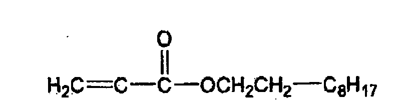

Examples of the styrene-based monomers include styrene and α-methylstyrene, examples of the acrylamide-based monomers include acrylamide and N,N-dimethylacrylamide, examples of the conjugated diene-based monomers include butadiene and isoprene, and example of the vinyl ketone-based monomers include methyl vinyl ketone.

Examples of the polyfunctional monomers include neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate2-(2-acryloyloxy-1,1-dimethyl)-5-ethy]-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins such as bisphenol A epoxy acrylate resins, phenol novolac epoxy acrylate resins, and cresol novolac epoxy acrylate resins; COOH group-modified epoxy acrylate resins; urethane acrylate resins prepared by reacting urethane resins with a hydroxyl group-containing (meth)acrylate [hydroxyethyl (meth)acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates (tolylene diisocyanate, isophorone diisocyanate, diphenylmethane diisocyanate, hexamethylene diisocyanate, xylylene diisocyanate, and the like); resins prepared by introducing (meth)acryl groups in the polyols through ester bonds; and polyester acrylate resins.

These monomers and oligomers are selected depending on the initiator and curing conditions used.

The number-average molecular weight of the monomer and/or oligomer having an acryl functional group is preferably 2,000 or less, more preferably 1,000 or less, because of high compatibility.

### Crosslinking System with Active Energy Ray

The curable composition for damping materials according to the present invention can also be crosslinked with an active energy ray such as an UV or electron ray.

When the curable composition of the present invention is cured with active energy rays, the curable composition preferably contains a photopolymerization initiator.

The photopolymerization initiator used in the present invention is not particularly limited, but a photoradical initiator or a photoanion initiator is preferred. In particular, the photoradical initiator is preferred. Examples of the photoradical initiator include acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl)ketone, benzylmethoxyketal, 2-chlorothioxanthone, 2,2-dimethoxy-1,2-diphenylethan-1 -one, 1-hydroxy-cyclohexyl-phenyl-ketone, 2-hydroxy-2-methyl-1-phenyl-propan-1-one, 2-methyl-1-[4-(methylthio)phenyl]-2-morpholinopropan-1-one, 2-benzyl-2-dimethylamino-1-(4-morpholinophenyl)-butanone-1, bis(2,4,6-trimethylbenzoyl)phenylphosphine oxide, bis(2,6-dimethoxybenzoyl)-2,4,4-trimethylpentylphosphine oxide and 2,4,6-trimethylbenzoyl-diphenyl-phosphine oxide. Among these compounds, a compound having a hydroxyl group and a phenyl ketone structure, a compound having a benzophenone structure, and a compound having an acylphosphine oxide structure are preferable, and specific examples thereof include 3-methoxybenzophenone, 4-methylbenzophenone, 4-chlorobenzophenone, 4,4'-dimethoxybenzophenone, 4-chloro-4'-benzylbenzophenone, 1-hydroxy-cyclohexyl-phenyl-ketone, 2-hydroxy-2-methyl-1-phenyl-propan-1-one, 2-benzyl-2-dimethylamino-1-(4-morpholinophenyl)-butanone-1, bis(2,4,6-trimethylbenzoyl)-phenylphosphine oxide, bis(2,6-dimethoxybenzoyl)-2,4,4-trimethylpentylphosphine oxide, and 2,4,6-trimethylbenzoyl-diphenyl-phosphine oxide, particularly preferably 2,2-dimethoxy-1,2-diphenylethan-1-one, 1-hydroxy-cyclohexyl-phenyl-ketone, 2-hydroxy-2-methyl-1-phenyl-propan-1-one, bis(2,6-dimethoxybenzoyl)-2,4,4-trimethylpentylphosphine oxide, and 2,4,6-trimethylbenzoyl-diphenyl-phosphine oxide. These initiators may be used singly or in combination with other compounds. Specific examples thereof include initiators combined with amines such as diethanolmethylamine, dimethylethanolamine and triethanolamine and further with iodonium salts such as diphenyl iodonium chloride, and initiators combined with amines and pigments such as methylene blue.

When the above-mentioned photopolymerization initiator is used, it is also possible to add a polymerization inhibitor such as hydroquinone, hydroquinone monomethyl ether, benzoquinone or para-tertiary butyl catechol according to need.

Furthermore, a near-infrared light absorbing cationic dye may be used as a near-infrared photopolymerization initiator. As the near-infrared light absorbing cation dye, a dye which is excited with light energy in the range of 650 nm to 1,500 nm, for example, the near-infrared light absorbing cation dye-borate anion complex disclosed in JP-A 3-111402 and JP-A 5-194619, is preferably used and more preferably used in combination with a boron-based sensitizing agent.

Since it is sufficient that the polymerization system is slightly made optically functional, the amount of the photopolymerization initiator added is, without limitation, preferably 0.001 to 10 parts by weight, relative to 100 parts by weight of the vinyl-based polymers (I) and (II).

The method of curing the curable composition for damping materials according to the present invention is not particularly limited, and mention is made of irradiation with light and an electron beam with a high-pressure mercury lamp, a low-pressure mercury lamp, an electron beam irradiation device, a halogen lamp, a light-emitting diode, or a semiconductor laser, depending on the property of the photopolymerization initiator.

The method of crosslinking the vinyl-based polymer having a polymerizable carbon-carbon double bond is carried out preferably with heat.

### Thermal Crosslinking System

When the curable composition for damping materials according to the present invention is thermally cured, the curable composition preferably contains a thermopolymerization initiator.

Examples of the thermopolymerization initiator used in the present invention include, but are not limited to, azo-based initiators, peroxides, persulfates, and redox initiators.

Specific examples of suitable azo-based initiators include, but are not limited to, 2,2'-azobis(4-methoxy-2,4-dimethylvaleronitrile) (VAZO 33), 2,2'-azobis(2-amidinopropane)dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), and 1,1-azobis(1-cyclohexanecarbonitrile) (VAZO 88) (all available from DuPont Chemical); and 2,2'-azobis(2-cyclopropylpropionitrile) and 2,2'-azobis(methylisobutylate) (V-601) (available from Wako Pure Chemical Industries, Ltd.).

Examples of suitable peroxide initiators include, but are not limited to, benzoyl peroxide, acetyl peroxide, lauroyl peroxide, decanoyl peroxide, diacetyl peroxydicarbonate, di(4-tert-butylcyclohexyl)peroxydicarbonate (Perkadox 16S) (available from Akzo Nobel), di(2-ethylhexyl)peroxydicarbonate, tert-butyl peroxypivalate (Lupersol 11) (available from Elf Atochem), tert-butyl peroxy-2-ethylhexanoate (Trigonox 21-C50) (available from Akzo Nobel), and dicumyl peroxide.

Examples of suitable persulfate initiators include, but are not limited to, potassium persulfate, sodium persulfate, and ammonium persulfate.

Examples of suitable redox (oxidation-reduction) initiators include, but are not limited to, combinations of the above persulfate initiators and a reducing agent such as sodium hydrogen metasulfite or sodium hydrogen sulfite; systems based on an organic peroxide and a tertiary amine, e.g., a system based on benzoyl peroxide and dimethylaniline; systems based on an organic hydroperoxide and transition metals, e.g., a system based on cumene hydroperoxide and cobalt naphthenate.

Other examples of the initiator include, but are not limited to, pinacols such as tetraphenyl-1,1,2,2-ethanediol.

A thermoradical initiator is preferably selected from the group consisting of azo-based initiators and peroxide initiators. Further preferred examples of the thermoradical initiator include 2,2'-azobis(methylisobutylate), tert-butyl peroxypivalate, and di(4-tert-butylcyclohexyl)peroxydicarbonate, and mixtures thereof

The thermal initiator used in the present invention is present in a catalytically effective amount, and the amount is not particularly limited. The amount is typically about 0.01 to 5 parts by weight, more preferably about 0.025 to 2 parts by weight, relative to 100 parts by weight of the total of the vinyl-based polymers (I) and (II) having a polymerizable carbon-carbon double bond at least one terminus thereof according to the present invention and a mixture of the monomer and oligomer added. When an initiator mixture is used, the total of the initiator mixture should be deemed as if the amount is the amount of only one initiator used.

Although the method of curing the curable composition for damping materials according to the present invention is not particularly limited, the temperature is preferably in the range of 50°C to 250°C, more preferably 70°C to 200°C, depending on the thermal initiator used, the vinyl-based polymers (I) and (II), the compound added, and the like. The curing time is generally in the range of 1 minute to 10 hours depending on the polymerization initiator, monomer, solvent, reaction temperature used, and the like.

### <Adhesion Promoter>

The curable composition for damping materials according to the present invention may contain a silane coupling agent and an adhesion promoter other than the silane coupling agent. If the adhesion promoter is added, the risk of peeling off of a sealant from an adherend such as a siding board may be decreased due to alteration of jointing width or the like by external power. In some cases, a primer for improving the adhesiveness is not required so as to simplify the processing work. Examples of the silane coupling agent are silane coupling agents having a functional group such as an amino group, a mercapto group, an epoxy group, a carboxyl group, a vinyl group, an isocyanate group, an isocyanurate group and a halogen group, and specific examples thereof include isocyanate group-containing silanes such as γ-isocyanatepropyltrimethoxysilane, γ-isocyanatepropyltriethoxysilane, γ-isocyanatepropylmethyldiethoxysilane, and γ-isocyanatepropylmethyldimethoxysilane; amino group-containing silanes such as γ-aminopropyltrimethoxysilane, γ-aminopropyltriethoxysilane, γ-aminopropyltripropoxysilane, γ-aminopropylmethyldiimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane; vinyl unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris(trimethoxysilyl)isocyanurate; and the like. Modification derivatives of these, for example amino-modified silyl polymers, silylated aminopolymers, unsaturated aminosilane complexes, phenylamino-long chain alkylsilanes, aminosilylated silicones, block isocyanate silanes, silylated polyesters and the like, can also be used as silane coupling agents,

The silane coupling agent used in the present invention is used generally in an amount in the range of 0.1 to 20 parts by weight per 100 parts by weight of the vinyl-based polymers (I) and (II). In particular, the use thereof in the range of 0. 5 to 10 parts by weight is preferred. As for the effect of the silane coupling agent added to the curable composition of the present invention, it produces marked adhesive property-improving effects under non-primer or primer-treated conditions when the composition is applied to various adherends, namely inorganic substrates such as glass, aluminum, stainless steel, zinc, copper and mortar, or organic substrates such as polyvinyl chloride, acrylics, polyesters, polyethylenes, polypropylenes and polycarbonates. When it is used under non-primer conditions, the improving effects on the adhesiveness to various adherends are particularly remarkable.

Specific examples of the agent other than the silane coupling agent include, but are not limited to, epoxy resins, phenol resins, sulfur, alkyl titanates and aromatic polyisocyanates, among others.

The adhesion promoters mentioned above may be used singly or as a mixture of two or more thereof By adding these adhesion promoters, it is possible to improve the adhesiveness to adherends. Among the adhesion promoters mentioned above, silane coupling agents are preferably used in combination in an amount of 0.1 to 20 parts by weight to improve the adhesion, in particular the adhesion to the metal adherend surface such as an oil pan surface, although this is not critical.

When the vinyl-based polymer having a crosslinkable silyl group represented by the general formula (5) or (6) for example is used, the type and the addition amount of the adhesion promoter can be selected in accordance with the type of Y and the number of a in the general formula (5) or (6), and the curability, the mechanical property and the like in the present invention may be controlled depending on the purposes and uses. The above-mentioned selection requires attention since it affects the curability and elongation in particular.

### <Plasticizer>

Various kinds of plasticizers may be used for the curable composition for damping materials according to the present invention according to need. If a plasticizer is used in combination with a filler which will be described later, the elongation of the cured product can be increased and a large amount of filler can be advantageously added. Further, a peak of a loss coefficient (loss tangent tan δ) can be shifted toward lower temperature to improve damping property at low temperatures, and the loss coefficient in the high-temperature range can be increased to improve damping property. However the plasticizer is not necessarily an indispensable agent. The plasticizers are not particularly limited, but may be selected from the following ones according to the purpose of adjusting physical and other properties: phthalate esters such as dibutyl phthalate, diheptyl phthalate, di(2-ethylhexyl)phthalate and butyl benzyl phthalate; nonaromatic dibasic acid esters such as dioctyl adipate, dioctyl sebacate, dibutyl sebacate and isodecyl succinate; aliphatic esters such as butyl oleate and methyl acetylricinoleate; polyalkylene glycol esters such as diethylene glycol dibenzoate, triethylene glycol dibenzoate and pentaerythritol esters; phosphate esters such as tricresyl phosphate and tributyl phosphate; trimellitate esters; polystyrenes such as polystyrene and poly-α-methylstyrene; polybutadiene, polybutene, polyisobutylene, butadiene-acrylonitrile, and polychloroprene; chlorinated paraffins; hydrocarbon oils such as alkyldiphenyls and partially hydrogenated terphenyl; process oils; polyethers including polyether polyols such as polyethylene glycol, polypropylene glycol and polytetramethylene glycol and derivatives of such polyether polyols as resulting from conversion of the hydroxyl group(s) thereof to an ester group, an ether group or the like; epoxy plasticizers such as epoxidized soybean oil and benzyl epoxystearate; polyester type plasticizers obtained from a dibasic acid such as sebacic acid, adipic acid, azelaic acid or phthalic acid and a dihydric alcohol such as ethylene glycol, diethylene glycol, triethylene glycol, propylene glycol or dipropylene glycol; (meth)acrylic polymers obtained by polymerizing a vinyl-based monomer(s) such as an acrylic plasticizer by various methods of polymerization; and the like.

By adding a high-molecular-weight plasticizer, which is a polymer having a number-average molecular weight of 500 to 15,000, it becomes possible to adjust the viscosity and/or slump tendency of the curable composition as well as mechanical properties such as tensile strength and elongation of the cured products obtained by curing that composition, and as compared with the cases where a low-molecular-weight plasticizer containing no polymer component within the molecule is used, it becomes possible to maintain the initial physical properties for a long period of time and to improve the drying property (also called as coatability) in the case where an alkyd paint is applied to the cured product. This high-molecular-weight plasticizer may have a functional group(s) or may not have any functional group, without any limitation.

The number-average molecular weight of the above-mentioned high-molecular-weight plasticizer, which may be in the range of 500 to 15,000 as mentioned above, is preferably 800 to 10,000, more preferably 1,000 to 8,000. When the molecular weight is too low, the plasticizer will flow out upon exposure to heat and/or rain with the lapse of time, failing to maintain the initial physical properties for a long period of time, and the alkyd coatability may not be improved. When the molecular weight is too high, the viscosity increases, and the workability deteriorates.

Among these high-molecular-weight plasticizers, those compatible with the vinyl-based polymers (I) and (II) are preferable. From the viewpoint of compatibility, weather resistance and heat resistance, (meth)acrylic polymers are preferable. Among (meth)acrylic polymers, acrylic polymers are further preferred. These acrylic polymers include conventional ones obtainable by the conventional solution polymerization, solventless acrylic polymers, and the like. The latter acrylic plasticizers are more suited for the purpose of the present invention since they are produced by high-temperature continuous polymerization techniques (U.S. Pat. No. 4,414,370, JP-A 59-6207, JP-B 5-58005, JP-A 1-313522, U. S. Pat. No. 5,010,166) without using any solvent or chain transfer agent. Examples thereof are not particularly limited and may include, for example, UP series manufactured by Toagosei Co., Ltd. (see Kogyo Zairyo, October, 1999). Of course, the living radical polymerization can be mentioned as another method of synthesizing. This technique is preferred since it can give polymers with a narrow molecular weight distribution and a reduced viscosity, and furthermore the atom transfer radical polymerization technique is more preferred, although the polymerization technique is not limited to those mentioned above.

The molecular weight distribution of the high-molecular-weight plasticizer is not particularly limited but it is preferably narrow, namely lower than 1.8, more preferably not higher than 1.7, still more preferably not higher than 1.6, still further preferably not higher than 1.5, particularly preferably not higher than 1.4, most preferably not higher than 1.3.

The plasticizers, including the high-molecular-weight plasticizers mentioned above, may be used singly or two or more of them may be used in combination, although the use thereof is not always necessary. If necessary, a high-molecular-weight plasticizer may be used, and a low-molecular-weight plasticizer may further be used in combination in such a range that the physical properties are not adversely affected.

Such a plasticizer(s) may also be incorporated at the time of production of the polymer.

When a plasticizer is used, the amount of the plasticizer used is not limited, but is generally 5 to 150 parts by weight, preferably 10 to 120 parts by weight, more preferably 20 to 100 parts by weight, per 100 parts by weight of the vinyl-based polymers (1) and (II). When it is smaller than 5 parts by weight, the plasticizing effect is hardly produced, and when it exceeds 150 parts by weight, the mechanical strength of cured products tend to become insufficient.

### <Filler>

The curable composition for damping materials of the present invention may be compounded if necessary with various fillers. The fillers are used because a reduction in loss coefficient (damping characteristic) in the high-temperature range particularly at 80°C or more can be generally ameliorated, although it depends on the kind of the filler. The fillers include, but are not limited to, reinforcing fillers such as wood flour, pulp, cotton chips, asbestos, glass fibers, carbon fibers, mica, walnut shell flour, rice hull flour, graphite, diatomaceous earth, white clay, silica (e.g. fumed silica, precipitated silica, crystalline silica, fused silica, dolomite, silicic anhydride, hydrous silicic acid or the like) and carbon black; fillers such as ground calcium carbonate, precipitated calcium carbonate, magnesium carbonate, diatomaceous earth, calcined clay, clay, talc, titaniumoxide, bentonite, organicbentonite, ferricoxide, red iron oxide, fine aluminum powder, flint powder, zinc oxide, activated zinc flower, zinc powder, zinc carbonate and shirasu balloons; fibrous fillers such as asbestos, glass fibers and glass filaments, carbon fibers, Kevlar fibers and polyethylene fibers; and the like.

Preferred among these fillers are precipitated silica, fumed silica, crystalline silica, fused silica, dolomite, carbon black, calcium carbonate, titanium oxide, talc and the like.

Particularly, when high strength cured products are to be obtained using these fillers, a filler selected from among fumed silica, precipitated silica, silicic acid anhydride, hydrous silicic acid, carbon black, surface-treated fine calcium carbonate, crystalline silica, fused silica, calcined clay, clay and activated zinc flower may be mainly added. Among them, those advantageously used are supermicropowder silicas having a specific surface area (measured by BET adsorption method) in a degree of not less than 50 m²/g, usually 50 to 400 m²/g, and preferably 100 to 300 m²/g. Further preferred are silicas the surface of which is subjected to hydrophobic treatment in advance with organic silicon compounds such as organosilanes, organosilazanes or diorganocyclopolysiloxanes.

Specific examples of the reinforced silica type filler include, but are not limited to, fumed silica, e.g., Aerosil manufactured by Nippon Aerosil Co., Ltd., and precipitated silica, e.g., Nipsil manufactured by Nihon Silica Kogyo.

In particular when low-strength, high-elongation cured products are to be obtained using such fillers, fillers selected from titanium oxide, calcium carbonate, talc, ferric oxide, zinc oxide, shirasu balloons and the like may be added. Generally, calcium carbonate, when small in specific surface area, may not be so effective in improving the strength at break, elongation at break, adhesion and weather-resistant adhesion of cured products. As the specific surface area value increases, the effects of improving the strength at break, elongation at break, adhesion and weather-resistant adhesion become better.

Furthermore, calcium carbonate is more preferably surface-treated with a surface treating agent. When surface-treated calcium carbonate is used, it is expected that the workability of the curable composition of the present invention be improved and the effects of improving the adhesion and weather-resistant adhesion of the curable composition be more improved as compared with the use of non-surface-treated calcium carbonate. Useful as the surface treating agent are organic substances such as fatty acids, fatty acid soaps and fatty acid esters, various surfactants, and various coupling agents such as silane coupling agents and titanate coupling agents. Specific examples thereof include, but are not limited to, fatty acids such as caproic acid, caprylic acid, pelargonic acid, capric acid, undecanoic acid, lauric acid, myristic acid, palmitic acid, stearic acid, behenic acid and oleic acid, sodium, potassium and other salts of such fatty acids, and alkyl esters of such fatty acids. Specific examples of the surfactants include sulfate ester type anionic surfactants such as polyoxyethylene alkyl ether sulfate esters and long-chain alcohol sulfate esters, and sodium, potassium and other salts thereof, sulfonic acid type anionic surfactants such as alkylbenzenesulfonic acids, alkylnaphthalenesulfonic acids, paraffinsulfonic acids, α-olefinsulfonic acids and alkylsulfosuccinic acid, and sodium, potassium and other salts thereof, and the like. In the surface treatment, the surface treating agent is used in an amount preferably in the range of 0.1 to 20% by weight, more preferably in the range of 1 to 5% by weight, relative to calcium carbonate. When the amount for treatment is smaller than 0.1 % by weight, the effects of improving the workability, adhesion and weather-resistant adhesion maybe insufficient, and when it exceeds 20% by weight, the storage stability of the curable composition may decrease.

When calcium carbonate is used in expectation of producing the effects of improving the thixotropic properties of the curable composition and the strength at break, elongation at break, adhesion, weather-resistant adhesion and the like of the cured product, in particular, precipitated calcium carbonate is preferably used, although this does not mean any particular restriction.

On the other hand, ground calcium carbonate is sometimes added for the purpose of reducing the viscosity of the curable composition, increasing the weight thereof and reducing the cost, for example. When ground calcium carbonate is used, such species as mentioned below can be used if necessary.

Ground calcium carbonate is prepared from natural chalk, marble, limestone or the like by mechanical grinding/processing. The method of grinding includes the dry method and wet method. Wet ground products are unfavorable in many cases since they often deteriorate the storage stability of the curable composition of the present invention. Upon classification, ground calcium carbonate gives various products differing in average particle size. In cases where the effects of improving the strength at break, elongation at break, adhesion and weather-resistant adhesion of the cured product are expected, the specific surface area value is preferably not less than 1.5 m²/g and not more than 50 m²/g, more preferably not less than 2 m²/g and not more than 50 m²/g, still more preferably not less than 2.4 m²/g and not more than 50 m²/g, most preferably not less than 3 m²/g and not more than 50 m²/g, although this does not mean any particular restriction. When the specific surface area is smaller than 1.5 m²/g, those improving effects may be insufficient. Of course, the above does not apply to the cases where it is only intended to reduce the viscosity and/or increase the weight.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a model SS-100 specific surface area measuring apparatus manufactured by Shimadzu Corporation.

Those fillers may be used singly or two or more of them may be used in combination according to the intended purpose or necessity. For example, the combined use, according to need, of ground calcium carbonate having a specific surface area value of not smaller than 1.5 m²/g and precipitated calcium carbonate is fully expected to suppress the viscosity increase in the curable composition to a moderate level and produce the effects of improving the strength at break, elongation at break, adhesion and weather-resistant adhesion of cured products, although this does not mean any particular restriction.

When a filler is used, the filler is preferably used in an amount in the range of 5 to 1,000 parts by weight, more preferably in the range of 20 to 500 parts by weight, particularly preferably in the range of 40 to 300 parts by weight, per 100 parts by weight of the vinyl-based polymers (I) and (II). When the amount of the filler compounded is lower than 5 parts by weight, the effects of improving the strength at break, elongation at break, adhesion and weather-resistant adhesion may be insufficient, and when the amount exceeds 1,000 parts by weight, the workability of the curable composition may deteriorate. Those fillers may be used singly or two or more of them may be used in combination.

### <Hollow Microsphere>

Furthermore, for the purpose of reducing the weight and cost without causing significant deteriorations in physical properties, hollow microspheres may be used in combination with such a reinforcing filler as mentioned above.

Such hollow microspheres (hereinafter referred to as "balloons") are not particularly limited but include, for example, hollow spheres constituted of an inorganic or organic material and having a diameter of not greater than 1 mm, preferably not greater than 500 µm, more preferably not greater than 200 µm, as described in "Kinosei Fira no Saishin Gijutsu (Latest Technology of Functional Fillers)" (CMC Publishing CO., LTD). In particular, hollow microspheres having a true specific gravity of not higher than 1.0 g/cm³ are preferably used, and more preferably, hollow microspheres having a true specific gravity of not higher than 0.5 g/cm³ are used.

The inorganic balloons include silicic balloons and non-silicic balloons. Examples of the silicic balloons are shirasu balloons, perlite, glass balloons, silica balloons, fly ash balloons and the like, and examples of the non-silicic balloons are alumina balloons, zirconia balloons, carbon balloons and the like. Commercially available as specific examples of such inorganic balloons are Winlite manufactured by Idichi Kasei and Sankilite manufactured by Sanki Kogyo Co., Ltd. (shirasu balloons), Caloon manufactured by Nippon Sheet Glass Co., Ltd., Cel-Star Z-28 manufactured by Sumitomo 3M Limited, Micro Balloon manufactured by Emerson & Cuming Company, Celamic Glassmodules manufactured by Pittsburgh Corning Corporation and Glass Bubbles manufactured by Sumitomo 3M Limited (glass balloons), Q-Cel manufactured by Asahi Glass Co., Ltd and E-Spheres manufactured by Taiheiyo Cement Corporation (silica balloons), Cerospheres manufactured by Pfamarketing and Fillite manufactured by Fillite U. S. A. (fly ash balloons), BW manufactured by Showa Denko K. K. (alumina balloons), Hollow Zirconium Spheres manufactured by Zircoa Inc. (zirconia balloons), and Kurekasphere manufactured by Kureha Chemical Industry and Carbosphere manufactured by General Technologies Inc. (carbon balloons).

The organic balloons include thermosetting resin balloons and thermoplastic resin balloons. Examples of the thermosetting resin balloons are phenol balloons, epoxy balloons and urea balloons, and examples of the thermoplastic balloons are Saran balloons, polystyrene balloons, polymethacrylate balloons, polyvinyl alcohol balloons and styrene-acrylic type balloons. Crosslinked thermoplastic resin balloons can also be used. The balloons so referred to herein may be balloons after expansion or balloons produced by expansion following incorporation of a blowing agent-containing resin.

Specific examples of such organic balloons which are commercially available include Ucar and Phenolic Microballoons manufactured by Union Carbide Corporation (phenol balloons), Eccospheres manufactured by Emerson & Cuming Company (epoxy balloons), Eccospheres VF-O manufactured by Emerson & Cuming Company (urea balloons), Saran Microspheres manufactured by Dow Chemical Company, Expancel manufactured by Nippon Filament and Matsumoto Microspheres manufactured by Matsumoto Yushi Seiyaku Co., Ltd. (Saran balloons), Dylite Expandable Polystyrene manufactured by Arco Polymers Inc. and Expandable Polystyrene Beads manufactured by BASF-Wyandotte (polystyrene balloons), and SX863(P) manufactured by JSR Corporation (crosslinked styrene-acrylic acid balloons).

The above-mentioned balloon species may be used singly or two or more of them may be used in admixture. Furthermore, those balloons surface-treated with a fatty acid, a fatty acid ester, rosin, rosin acid lignin, a silane coupling agent, a titan coupling agent, an aluminum coupling agent, polypropylene glycol or the like for improving the dispersibility and the workability of the curable composition may also be used. These balloons are used for reducing the weight and cost without impairing the flexibility and elongation/strength among the physical properties after curing of the formulations containing them.

The balloon content is not particularly limited, but the balloons can be used preferably in an amount in the range of 0.1 to 50 parts by weight, more preferably 0.1 to 30 parts by weight, per 100 parts by weight of the vinyl-based polymers (I) and (II). When this amount is smaller than 0.1 parts by weight, the weight-reducing effect is slight, and when it exceeds 50 parts by weight, decreases in tensile strength, among the mechanical properties after curing of the balloon-containing curable composition, are observed in some instances. When the balloons have a specific gravity of not lower than 0.1, the amount is preferably 3 to 50 parts by weight, more preferably 5 to 30 parts by weight.

### <Physical Property Modifier>

The curable composition for damping materials of the present invention may be compounded if necessary with a physical property modifier capable of adjusting the tensile properties of the resulting cured products.

The physical property modifiers are not particularly limited but include, for example, alkylakoxysilanes such as methyltrimethoxysilane, dimethyldimethoxysilane, trimethylmethoxysilane and n-propyltrimethoxysilane; alkylisopropenoxysilanes such as dimethyldiisopropenoxysilane, methyltriisopropenoxysilane, γ-glycidoxypropylmethyldiisopropenoxysilane, functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone varnishes; polysiloxanes; and the like. By using the above-mentioned physical property modifier, it is possible to increase the hardness of the cured products after curing of the curable composition of the present invention or decrease such hardness and attain extensibility. Such physical property modifiers as mentioned above may be used singly or two or more of them may be used in combination.

### <Silanol-Containing Compound>

A silanol-containing compound may optionally be added to the curable composition for damping materials according to the present invention, in order to change, for example, the physical properties of the cured product. The silanol-containing compound refers to a compound having one silanol group in its molecule and/or a compound capable of forming a compound having one silanol group in its molecule by reaction with moisture. When these compounds are used, only one of the above two compounds may be used, or both of them may be used simultaneously.

The compound having one silanol group in its molecule is not particularly limited. The compound includes compounds which can be represented by the formula (R")₃SiOH (wherein R"s are the same or different kind of substituted or unsubstituted alkyl or aryl group), for example, the following compounds:
(CH₃)₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂ Si(CH₃)OH, (C₆H₅)Si(CH₃)₂OH, (C₆H₅)₂Si(C₂H₅)OH, C₆H₅Si(C₂H₅)₂OH, C₆H₅CH₂Si(C₂H₅)₂OH, C₁₀H₇Si(CH₃)₂OH
(wherein C₆H₅ represents a phenyl group and C₁₀H₇ represents a naphthyl group);
silanol group-containing cyclic polysiloxanes compounds, for example, the following compounds: 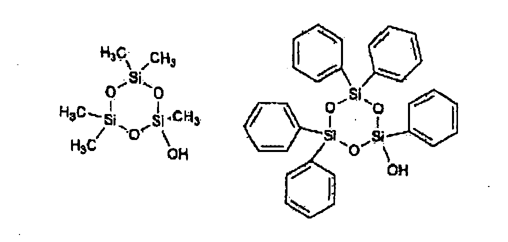 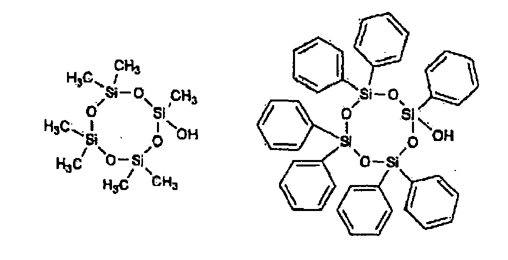 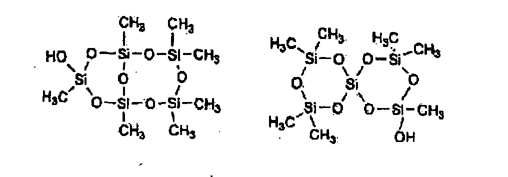 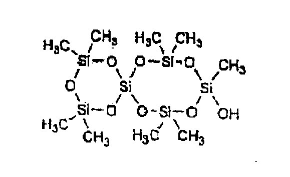 silanol group-containing chain polysiloxanes compounds, for example, the following compounds: 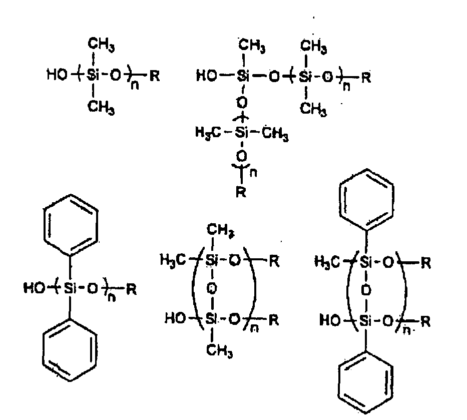 (wherein R represents a hydrocarbon group having 1 to 10 carbon atoms, and n is an integer of 1 to 20);
compounds the polymer main chain of which is composed of silicon and carbon and in which a silanol group is bonded at the terminus, for example, the following compounds: 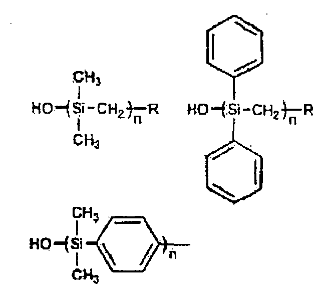 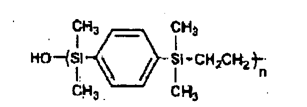 (wherein R represents a hydrocarbon group having 1 to 10 carbon atoms, and n is an integer of 1 to 20);
compounds in which a silanol group is bonded to the main chain of polysilane at a terminus, for example, the following compounds: 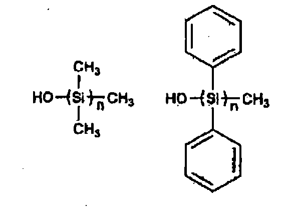 (wherein R represents a hydrocarbon group having I to 10 carbon atoms, and n is an integer of 1 to 20); and
compounds the polymer main chain of which is composed of silicon, carbon and oxygen and in which a silanol group is bonded at the terminus, for example, the following compounds: 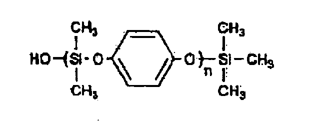 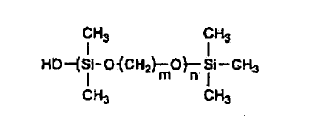 (wherein n is an integer of 1 to 20, and m is an integer of 1 to 20).

Among them, the compounds represented by the following formula (45) are preferred.

(R⁵⁸)₃SiOH (45)

(wherein R⁵⁸ represents a monovalent hydrocarbon group having 1 to 20 carbon atoms, and a plurality of R⁵⁸ may be the same or different).

R⁵⁸ is preferably a methyl group, an ethyl group, a vinyl group, a t-butyl group or a phenyl group, more preferably a methyl group.

R⁵⁸ is particularly preferably (CH₃)₃SiOH or the like, of which the molecular weight is small, in view of ready availability and effects.

It is presumed that when a vinyl-based polymer having a crosslinkable silyl group is used, the flexibility of a cured product is given by a reaction of a compound having one silanol group in its molecule with the crosslinkable silyl group of the vinyl-based polymer or a siloxane bond formed by crosslinking, to thereby reduce crosslinking points.

The compounds capable of forming a compound having one silanol group in its molecule by reaction with moisture, which can be used for the curable composition of the present invention, are not particularly limited, but it is preferable that compounds in which the compound having one silanol group in its molecule formed by reaction with moisture (the compound is a hydrolysis product) are represented by the general formula (45). For example, the following compounds may be mentioned in addition to the compounds represented by the general formula (46) shown later. However, these are not particularly limitative.

Such compounds which may be suitably used are N,O-bis(trimethylsilyl)acetamide, N-(trimethylsilyl)acetamide,
bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, (CH₃)₃SiNHSi(CH₃)₃, (CH₃)₃SiNSi(CH₃)₂, and the following compounds:

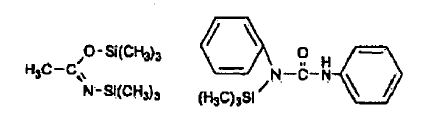

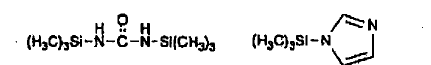

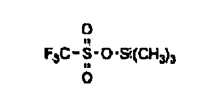

Among them, (CH₃)₃SiNHSi(CH₃)₃ is particularly preferred in view of an amount of contained silanol groups in a hydrolysis product.

Furthermore, compounds capable of forming a compound having one silanol group in its molecule by reaction with moisture, which can be used for the curable composition of the present invention, are not particularly limited, but the compounds represented by the following general formula (46) are preferred in addition to the above compounds:

((R⁵⁸)₃SiO)ₙR⁵⁹ (46)

(wherein R⁵⁸ is as defined above; n represents a positive number, and R⁵⁹ represents a group exclusive of a part of or all of active hydrogen from an active hydrogen-containing compound).

R⁵⁸ is preferably a methyl group, an ethyl group, a vinyl group, a t-butyl group or a phenyl group, more preferably a methyl group.

The (R⁵⁸)₃Si group is preferably a trimethylsilyl group in which all three R⁵⁸s are methyl groups, and n is preferably 1 to 5.

Active hydrogen-containing compounds, which are origins of the above R⁵⁹, include, but are not limited to, alcohols such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerin, trimethylolpropane and pentaerythritol; phenols such as phenol, cresol, bisphenol A and hydroquinone; carboxylic acids such as formic acid, acetic acid, propionic acid, lauric acid, palmitic acid, stearic acid, behenic acid, acrylic acid, methacrylic acid, oleic acid, linolic acid, linolenic acid, sorbic acid, oxalic acid, malonic acid, succinic acid, adipic acid, maleic acid, benzoic acid, phthalic acid, terephthalic acid and trimellitic acid; ammonia; amines such as methylamine, dimethylamine, ethylamine, diethylamine, n-butylamine and imidazole; acid amides such as acetamide and benzamide; ureas such as urea and N,N'-diphenylurea; and ketones such as acetone, acetylacetone and 2,4-heptadione.

Although it is not particularly limited, a compound capable of forming a compound having one silanol group in its molecule by reaction with moisture, represented by the above general formula (46), is obtainable by, for example, subjecting the above-mentioned active hydrogen-containing compound or the like to the reaction with the compound having a group capable of reacting with the active hydrogen such as a halogen group, together with a (R⁵⁸)₃Si group also referred to as a "silylating agent" such as trimethylsilyl chloride or dimethyl(t-butyl)chloride. In the above description, R⁵⁸ is the same as defined above.

The compounds represented by the general formula (46) include, but are not limited to, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bis(trimethylsilyl)urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3,-tetramethyldisilazane, N-(trimethylsilyl)imidazole, trimethylsilyltrifluoromethanesulfonate, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, and the like. These may be used singly or in combination of two or more.

Additionally, the compounds which may be represented by the general formula

(((R⁶⁰)₃SiO)(R⁶¹O)₆)ₜZ,

CH₃O(CH₂CH(CH₃)O)₅Si(CH₃)₃,

CH₂ = CHCH₂(CH₂CH(CH₃)O)₃Si(CH₃)₃,

(CH₃)₃SiO(CH₂CH(CH₃)O)₅Si(CH₃)₃,

(CH₃)₃SiO(CH₂CH(CH₃)O)₇Si(CH₃)₃

(wherein R⁶⁰ represents the same or different kind of substituted or unsubstituted monovalent hydrocarbon group or a hydrogen atom; R⁶¹ is a divalent hydrocarbon group having 1 to 8 carbon atoms; s and t are positive integers, s is 1 to 6, and s times t is not less than 5; and Z is a mono- to hexa-valent organic group), are also suitably used. These may be used singly or in combination of two or more.

Among the compounds capable of forming a compound having one silanol group in its molecule by reaction with moisture, the active hydrogen-containing compounds formed after hydrolysis are preferably phenols, acid amides and alcohols since there are no adverse effects on storage stability, weather resistance or the like. More preferred are phenols and alcohols in which the active hydrogen-containing compound is a compound having a hydroxyl group.

Among the above compounds, preferred are N,O-bis(trimethylsilyl)acetamide, N-(tnmethylsilyl)acetamide, trimethylsilylphenoxide, trimethylsilylated product of n-octanol, trimethylsilylated product of 2-ethylhexanol, tris(trimethylsilyl)ated product of glycerin, tris(trimethylsilyl)ated product of trimethylolpropane, tris(trimethylsilyl)ated product of pentaerythritol, tetra(trimethylsilyl)ated product of pentaerythritol, and the like.

The compounds capable of forming a compound having one silanol group in its molecule by reaction with moisture produces the compound having one silanol group in its molecule by reacting with moisture during storage or during or after curing. It is presumed that when a vinyl-based polymer having a crosslinkable silyl group is used, the flexibility of a cured product is given by reaction of the thus formed compound having one silanol group in its molecule with the crosslinkable silyl group of the vinyl-based polymer or a siloxane bond formed by crosslinking, to thereby reduce crosslinking points.

The amount of the silanol-containing compound added can be properly adjusted depending on the expected physical properties of the cured product. The amount of the silanol-containing compound added is 0.1 to 50 parts by weight, preferably 0.3 to 20 parts by weight, still more preferably 0.5 to 10 parts by weight, per 100 parts by weight of the vinyl-based polymers (I) and (II). When the amount is below 0.1 parts by weight, the effect of the compound added may not appear, and on the contrary, when it exceeds 50 parts by weight, crosslinking may be insufficient, and strength or gel fraction of the cured product is extremely decreased.

The time to add the silanol-containing compound into the vinyl-based polymers (I) and (II) is not particularly limited, but it may be added in the production process of the vinyl-based polymers (I) and (II), or may be added in the preparation process of the curable composition.

### <Thixotropic Agent (Antisagging Agent)>

If necessary, a thixotropic agent (antisagging agent) may be added to the curable composition for damping materials according to the present invention to prevent sagging and improve the workability.

By way of example, the antisagging agents include, but are not limited to, hydrogenated castor oil derivatives; metal soaps such as calcium stearate, aluminum stearate and barium stearate, and the like. These thixotropic agents (antisagging agents) may be used singly or two or more of them may be used in combination.

### <Photocurable Substance>

If necessary, a photocurable substance may be added to the curable composition for damping materials according to the present invention. The photocurable substance is a substance whose molecular structure undergoes a chemical change in a short time under the action of light and which thus causes changes in physical properties such as curing. By adding such photocurable substance, it becomes possible to reduce the tackiness (residual tack) of the cured product surface after curing of the curable composition. This photocurable substance is a substance capable of curing upon irradiation with light. A typical photocurable substance is a substance capable of curing when allowed to stand at an indoor place in the sun (near a window) at room temperature for 1 day, for example. A large number of compounds of this type are known, including organic monomers, oligomers, resins, and compositions containing any of them, and they are not particularly limited in kind, and include, for example, unsaturated acrylic compounds, vinyl cinnamate polymers, azidated resins and the like.

The unsaturated acrylic compound is a monomer or oligomer having an unsaturated group represented by the general formula (47) below or a mixture thereof;

CH₂ = CHR⁶²CO(O) - (47)

(wherein R⁶² represents hydrogen, an alkyl group having 1 to 10 carbon atoms, an aryl group having 6 to 10 carbon atoms, or an aralkyl group having 7 to 10 carbon atoms).

Specifically, the unsaturated acrylic compounds include (meth)acrylates of low-molecular-weight alcohols such as ethylene glycol, glycerol, trimethylolpropane, pentaerythritol and neopentyl alcohol; (meth)acrylates of alcohols derived from acids such as bisphenol A, acids such as isocyanuric acid or such low-molecular-weight alcohols as mentioned above by modification with ethylene oxide and/or propylene oxide; (meth)acrylate esters of hydroxyl-terminated polyether polyols whose main chain is a polyether, polymer polyols obtained by radical polymerization of a vinyl-based monomer(s) in a polyol whose main chain is a polyether, hydroxyl-terminated polyester polyols whose main chain is a polyester, and polyols whose main chain is a vinyl or (meth)acrylic polymer and which have hydroxyl groups in the main chain; epoxy acrylate oligomers obtained by reacting a bisphenol A-based, novolak type or other epoxy resin with (meth)acrylic acid; urethane acrylate type oligomers containing urethane bonds and (meth)acryl groups in the molecular chain as obtained by reacting a polyol, a polyisocyanate and a hydroxyl group-containing (meth)acrylate; and the like.

The vinyl cinnamate polymers are photosensitive resins whose cinnamoyl groups function as photosensitive groups, and include cinnamic acid-esterified polyvinyl alcohols and various other polyvinyl cinnamate derivatives.

The azidated resins are known as photosensitive resins with the azido group serving as a photosensitive group and generally include photosensitive rubber solutions with an azide compound added as a photosensitizing agent, and detailed examples are found in "Kankosei Jushi (Photosensitive Resins)" (published on Mar. 17, 1972 by Insatsu Gakkai Shuppanbu, pages 93 ff, 106 ff, 117 ff). These can be used either singly or in admixture with a sensitizer added if necessary.

Among the photocurable substances mentioned above, unsaturated acrylic compounds are preferred in view of their easy handleability.

The photocurable substance is preferably added in an amount of 0.01 to 20 parts by weight per 100 parts by weight of the vinyl-based polymers (I) and (II). At addition levels below 0,01 parts by weight, the effects will be insignificant, and at levels exceeding 20 parts by weight, the physical properties may be adversely affected. The addition of a sensitizer such as a ketone or nitro compound or a promoter such as an amine can enhance the effects in some instances.

### <Air Oxidation-Curable Substance>

An air oxidation-curable substance may be added if necessary to the curable composition for damping materials according to the present invention. The air oxidation-curable substance is a compound containing an unsaturated group capable of being crosslinked for curing by oxygen in the air. By adding such air oxidation-curable substance, it becomes possible to reduce the tack (also referred as residual tack) of the cured product surface on the occasion of curing of the curable composition. The air oxidation-curable substance in the present invention is a substance capable of curing upon contacting with air, and more specifically has a property of being cured as a result of reaction with oxygen in the air. A typical air oxidation-curable substance can be cured upon allowing it to stand in the air in a room for 1 day, for example.

Specific examples of the air oxidation-curable substance include, for example, drying oils such as tung oil and linseed oil; various alkyd resins obtained by modification of such drying oils; drying oil-modified acrylic polymers, epoxy resins, and silicone resins; 1,2-polybutadiene, 1,4-polybutadiene, C5-C8 diene-based polymers and copolymers, and various modifications of such polymers and copolymers (e.g. maleinated modifications, boiled oil modifications); and the like. Among these, tung oil, liquid ones among the diene-based polymers (liquid diene-based polymers) and modifications thereof are particularly preferred.

Specific examples of the liquid diene-based polymers include, for example, liquid polymers obtained by polymerization or copolymerization of diene-based compounds such as butadiene, chloroprene, isoprene and 1,3-pentadiene, polymers such as NBR and SBR obtained by copolymerization of such diene-based compounds (as main components) with a monomer copolymerizable therewith such as acrylonitrile or styrene, and various modification thereof (e.g. maleinated modifications, boiled oil modifications, and the like). These may be used singly or two or more of them may be used in combination. Among these liquid diene-based polymers, liquid polybutadiene is preferred.

The air oxidation-curable substances may be used singly or two or more of them may be used in combination. The use of a catalyst capable of promoting the oxidation curing or a metal drier in combination with the air oxidation-curable substance can enhance the effects in certain instances. Such catalysts or metal driers include, for example, metal salts such as cobalt naphthenate, lead naphthenate, zirconium naphthenate, cobalt octylate and zirconium octylate, amine compounds, and the like.

The air oxidation-curable substance is preferably added in an amount of 0.01 to 20 parts by weight per 100 parts by weight of the vinyl-based polymers (I) and (II). At levels below 0.01 parts by weight, the effects will be insignificant, and at levels exceeding 20 parts by weight, the physical properties may be adversely affected.

### <Antioxidant>

An antioxidant may be added if necessary to the curable composition for damping materials according to the present invention. Various antioxidants are known and include, but are not limited to, those described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Publishing CO., LTD.

Specific examples of the antioxidants include thioether-based antioxidants such as MARK PEP-36 and MARK AO-23 (both manufactured by Adeka Argus Chemical Co., Ltd.); and phosphorus-based antioxidants such as Irgafos 38, Irgafos 168, and Irgafos P-EPQ (all manufactured by Japan Ciba-Geigy). In particular, the hindered phenol compounds below are preferred.

Specific examples of the hindered phenol compounds include 2,6-di-tert-butyl-4-methylphenol, 2,6-di-tert-butyl-4-ethylphenol, mono(di or tri) (α-methylbenzyl)phenol, 2,2'-methylenebis(4-ethyl-6-tert-butylphenol), 2,2'-methylenebis(4-methyl-6-tertbutylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis-[3-(3-tert-butyl-5-methyl-4-hydraxyphenyl)propionate], 1,6-hexanediol-bis[3-(3,5-di-tert-butyl-4-hydroxyphenyl)propionate], 2,4-bis-(n-octylthio)-6-(4-hydroxy-3,5-di-tert-butylanilino)-1,3,5-triazine, pentaerythrityl-tetrakis[3-(3,5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-tert-butyl-4-hydroxy-hydrocinnamide), 3,5-di-tert-butyl-4-hydroxy-benzylphosphonate diethyl ester, 1,3,5-trimethyl-2,4,6-tris(3,5-di-tert-butyl-4-hydroxybenzyl)benzene, bis(3,5-di-tert-butyl-4-hydroxybenzylphosphonate ethyl)calcium, tris-(3,5-di-tert-butyl-4-hydroxybenzyl)isocyanurate, 2,4-2,4-bis[(octylthio)methyl]o-cresol, N,N'-bis[3-(3,5-di-tert-butyl-4-hydroxyphenyl)propionyl]hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4-hydroxyphenyl]propionate-polyethylene glycol (molecular weight: about 300) condensates, hydroxyphenylbenzotriazole derivatives, 2-(3,5-di-tert-butyl-4-hydroxybenzyl)-2-n-butylmalonate bis(1,2,2,6,6-pentamethyl-4-piperidyl), and 2,4-di-tert-butylphenyl-3,5-di-tert-butyl-4-hydroxybenzoate.

Examples of commercial products include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all manufactured by Ouchi Shinko Chemical Industries Co.); MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all manufactured by Adeka Argus Chemical Co., Ltd.); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all manufactured by Japan Ciba-Geigy); and Sumilizer GM and Sumilizer GA-80 (both manufactured by Sumitomo Chemical Co., Ltd.).

The antioxidant may be used in combination with a light stabilizer to be described later, and such combined use enhances the effects thereof and may improve the weather resistance and thus is particularly preferred. Such ready-made mixtures of an antioxidant and a light stabilizer as TINUVIN C353 and TINUVIN B75 (both are manufactured by Japan Ciba-Geigy) and the like may also be used.

The amount of the antioxidant added is preferably in the range of 0.1 to 10 parts by weight per 100 parts by weight of the vinyl-based polymers (I) and (II). At levels below 0.1 parts by weight, the weather resistance-improving effect is insignificant, while levels exceeding 10 parts by weight make no great difference in effect any longer and thus are economically disadvantageous.

### <Light Stabilizer>

A light stabilizer may be added if necessary to the curable composition for damping materials according to the present invention. Various light stabilizers are known and include, but are not limited to, those described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Chemical Publishing CO., LTD.

The light stabilizer used is not particularly limited, but ultraviolet absorbers are preferred among the light stabilizers. Specific examples thereof include, for example, benzotriazole-based compounds such as TINUVIN P, TINUVIN 234, TINUVIN 320, TINUVIN 326, TINUVIN 327, TINUVIN 329 and TINUVIN 213 (all are manufactured by Japan Ciba-Geigy), triazine-based compounds such as TINUVIN 1577, benzophenone-based compounds such as CHIMASSORB 81, benzoate-based compounds such as TINUVIN 120 (manufactured by Ciba Specialty Chemicals), and the like.

Additionally, hindered amine-based compounds are preferred, and such compounds include dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis[N-butyl-N-(1,2,2,6,6-pentamethyl-4-piperidyl)amino]-6-chloro-1,3,5-triazine condensate, bis(2,2,6,6-tetramethyl-4-piperidyl)sebacate, bis(2,2,6,6-tetramethyl-4-piperidinyl)succinate and the like.

Examples of the relevant product names include, but are not limited to, TINUVIN 622LD, TINUVIN 144 and CHIMASSORB 944LD, CHIMASSORB 119FL, Irganofos 168 (all are manufactured by Japan Ciba-Geigy), MARK LA-52, MARK LA-57, MARK LA-62, MARK LA-67, MARK LA-63, MARK LA-68, MARK LA-82 and MARK LA-87 (all are manufactured by Adeka Argus Chemical Co., Ltd.), and Sanol LS-770, Sanol LS-765, Sanol LS-292, Sanol LS-2626, Sanol LS-1114, Sanol LS-744 and Sanol LS-440 (all are manufactured by Sankyo Co., Ltd.), and the like.

An ultraviolet absorber and a hindered amine-based compound may be used in combination, and the combined use may produce enhanced effects, and therefore both may be used in combination without any particular restriction, and the combined use is sometimes favorable.

The light stabilizer may be used in combination with the antioxidant, and such combined use enhances the effects thereof and may improve the weather resistance and is thus particularly preferred. Such ready-made mixtures of an antioxidant and a light stabilizer as TINUVIN C353 and TINUVIN B75 (both are manufactured by Japan Ciba-Geigy) and the like may also be used.

The amount of the light stabilizer added is preferably in the range of 0.1 to 10 parts by weight per 100 parts by weight of the vinyl-based polymers (I) and (II). At levels below 0.1 parts by weight, the weather resistance-improving effect is insignificant, while levels exceeding 10 parts by weight make no great difference in effect any longer and are thus economically disadvantageous.

### <Release Agent>

If necessary, the curable composition of the present invention may further contain a release agent (metal soap).

The metal soap is not particularly limited but any arbitrary one can be used. The metal soap is generally one having a metal ion bound to a long-chain fatty acid, and any metal soap that has both a nonpolar or low-polarity moiety derived from a fatty acid and a polar moiety, namely the moiety binding to a metal, within each molecule can be used.

The long-chain fatty acid include, for example, saturated fatty acids having 1 to 18 carbon atoms, unsaturated fatty acids having 3 to 18 carbon atoms, and aliphatic dicarboxylic acids. Among these, saturated fatty acids having 1 to 18 carbon atoms are preferred from the viewpoint of availability, and saturated fatty acids having 6 to 18 carbon atoms are particularly preferred from the viewpoint of mold release characteristics.

The metal ion includes alkali metals (lithium, sodium, potassium), alkaline earth metals (magnesium, calcium, barium), zinc, lead, cobalt, aluminum, manganese and strontium ions.

More specific examples of the metal soap include lithium stearate, lithium 12-hydroxystearate, lithium laurate, lithium oleate, lithium 2-ethylhexanoate, sodium stearate, sodium 12-hydroxystearate, sodium laurate, sodium oleate, sodium 2-ethylhexanoate, potassium stearate, potassium 12-hydroxystearate, potassium laurate, potassium oleate, potassium 2-ethylhexanoate, magnesium stearate, magnesium 12-hydroxystearate, magnesium laurate, magnesium oleate, magnesium 2-ethylhexanoate, calcium stearate, calcium 12-hydroxystearate, calcium laurate, calcium oleate, calcium 2-ethylhexanoate, barium stearate, barium 12-hydroxystearate, barium laurate, barium ricinoleate, zinc stearate, zinc 12-hydroxystearate, zinc laurate, zinc oleate, zinc 2-ethylhexanoate, lead stearate, lead 12-hydroxystearate, cobalt stearate, aluminum stearate and manganese oleate.

Among those metal soaps, stearic acid metal salts are preferred from the viewpoint of availability and safety, and one or more species selected from the group consisting of calcium stearate, magnesium stearate and zinc stearate are most preferred particularly from the economical point of view.

The amount of the metal soap added is not particularly limited, but it is generally preferable that the metal soap be used in an amount in the range of 0.025 to 5 parts by weight, more preferably 0.05 to 4 parts by weight, per 100 parts by weight of the vinyl-based polymers (I) and (II). When the amount of the metal soap compounded exceeds 5 parts by weight, the cured products tend to show deteriorated physical properties, and when the amount is lower than 0.025 parts by weight, there is a tendency toward failure to attain the desired mold release characteristics.

### <Other Additives>

If necessary, various additives may be added to the curable composition for damping materials according to the present invention for the purpose of adjusting various physical properties of the curable composition or cured products. Such additives include, for example, flame retardants, antiaging agents, radical inhibitors, metal deactivators, antiozonants, phosphorus-containing peroxide decomposers, lubricants, pigments, blowing agents and the like. These various additives may be used singly or two or more of them may be used in combination.

Specific examples of such additives are described in, for example, JP-B 4-69659, JP-B 7-108928, JP-A 63-254149 and JP-A 64-22904.

A method of preparing the curable composition for damping materials according to the present invention is not particularly limited, but the composition is preferably prepared as a one-component formulation, which is to be cured by the moisture in the air after application, by compounding all the components/ingredients and tightly sealing for storage, or as a two-component formulation by separately preparing a curing agent by compounding a curing catalyst, a filler, a plasticizer, water and the like, so that such composition and the polymer composition may be mixed together prior to use. In the case of such two-component type, a colorant or colorants can be added on the occasion of mixing of the two components. By mixing the colorant or colorants, for example a pigment or pigments, with a plasticizer and/or a filler, as the case may be, and using the thus-prepared paste, it becomes possible to facilitate the working process. Furthermore, it is possible to finely adjust the curing rate on a working site by adding a retarder on the occasion of mixing up the two components.

### <<Cured Product>>

The curable composition for damping materials according to the present invention can exhibit the maximum value of loss tangent (tan δ) in dynamic viscoelastic characteristics of a rubber-like substance obtained by curing the composition; that is, tan δ at the glass transition point (Tg) can be 0.7 or more. The temperature range in which the cured product of only the vinyl-based polymer (I) shows tan δ ≥ 0.7 is in the vicinity of Tg, while the curable composition for damping materials according to the present invention can exhibit tan δ ≥ 0.7 in a broader temperature range, and can be expected to function as a damping material and a shock absorber in a wide temperature range. When the maximum value of loss tangent (tan δ) of the resulting cured product (rubber-like substance) is less than 0.7, the degree of elongation of the cured product may not be secured, and simultaneously the vibrational absorption tends to be insufficient. The maximum value of loss tangent (tan δ) is more preferably 1.0 or more, still more preferably 1.5 or more.

As used herein, the rubber-like substance refers to a substance generally showing elastic deformation (rubber elasticity) in the temperature range of ordinary temperature (23°C) or more. In the case of a usual rubber-like substance, Tg (glass transition temperature) is ordinary temperature or less in many cases.

### <Use>

The use of the curable composition for damping materials according to the present invention includes, but is not limited to, use as a damping material for electric and electronic devices such as a stepping motor, a magnetic disk, a hard disk, a dish washer, a drying machine, a laundry machine, a fan heater, a sewing machine, an automatic vending machine, a speaker frame, a BS antenna and a VTR cover; use as a damping material for constructions such as a roof, a floor, a shutter, a curtain rail, flooring, a pipe duct, a deck plate, a curtain wall, stairs, a door, an aseismic isolator, and constructional materials; use as a damping material in ships such as an engine room and an instrumentation room; use as a damping material in automobiles such as an engine (an oil pan, a front cover, a locker cover), an automobile body (a dashboard, a floor, a door, a roof, a panel, a wheel house), a transmission, a parking brake cover, and a sheet back; use as a damping material in cameras and office machines such as a TV camera, a copier, a computer, a printer, a register and a cabinet; use as a damping material for industrial machines such as a shooter, an elevator, an escalator, a conveyor, a tractor, a bulldozer, a dynamo, a compressor, a container, a hopper, a soundproof box, and a motor cover for a mowing machine; use as a damping material for railway such as a rail vehicle roof, a lateral plate, a door, an under-floor, and a cover for various auxiliary machines, a bridge and the like; and use as a damping material for semiconductors such as a vibration-free accurate device.

### Examples

Although examples and comparative examples of the present invention will be described in the following,

In the examples and comparative examples below, "parts" and "%" represent "parts by weight" and "% by weight", respectively. In the Examples, "triamine" refers to pentamethyldiethylene triamine.

In the examples below, "number-average molecular weight" and "molecular-weight distribution (ratio of the weight-average molecular weight to the number-average molecular weight)" were calculated by a standard polystyrene calibration method using gel permeation chromatography (GPC). In GPC measurement, polystyrene-crosslinked gel columns (Shodex GPC K-804, K-802.5; manufactured by Showa Denko K. K.) and chloroform were used as a GPC column and a GPC solvent, respectively.

### Production Example 1

### (Method of producing an n-butyl acrylate polymer having an alkenyl group at both termini)

CuBr (1.09 kg), acetonitrile (11.4 kg), n-butyl acrylate (26.0 kg) and diethyl 2,5-dibromoadipate (2.28 kg) were added to a nitrogen-substituted 250-L reactor equipped with a stirrer and a jacket, and the mixture was stirred at 70°C for about 30 minutes. Triamine (43.9 g) was added to initiate the reaction. n-Butyl acrylate (104 kg) was continuously added dropwise during the reaction. While n-butyl acrylate was added dropwise, triamine (176 g) was added in portions. Four hours after the reaction was initiated, the mixture was stirred under heating at 80°C under reduced pressure, thereby evaporating the unreacted monomer and acetonitrile. Acetonitrile (45.7 kg), 1,7-octadiene (14.0 kg) and triamine (439 g) were added to the concentrate, and the mixture was stirred for 8 hours. The mixture was stirred under heating at 80°C under reduced pressure, thereby evaporating acetonitrile and the unreacted 1,7-octadiene, to concentrate the polymer. Toluene (130 kg) was added to the concentrate, to dissolve the polymer. Solid copper in the polymer mixture was filtered off with a bug filter (with a nominal filter fabric pore diameter of 1 µm, manufactured by HAYWARD). Kyoward 500SH (product of Kyowa Chemical; 0.5 parts by weight relative to 100 parts by weight of the polymer) and Kyoward 700SL (product of Kyowa Chemical; 0.5 parts by weight relative to 100 parts by weight of the polymer) were added thereto, and the mixture was stirred under heating at 100°C for 3 hours in a mixed gas atmosphere of oxygen and nitrogen (oxygen concentration 6%). Insolubles in the mixture were separated by filtration. The filtrate was concentrated to give the polymer. The polymer was heated at 180°C for 12 hours (reduced pressure at 10 torr or less) for removing volatile components, whereby Br groups were eliminated from the polymer.

Toluene (100 parts by weight relative to 100 parts by weight of the polymer), Kyoward 500SH (product of Kyowa Chemical; 1 part by weight relative to 100 parts by weight of the copolymer), Kyoward 700SL (product of Kyowa Chemical; 1 part by weight relative to 100 parts by weight of the polymer) and a hindered phenol-based antioxidant (0.01 part of Irganox 1010, Ciba Specialty Chemicals) were added to the polymer, and the mixture was stirred under heating at 150°C for 4 hours in a mixed gas atmosphere of oxygen and nitrogen (oxygen concentration 6%). Insolubles in the mixture were separated by filtration. The filtrate was concentrated to give an alkenyl group-terminated n-butyl acrylate polymer [P1].

The number-average molecular weight of the polymer [P1] was 24300, and the molecular-weight distribution was 1.2. The average number of alkenyl groups introduced per molecule of the polymer, as determined by ¹H NMR analysis (400 MHz-NMR; the polymer was dissolved in CDCl₃ and measured at 23°C with an apparatus AMX-400 manufactured by Bruker), was 1.8.

### Production Example 2

### (Method of producing an n-butyl acrylate polymer having a crosslinkable silyl group at both termini)

The polymer [P 1] (65 kg), dimethoxymethylhydrosilane (1.1 kg), methyl o-formate (0.55 kg) and a solution of a platinum(0)-1,1,3,3-tetramethyl-1,3-divinyldisiloxane complex in xylene (10 mg in terms of platinum relative to 1 kg of the polymer) were added to a 140-L reactor pressure-resistant reaction container equipped with a stirrer and a jacket. In a nitrogen atmosphere, the mixture was stirred by heating at 100°C for 1 hour. Volatiles in the mixture were distilled away under reduced pressure, whereby a crosslinkable silyl group-terminated n-butyl acrylate polymer ([P2]) was obtained. The number-average molecular weight of the resulting polymer [P2] as determined by GPC measurement (polystyrene equivalent) was 24600, and the molecular-weight distribution was 1.3. The average number of silyl groups introduced per molecule of the polymer, as determined by ¹H NMR analysis, was 1.8.

### Production Example 3

### (Method of producing an n-butyl acrylate polymer having a crosslinkable silyl group at both termini)

The inside of a stainless steel reaction container equipped with a stirrer was deoxidized and then charged with cuprous bromide and a part (initially charged monomer) of whole butyl acrylate, and the mixture was heated under stirring. Acetonitrile and an initiator diethyl 2,5-dibromoadipate were added to, and mixed with, the mixture, and when the temperature of the mixture was regulated to about 80°C, pentamethyldiethylene triamine (abbreviated hereinafter as triamine) was added to initiate the polymerization reaction. The remaining butyl acrylate was added successively to proceed the polymerization reaction. During the polymerization, additional triamine was added properly to regulate the polymerization rate. The internal temperature was increased due to the polymerization heat with the progress of the polymerization, and thus the internal temperature was regulated to about 80°C to about 90°C, to proceed the polymerization. When the degree of conversion of the monomer (polymerization reaction rate) was about 95% or more, volatile components were removed by evaporation under reduced pressure, whereby a polymer concentrate was obtained.

The starting materials used: the initiator, 3.51 kg; n-butyl acrylate (deoxidized monomer), 100 kg; the initially charged monomer, 40 kg; the additionally added monomer, 60 kg; CuBr, 0.84 kg; triamine (total amount), 0.15 kg; acetonitrile, 8.79 kg

1,7-Octadiene (abbreviated hereinafter as diene or octadiene) and acetonitrile were added to the above concentrate, and additional triamine was added. While the internal temperature was regulated to about 80°C to about 90°C, the mixture was stirred under heating for several hours, to react the terminal of the polymer with octadiene. Acetonitrile and unreacted octadiene were removed by evaporation under reduced pressure, whereby a concentrate containing a polymer having an alkenyl group at the terminus was obtained.

The starting materials used: acetonitrile, 35 kg; octadiene, 21 kg; triamine, 0.68 kg

The concentrate was diluted with toluene, and a filtering assistant, adsorbents (Kyoward 700SEN manufactured by Kyowa Chemical) and hydrotalcite (Kyoward 500SH manufactured by Kyowa Chemical) were added thereto, and the mixture was stirred under heating to about 80 to 100°C, and solid components were separated by filtration. The filtrate was concentrated to give a partially purified polymer.

The partially purified polymer, a heat stabilizer (Sumilizer GS manufactured by Sumitomo Chemical Co., Ltd.) and adsorbents (Kyoward 700SEN, Kyoward 500SH) were added thereto, and the mixture was heated under stirring and evaporated under reduced pressure to remove volatile components, and stirred under heating at a high temperature of about 170°C to about 200°C for several hours, to remove volatile components under reduced pressure. Adsorbents (Kyoward 700SEN, Kyoward 500SH) were additionally added, and toluene in an amount of about 10 parts by weight based on 1 part by weight of the polymer was added thereto, and the mixture was further stirred under heating at a high temperature of about 170°C to about 200°C for several hours.

The treated solution was diluted with toluene, and the adsorbents were separated by filtration. The filtrate was concentrated to give a polymer having an alkenyl group at both termini.

The polymer having an alkenyl group obtained by the method described above, dimethoxymethylsilane (referred to hereinafter as DMS: 2.0 mole equivalents to the alkenyl group), methyl o-formate (1.0 mole equivalent to the alkenyl group), and a platinum catalyst [a solution of a bis-(1,3-divinyl-1,1,3,3-tetramethyldisiloxane) platinum catalyst complex in isopropanol: hereinafter referred to as platinum catalyst] (10 mg in terms of platinum relative to 1 kg of the polymer) were mixed with one another, and the mixture was stirred under heating at 100°C in a nitrogen atmosphere. After stirring under heating for about 1 hour, volatile components such as unreacted DMS were distilled away under reduced pressure, whereby fifteen pairs of a poly(n-butyl acrylate) polymer [P3] having a dimethoxysilyl group at both termini was obtained. The number-average molecular weight of the resulting polymer [P3] was about 14000, and the molecular-weight distribution was 1.3. The average number of silyl groups introduced per molecule of the polymer, as determined by ¹H NMR analysis, was about 1.8.

### Production Example 4

### (Method of producing an n-butyl acrylate polymer having a crosslinkable silyl group at one terminus)

CuBr (8.39 g), acetonitrile (87.9 g), n-butyl acrylate (400 g) and ethyl 2-bromoadipate (38 g) were added to a nitrogen-substituted 2-L reactor equipped with a stirrer and a jacket, and the mixture was stirred at 70°C for about 30 minutes. Triamine (0.34 g) was added to initiate the reaction, n-Butyl acrylate (600 g) was continuously added dropwise during the reaction. While n-butyl acrylate was added dropwise, triamine (1.36 g) was added in portions. Four hours after the reaction was initiated, the mixture was stirred under heating at 80°C under reduced pressure, thereby evaporating the unreacted monomer and acetonitrile. Acetonitrile (352 g), 1,7-octadiene (215 g) and triamine (3.4 g) were added to the concentrate, and the mixture was stirred for 8 hours. The mixture was stirred under heating at 80°C under reduced pressure, thereby evaporating acetonitrile and the unreacted 1,7-octadiene, to concentrate the reaction mixture. Toluene (100 g) was added to the concentrate, to dissolve the polymer. Solid copper in the polymer mixture was filtered off with a bug filter (with a nominal filter fabric pore diameter of 1 µm, manufactured by HAYWARD). Kyoward 500SH (product ofKyowa Chemical; 0.5 parts by weight relative to 100 parts by weight of the polymer) and Kyoward 700SL (product of Kyowa Chemical; 0.5 parts by weight relative to 100 parts by weight of the polymer) were added to the filtrate, and the mixture was stirred under heating at 100°C for 3 hours in a mixed gas atmosphere of oxygen and nitrogen (oxygen concentration 6%). Insolubles in the mixture were separated by filtration. The filtrate was concentrated to give the polymer. The polymer was heated at 180°C for 12 hours (reduced pressure at 10 torr or less) for removing volatile components, whereby Br groups were eliminated from the polymer.

Toluene (100 parts by weight relative to 100 parts by weight of the polymer), Kyoward 500SH (product of Kyowa Chemical; 1 part by weight relative to 100 parts by weight of the polymer), Kyoward 700SL (product of Kyowa Chemical; 1 part by weight relative to 100 parts by weight of the polymer) and a hindered phenol antioxidant (0.01 part of Irganox 1010, Ciba Specialty Chemicals) were added to the polymer, and the mixture was stirred under heating at 150°C for 4 hours in a mixed gas atmosphere of oxygen and nitrogen (oxygen concentration 6%). Insolubles in the mixture were separated by filtration. The filtrate was concentrated to give an alkenyl group-terminated n-butyl acrylate polymer.

The number-average molecular weight of this alkenyl group-terminated n-butyl acrylate polymer was 6500, and the molecular-weight distribution was 1.2. The average number of alkenyl groups introduced per molecule of the polymer, as determined by ¹H NMR analysis, was 0.8.

A 500-ml reactor pressure-resistant reaction container equipped with a stirrer and a jacket was charged with the above alkenyl group-terminated n-butyl acrylate polymer (120 g), dimethoxymethylhydrosilane (4.9 g), methyl o-formate (1.6 g), and a solution of a platinum(0)-1,1,3,3-tetramethyl-1,3-divinyldisiloxane complex in isopropanol. The mixture was stirred under heating at 100°C for 1 hour in a nitrogen atmosphere. Volatile components in the mixture were distilled away under reduced pressure, whereby a crosslinkable silyl group-terminated n-butyl acrylate polymer ([P4]) was obtained. The number-average molecular weight of the resulting polymer [P4] as determined by GPC measurement (polystyrene equivalent) was 6950, and the molecular-weight distribution was 1.2. The average number of silyl groups introduced per molecule of the polymer, as determined by ¹H NMR analysis, was 0.7.

### Production Example 5

### (Method of producing an n-butyl acrylate polymer having an acryloyl group at both termini)

3.36 g (23.5 mmol) of copper(I) bromide and 89.4 mL of acetonitrile were introduced into a 1-L flask and stirred under heating at 70°C for 20 minutes in a nitrogen stream. 14.0 g (38.9 mmol) of diethyl 2,5-dibromoadipate and 894 mL (6.24 mmol) of n-butyl acrylate were added, and the mixture was stirred under heating at 80°C for 20 minutes. 0.16 mL (0.77 mmol) of triamine was added to initiate the reaction. Additional triamine was added properly, and the mixture was stirred under heating at 80°C, and when the polymerization reaction rate exceeded 95%, the polymerization was finished.

400 g of this polymer was dissolved in N,N-dimethylacetamide (400 mL), and 7.4 g of potassium acrylate was added thereto, and the mixture was stirred under heating at 70°C for 3 hours in a nitrogen atmosphere, to give an acryloyl group-terminated n-butyl acrylate polymer ([P5]) mixture. The N,N-dimethylacetamide in this mixture was distilled away under reduced pressure, and toluene was added to the residues, and insolubles were removed by filtration. The toluene in the filtrate was distilled away under reduced pressure, to purify the polymer [P5]. The number-average molecular weight of the purified polymer [P5] was 22500, the molecular-weight distribution was 1.25, and the average number of terminal acryloyl groups was 1.9.

### Production Example 6

### (Synthesis of poly(n-butyl acrylate) having an acryloyl group at one terminus)

n-Butyl acrylate was polymerized with cuprous bromide as a catalyst, pentamethyldiethylene triamine as a ligand, and ethyl 2-bromobutyrate as an initiator, whereby poly(n-butyl acrylate) having a bromine group at one terminus having a number-average molecular weight of 3700 and a molecular-weight distribution of 1.14 was obtained.

1050 g of this polymer was dissolved in N,N-dimethylacetamide (1050 mL), and 56.2 g of potassium acrylate was added thereto, and the mixture was stirred under heating at 70°C for 4 hours in a nitrogen atmosphere, to give a mixture of poly(n-butyl acrylate) having an acryloyl group at one terminus (hereinafter referred to as a polymer [P6]). The N,N-dimethylacetamide in this mixture was distilled away under reduced pressure, and toluene was added to the residues, and insolubles were removed by filtration. The toluene in the filtrate was distilled away under reduced pressure, to purify the polymer [P6].

The number-average molecular weight of the purified polymer [P6] having an acryloyl group at one terminus was 3800, the molecular-weight distribution was 1.15, and the average number of terminal acryloyl groups was 1.0 (that is, the degree of introduction of an acryloyl group to the terminus was almost 100%).

### Production Example 7

### (Synthesis of poly(butyl acrylate/ethyl acrylate/2-methoxyethyl acrylate) having an acryloyl group at both termini)

4.34 g (30.3 mmol) of copper(I) bromide and 74.3 mL of acetonitrile were introduced into a 1-L flask and stirred under heating at 70°C for 20 minutes in a nitrogen stream. 18.1 g (50.3 mmol) of diethyl 2,5-dibromoadipate, 216.6 mL (1.51 mol) of n-butyl acrylate, 301.2 mL (2.78 mol) of ethyl acrylate, and 225.4 mL (1.75 mol) of 2-methoxyethyl acrylate were added, and the mixture was stirred under heating at 80°C for 20 minutes. 0.21 mL (1.00 mmol) oftriamine was added to initiate the reaction. Additional triamine was added properly, and the mixture was stirred under heating at 80°C, and when the polymerization reaction rate exceeded 95%, the polymerization was finished. 300 g of this polymer was dissolved in N,N-dimethylacetamide (300 mL), and 7.4 g of potassium acrylate was added thereto, and the mixture was stirred under heating at 70°C for 3 hours in a nitrogen atmosphere, to give a mixture of poly(butyl acrylate/ethyl acrylate/2-methoxyethyl acrylate) having an acryloyl group at one terminus ([P7]). The N,N-dimethylacetamide in this mixture was distilled away under reduced pressure, and toluene was added to the residues, and insolubles were removed by filtration. The toluene in the filtrate was distilled away under reduced pressure, to purify the polymer [P7]. The number-average molecular weight of the purified polymer [P7] was 16200, the molecular-weight distribution was 1.12, and the average number of terminal acryloyl groups was 1.9.

### Production Example 8

### (Synthesis of poly(n-butyl acrylate/ethyl acrylate/2-methoxyethyl acrylate) having an acryloyl group at one terminus)

n-Butyl acrylate/ethyl acrylate/2-methoxyethyl acrylate were polymerized in a molar ratio of 25/46/29 with cuprous bromide as a catalyst, pentamethyldiethylene triamine as a ligand, and ethyl 2-bromobutyrate as an initiator, whereby poly(n-butyl acrylate/ethyl acrylate/2-methoxyethyl acrylate) having a bromine group at one terminus having a number-average molecular weight of 3700 and a molecular-weight distribution of 1.14 was obtained.

1050 g of this polymer was dissolved in N,N-dimethylacetamide (1050 g), and 56.2 g of potassium acrylate was added thereto, and the mixture was stirred under heating at 70°C for 4 hours in a nitrogen atmosphere, to give a mixture of poly(n-butyl acrylate/ethyl acrylate/2-methoxyethyl acrylate) having an acryloyl group at one terminus (hereinafter referred to as a polymer [P8]). The N,N-dimethylacetamide in this mixture was distilled away under reduced pressure, and toluene was added to the residues, and insolubles were removed by filtration. The toluene in the filtrate was distilled away under reduced pressure, to purify the polymer [P8].

The number-average molecular weight of the purified polymer [P8] having an acryloyl group at one terminus was 3800, the molecular-weight distribution was 1.15, and the average number of terminal acryloyl groups was 1.0 (that is, the degree of introduction of an acryloyl group to the terminus was almost 100%).

### <Methods of Evaluating Physical Properties>

Physical properties of cured products (test specimens) prepared in Examples and Comparative Examples were measured according to the following methods and conditions.

### (Tensile Physical Property)

Measured with a (1/3)-size dumbbell at a pulling speed of 200 mm/min. under 23°C x 55% RH conditions (measuring instrument: Autograph manufactured by Shimadzu Corporation) according to JIS K 6251.

### (Duro A Hardness)

Measured under 23°C x 55% RH conditions (measuring instrument: CL-150 (CONSTANT DOADER DUROMETER) manufactured by ASKER and DUROMETER A manufactured by Shimadzu Corporation) according to JIS K 6253.

### (Duro E Hardness)

Measured under 23°C x 55% RH conditions (measuring instrument: CL-150 (CONSTANT DOADER DUROMETER) manufactured by ASKER and DUROMETER E manufactured by Kobunshi Keiki) according to JIS K 6253. DUROMETER E: a hardness meter for low-hardness materials such as soft rubber, sponge, and foamed elastomer

### (Permanent Compression Set)

Strain after 25% compression at 150°C for 70 hours was measured (measuring instrument: permanent compression set testing apparatus manufactured by Kobunshi Keiki) according to JIS K 6262.

### (Dynamic Viscoelasticity)

Measured in the temperature range of -70°C to 180°C with a frequency of 50 Hz with a dynamic viscoelasticity measuring instrument DVA-200 (manufactured by Asty Keisoku Seigyo, Inc.). The sample specimen had a shape of about 2 mm in thickness, about 6.5 mm in length and 5.5 mm in width.

### (Repulsive Elastic Modulus)

Repulsive elastic modulus was measured under 23°C x 55% RH conditions (measuring instruments: ASKER repulsive elastic modulus testing machine EPH-50 manufactured by Kobunshi Keiki) according to ISO 4662. Lower repulsive elastic modulus indicates that the specimen is superior as a damping material and a shock absorber.

### Example 1

1 part of a phenol-based antioxidant tetrakis-[methylene-3-(3,5-di-tert-butyl-4-hydroxyphenyl)propionate]methane (trade name: IRGANOX 1010, manufactured by Ciba Specialty Chemicals) and 1 part of a curing catalyst (No. 918 manufactured by Sankyo Organic Chemicals Co., Ltd.) were added to, and mixed well with, 40 parts of the polymer [P2] obtained in Production Example 2 and 60 parts of the polymer [P4] obtained in Production Example 4. The mixture was poured into a mold form and cured under 55% RH at 23°C for 3 days and then at 50°C for 4 days, to give a cured sheet of 2 mm in thickness. The resulting cured product was used to measure tensile physical property, Duro A hardness, Duro E hardness, permanent compression set, dynamic viscoelastic characteristic in a shear mode, and repulsive elastic modulus. The results are shown in Table 1.

### Example 2

A cured sheet of 2 mm in thickness was obtained in the same manner as in Example 1 except that the polymer [P3] was used in place of the polymer [P2]. The resulting cured product was used to measure tensile physical property, Duro A hardness, Duro E hardness, permanent compression set, dynamic viscoelastic characteristic in a shear mode, and repulsive elastic modulus. The results are shown in Table 1.

### Example 3

1 part of an antioxidant IRGANOX 1010, 1 part of a photoradical initiator 2-hydroxy-2-methyl-1-phenylpropan-1-one (DAROCURE 1173, manufactured by Ciba Specialty Chemicals) and 0.5 parts of a photoradical initiator bis(2,4,6-trimethylbenzoyl)-phenylphosphine oxide (IRGACURE 819, manufactured by Ciba Specialty Chemicals) were sufficiently dissolved in, and mixed with, 50 parts of the polymer [P5] obtained in Production Example 5 and 50 parts of the polymer [P6] obtained in Production Example 6, and then defoamed by heating at 60°C for 1 hour. The mixture was poured into a mold form and cured by irradiation with an UV irradiation device (ECS-301GX, manufactured by Igraphic Ltd.; irradiation condition 80 W/cm, irradiation distance 15 cm) for 30 seconds, to give a cured sheet of 2 mm in thickness. The resulting cured product was used to measure tensile physical property, Duro A hardness, Duro E hardness, permanent compression set, dynamic viscoelastic characteristic in a shear mode, and repulsive elastic modulus. The results are shown in Table 1.

### Example 4

A curable composition was prepared and a cured product thereof was prepared in the same manner as in Example 3 except that 25 parts of the polymer [P5] and 75 parts of the polymer [P6] were used, and the product was measured for its tensile physical property, Duro A hardness, Duro E hardness, permanent compression set, dynamic viscoelastic characteristic in a shear mode, and repulsive elastic modulus. The results are shown in Table 1.

### Example 5

1 part of an antioxidant IRGANOX 1010, 0.2 parts of a photoradical initiator 2-hydroxy-2-methyl-1-phenylpropan-1-one (DAROCURE 1173, manufactured by Ciba Specialty Chemicals) and 0.1 parts of a photoradical initiator bis(2,4,6-trimethylbenzoyl)phenylphosphine oxide (IRGACURE 819, manufactured by Ciba Specialty Chemicals) were sufficiently dissolved in, and mixed with, 16.7 parts of the polymer [P7] obtained in Production Example 7 and 83.3 parts of the polymer [P8] obtained in Production Example 8, and then defoamed by heating at 60°C for 1 hour. The mixture was poured into a mold form and cured by irradiation with an UV irradiation device (ECS-301GX, manufactured by Igraphic Ltd.; irradiation condition 80 W/cm, irradiation distance 15 cm) for 60 seconds, to give a cured sheet of 2 mm in thickness. The resulting cured product was used to measure tensile physical property, Duro A hardness, permanent compression set, dynamic viscoelastic characteristic in a shear mode, and repulsive elastic modulus. The results are shown in Table 1.

### Example 6

A cured product was prepared and measured in the same manner as in Example 5 except that 10 parts of Nipsil LP (manufactured by Tosoh Silica Corporation) were added as hydrophobic silica. The results are shown in Table 1.

### Example 7

A cured product was prepared and measured in the same manner as in Example 5 except that 10 parts of the polymer [P7] and 90 parts of the polymer [P8] were used. The results are shown in Table 1.

### Example 8

A cured product was prepared and measured in the same manner as in Example 7 except that 10 parts ofNipsil LP (manufactured by Tosoh Silica Corporation) were added as hydrophobic silica.

### Comparative Example 1

1 part of an antioxidant IRGANOX 1010, 30 parts of an epoxy component Seroxide 2021P (manufactured by Daicel Chemical Industries, Ltd.), 0.7 parts of a photoradical initiator 2-hydroxy-2-methyl-1-phenylpropan-1-one (DAROCURE 1173, manufactured by Ciba Specialty Chemicals) and 0.35 parts of a photoradical initiator bis(2,4,6-trimethylbenzoyl)phenylphosphine oxide (IRGACURE 819, manufactured by Ciba Specialty Chemicals) were added to 70 parts of the polymer [P7] obtained in Production Example 7, and 0.45 parts of a photoradical initiator Adekaoptomer SP-172 (manufactured by Asahi Denka Co., Ltd.) was added thereto. A curable composition was prepared from the mixture and a cured product was prepared from the composition in the same manner as in Example 3, and the product was measured for its tensile physical property and dynamic viscoelastic characteristic in a shear mode. The results are shown in Table 1.

### Comparative Example 2

Shock absorber α-gel (silicone gel manufactured by Geltec Corporation) was measured for its tensile physical property, Duro A hardness, permanent compression set, dynamic viscoelastic characteristic in a shear mode, and repulsive elastic modulus. The results are shown in Table 1.

### Comparative Example 3

1 part of a phenol-based antioxidant tetrakis-[methylene-3-(3,5-di-tert-butyl-4-hydroxyphenyl)propionate]methane (trade name: IRGANOX 1010, manufactured by Ciba Specialty Chemicals), I part of a curing catalyst (SCAT27 manufactured by Sankyo Organic Chemicals Co., Ltd.) and 1 part of water were added to, and mixed well with, 100 parts of the polymer [P2] obtained in Production Example 2, and then poured into a mold form and cured under 55% RH at 23°C for 3 days and then at 50°C for 4 days, to give a cured sheet of 2 mm in thickness. The resulting cured product was used to measure dynamic viscoelastic characteristic in a shear mode. The results are shown in Table 1.

### Comparative Example 4

1 part of an antioxidant IRGANOX 1010, 1 part of a photoradical initiator 2-hydroxy-2-methyl-1-phenyl-propan-1-one (DAROCURE 1173, manufactured by Ciba Specialty Chemicals) and 0.5 parts of a photoradical initiator bis(2,4,6-trimethylbenzoyl)phenylphosphine oxide (IRGACURE 819, manufactured by Ciba Specialty Chemicals) were added to, and sufficiently dissolved and mixed in, 100 parts of the polymer [P5] obtained in Production Example 5, and the mixture was defoamed by heating at 60°C for 1 hour. The mixture was poured into a mold form and cured by irradiation with an UV irradiation device (ECS-301GX, manufactured by Igraphic Ltd.; irradiation condition 80 W/cm, irradiation distance 15 cm) for 30 seconds, to give a cured sheet of 2 mm in thickness. The resulting cured product was used to measure tensile physical property, Duro A hardness, permanent compression set, and dynamic viscoelastic characteristic in a shear mode. The results are shown in Table 1.

**Table 1**

| | | Examples | | | | | | | | Comparative Examples | | | |
|---|---|---|---|---|---|---|---|---|---|---|---|---|---|
| | | 1 | 2 | 3 | 4 | 5 | 6 | 7 | 8 | 1 | 2 | 3 | 4 |
| Tensile physical property (JIS K 6251) (1/3)-size | M100 (Mpa) | 0.008 | 0.01 | 0.07 | 0.01 | 0.03 | 0.21 | 0.02 | 0.05 | - | 0.01 | 0.22 | - |
| | TB (Mpa) | 0.06 | 0.14 | 0.18 | 0.09 | 0.11 | 0.63 | 0.05 | 0.20 | 5.26 | 0.03 | 0.40 | 0.30 |
| | EB (%) | 417 | 641 | 250 | 431 | 278 | 200 | 365 | 297 | 30 | 294 | 184 | 100 |
| Hardness | DuroA | - | - | 1 | 0 | 4 | 9 | 0 | 0 | - | 0 | - | 7 |
| | DuroE | 0 | 0 | 14 | 1 | 15 | 25 | 2 | 6 | - | 0 | - | - |
| Permanent compression set (%) | | - | - | 19 | 60 | 27 | 39 | 31 | 41 | - | 61 | - | - |
| Viscoelastic characteristics | Tg (°C) | -23.7 | -22.9 | -25.4 | -23.7 | -12.4 | -9.5 | -11.2 | -7.9 | 9.3 | -14.8 | 25.1 | -29.3 |
| | Maximum value of tan δ | 1.89 | 1.80 | 2.08 | 2.00 | 1.94 | 1.53 | 1.82 | 1.69 | 0.64 | 1.17 | 1.55 | 1.94 |
| | Temperature range in which tan δ > 0.7 is maintained | -32- | -32- | -35- | -36- | -21- | -17- | -22- | -21- | None | -36- | -35- | -43- |
| | | 102 | 102 | 53 | 180 | 113 | 103 | 180 | 180 | | 94 | -5 | -4 |
| | Range of tan δ at a temperature in the range of -70 to 180°C | 0.17 - | 0.17 - | 0.09 - | 0.02 - | 0.5 - | 0.4 - | 0.9 - | 0.79 - | 0.02 - | 0.2 - | 0.02 - | 0.02 - |
| | | 1.89 | 1.80 | 2.08 | 2.00 | 1.94 | 1.53 | 1.82 | 1.69 | 0.64 | 1.17 | 1.55 | 1.94 |
| Repulsive elastic modulus (%) | | 0.7 | 2.7 | 11.7 | 4.4 | 4.9 | 5.3 | 1.9 | 2.7 | - | 14.4 | - | - |

As shown in Table 1, it can be seen that in Examples 1 to 8, the maximum value of dynamic viscoelastic modulus tan δ is 0.7 or more, and tan δ is maintained to be 0.01 or more in the wide temperature range of -70 to 180°C, and under broad conditions from low to high temperatures, the products can be used as damping materials. As is evident from the EB value as tensile physical property, excellent elongation can be realized in Examples as opposed to Comparative Examples where only low elongation is exhibited Cured products obtained by curing the curable compositions containing the vinyl-based polymers (I) and (II) in Examples 1 to 8 according to the present invention, as compared with cured products of only the vinyl-based polymer (I) in Comparative Examples 3 and 4, can broaden the upper limit of the temperature at which tan δ ≥ 0.7 can be maintained. In Examples 4 to 8 where the vinyl-based polymer (II) is contained in an amount of not less than 70% by weight in an embodiment where the vinyl-based polymer having a carbon-carbon double bond as the crosslinkable functional group is used, the upper limit of the temperature at which tan δ ≥ 0.7 can be maintained is higher than 100°C. From the foregoing, it can be said that damping materials obtained from the curable composition for damping materials according to the present invention are excellent in vibrational absorption in a wide temperature range (for example, -35 to 50°C). Particularly, the materials of the invention can be said to be usable in a high-temperature range of 100°C or more. Cured products of the curable compositions according to the present invention, as compared with the shock absorber silicon gel in Comparative Example 2, can highly maintain tan δ in the temperature range of -70 to 180°C, has lower repulsive elastic modulus, and can thus be considered useful as a shock absorber.

Although the present invention has been described and illustrated in detail, it is clearly understood that the same is by way of illustration and example only and is not to be taken by way of limitation, the scope of the present invention being interpreted by the terms of the appended claims.

### Industrial Applicability

The curable composition for damping materials according to the present invention can give a cured product which has excellent oil resistance, heat resistance and weather resistance and showing a viscoelastic behavior required for a damping material. Specifically, a rubber-like cured product obtained by curing the damping composition for damping materials according to the present invention has a high loss coefficient in a wide temperature range of -70°C to 180°C and is excellent in balance between heat resistance and damping property. Accordingly, such cured product is preferred as a damping material offering high performance such as high heat resistance and high oil resistance.

The curable composition for damping materials according to the present invention is liquid (with low viscosity) at ordinary temperature, and can thus be easily poured at ordinary temperature by heating and can be considered useful in potting and the like. By selecting a curing catalyst and an initiator required for curing, it is possible to design a curable composition excellent in storage stability in the form of one-component formulation. Particularly when a photoinitiator is used, the composition is excellent in storage stability.

## Claims

1. A curable composition for damping materials, comprising:
a vinyl-based polymer (I) having more than one crosslinkable functional group on average and having at least one of said crosslinkable functional groups at the terminus thereof, and
a vinyl-based polymer (II) having one or less crosslinkable functional group on average,
wherein the content of said vinyl-based polymer (II) is 50 to 95 parts by weight based on 100 parts by weight of the vinyl-based polymers (I) and (II), and
wherein both said vinyl-based polymer (I) and said vinyl-based polymer (II) are produced by living radical polymerization.

2. The curable composition for damping materials according to claim 1, wherein the maximum value of loss tangent (tan δ) in dynamic viscoelastic characteristics of a rubber-like substance obtained by curing said curable composition for damping materials is 0.7 or more.

3. The curable composition for damping materials according to claim 1 or 2, wherein the crosslinkable functional group of said vinyl-based polymer (I) is at least one member selected from the group consisting of a crosslinkable silyl group, an alkenyl group, a hydroxyl group, an amino group, and a group having a polymerizable carbon-carbon double bond.

4. The curable composition for damping materials according to any one of claims 1 to 3, wherein the crosslinkable functional group of said vinyl-based polymer (II) is at least one member selected from the group consisting of a crosslinkable silyl group, an alkenyl group, a hydroxyl group, an amino group, a group having a polymerizable carbon-carbon double bond, and an epoxy group.

5. The curable composition for damping materials according to any one of claims 1 to 4, wherein the crosslinkable functional group of said vinyl-based polymer (I) and/or said vinyl-based polymer (II) is a group having a polymerizable carbon-carbon double bond, and the composition further comprises an initiator (III).

6. The curable composition for damping materials according to claim 5, wherein said initiator (III) is a photoradical initiator and/or a heat radical initiator.

7. The curable composition for damping materials according to claim 6, wherein said photoradical initiator is at least one member selected from the group consisting of a compound having a hydroxyl group and a phenyl ketone structure, a compound having a benzophenone structure, and a compound having an acylphosphine oxide structure.

8. The curable composition for damping materials according to any one of claims 1 to 7 wherein said vinyl-based polymer (I) and/or said vinyl-based polymer (II) has a molecular-weight distribution of less than 1.8.

9. The curable composition for damping materials according to any one of claims I to 8, wherein the main chain of said vinyl-based polymer (I) and/or said vinyl-based polymer (II) is produced by polymerizing predominantly at least one monomer selected from the group consisting of (meth)acrylic monomers, acrylonitrile-based monomers, aromatic vinyl-based monomers, fluorine-containing vinyl-based monomers and silicon-containing vinyl-based monomers.

10. The curable composition for damping materials according to any one of claims 1 to 9, wherein said vinyl-based polymer (I) and/or said vinyl-based polymer (II) is a (meth)acrylic polymer.

11. The curable composition for damping materials according to any of claims 1 to 10, wherein said living radical polymerization is atom transfer radical polymerization.

12. A damping material obtained by curing the curable composition for damping materials according to any one of claims 1 to 11.

## Patentansprüche

1. Härtbare Zusammensetzung für Dämpfungsmaterialien, umfassend:
ein Polymer auf Vinylbasis (I) mit durchschnittlich mehr als einer quervernetzbaren funktionellen Gruppe und mit wenigstens einer der quervernetzbaren funktionellen Gruppen an seinem Ende und
ein Polymer auf Vinylbasis (II) mit durchschnittlich einer oder weniger als einer quervernetzbaren funktionellen Gruppe,
wobei der Gehalt des Polymers auf Vinylbasis (II) 50 bis 95 Masseteile basierend auf 100 Masseteile der Polymere auf Vinylbasis (I) und (II) ist und
wobei sowohl das Polymer auf Vinylbasis (I) als auch das Polymer auf Vinylbasis (II) durch lebende Radikalpolymerisation erzeugt wurden.

2. Härtbare Zusammensetzung für Dämpfungsmaterialien nach Anspruch 1, wobei der maximale Wert der Verlusttangente (tan δ) in den dynamischen viskoelastischen Eigenschaften einer gummiähnlichen Substanz, die durch Härten der härtbaren Zusammensetzung für Dämpfungsmaterialien erzeugt wird, 0,7 oder mehr ist.

3. Härtbare Zusammensetzung für Dämpfungsmaterialien nach Anspruch 1 oder 2, wobei die quervernetzbare funktionelle Gruppe des Polymers auf Vinylbasis (1) wenigstens ein Element ist, daß aus der Gruppe bestehend aus einer quervernetzbaren Silylgruppe, einer Alkenylgruppe, einer Hydroxylgruppe, einer Aminogruppe und einer Gruppe mit einer polymerisierbaren Kohlenstoff-Kohlenstoff-Doppelbindung ausgewählt ist.

4. Härtbare Zusammensetzung für Dämpfungsmaterialien nach einem der Ansprüche 1 bis 3, wobei die quervernetzbare funktionelle Gruppe des Polymers auf Vinylbasis (II) wenigstens ein Element ist, daß aus der Gruppe bestehend aus einer quervernetzbaren Silylgruppe, einer Alkenylgruppe, einer Hydroxylgruppe, einer Aminogruppe, einer Gruppe mit einer polymerisierbaren Kohlenstoff-Kohlenstoff-Doppelbindung und eine Epoxydgruppe ausgewählt ist.

5. Härtbare Zusammensetzung für Dämpfungsmaterialien nach einem der Ansprüche 1 bis 4, wobei die quervernetzbare funktionelle Gruppe des Polymers auf Vinylbasis (I) und/oder des Polymers auf Vinylbasis (II) eine Gruppe mit einer polymerisierbaren Kohlenstoff-Kohlenstoff-Doppelbindung ist und die Zusammensetzung ferner einen Polymerisationsstarter (III) umfaßt.

6. Härtbare Zusammensetzung für Dämpfungsmaterialien nach Anspruch 5, wobei der Polymerisationsstarter (III) ein fotoradikalischer Polymerisationsstarter und/oder ein radikalischer Hitzepolymerisationsstarter ist.

7. Härtbare Zusammensetzung für Dämpfungsmaterialien nach Anspruch 6, wobei der fotoradikalische Polymerisationsstarter wenigstens ein Element ist, das aus der Gruppe bestehend aus einer Verbindung mit einer Hydroxylgruppe und einer Phenylketonstruktur, eine Verbindung mit einer Benzophenonstruktur und einer Zusammensetzung mit einer Acylphosphinoxidstruktur ausgewählt ist.

8. Härtbare Zusammensetzung für Dämpfungsmaterialien nach einem der Ansprüche 1 bis 7, wobei das Polymer auf Vinylbasis (I) und/oder das Polymer auf Vinylbasis (II) eine Molekulargewichtsverteilung niedriger als 1,8 aufweist.

9. Härtbare Zusammensetzung für Dämpfungsmaterialien nach einem der Ansprüche 1 bis 8, wobei die Hauptkette des Polymers auf Vinylbasis (I) und/oder des Polymers auf Vinylbasis (II) durch Polymerisation von hauptsächlich wenigstens einem Monomer erzeugt wird, das aus der Gruppe bestehend aus (meth)acrylischen Monomeren, Monomeren auf Acrylonitrilbasis, aromatischen Monomeren aus Vinylbasis, fluorhaltigen Monomere auf Vinylbasis und siliziumhaltigen Monomeren auf Vinylbasis ausgewählt ist.

10. Härtbare Zusammensetzung für Dämpfungsmaterialien nach einem der Ansprüche 1 bis 9, wobei das Polymer auf Vinylbasis (I) und/oder das Polymer auf Vinylbasis (II) ein (meth)acrylisches Polymer ist.

11. Härtbarte Zusammensetzung für Dämpfungsmaterialien nach einem der Ansprüche 1 bis 10, wobei die lebende Radikalpolymerisation eine Atomtransfer-Radikalpolymerisation ist.

12. Dämpfungsmaterial, erhalten durch Härten der härtbaren Zusammensetzung für Dämpfungsmaterialien nach einem der Ansprüche 1 bis 11.

## Revendications

1. Composition durcissable pour des matériaux d'amortissement comprenant :
un polymère de base vinylique (I) présentant plus d'un groupe fonctionnel réticulable en moyenne et ayant au moins un desdits groupes fonctionnels réticulables à sa terminaison, et
un polymère de base vinylique (II) présentant un groupe fonctionnel réticulable ou moins en moyenne,
dans laquelle la teneur dudit polymère de base vinylique (II) est de 50 à 95 parties en masse rapporté à 100 parties en masse des polymères de base vinylique (I) et (II), et
dans laquelle à la fois ledit polymère de base vinylique (I) et ledit polymère de base vinylique (II) sont produits par polymérisation radicalaire vivante.

2. Composition durcissable pour des matériaux d'amortissement selon la revendication 1, dans laquelle la valeur maximale de la tangente d'angle de pertes (tan δ) dans des caractéristiques viscoélastiques dynamiques d'une substance semblable à du caoutchouc obtenue par durcissement de ladite composition durcissable pour des matériaux d'amortissement est de 0,7 ou supérieure.

3. Composition durcissable pour des matériaux d'amortissement selon la revendication 1 ou 2, dans laquelle le groupe fonctionnel réticulable dudit polymère de base vinylique (I) est au moins un élément choisi dans le groupe constitué d'un groupe silyle réticulable, d'un groupe alcényle, d'un groupe hydroxyle, d'un groupe amino et d'un groupe présentant une double liaison carbone-carbone polymérisable.

4. Composition durcissable pour des matériaux d'amortissement selon l'une quelconque des revendications 1 à 3, dans laquelle le groupe fonctionnel réticulable dudit polymère de base vinylique (II) est au moins un élément choisi dans le groupe constitué d'un groupe silyle réticulable, d'un groupe alcényle, d'un groupe hydroxyle, d'un groupe amino, d'un groupe présentant une double liaison carbone-carbone polymérisable et d'un groupe époxy.

5. Composition durcissable pour des matériaux d'amortissement selon l'une quelconque des revendications 1 à 4, dans laquelle le groupe fonctionnel réticulable dudit polymère de base vinylique (I) et/ou dudit polymère de base vinylique (II) est un groupe présentant une double liaison carbone-carbone polymérisable et la composition comprend de plus un initiateur (III).

6. Composition durcissable pour des matériaux d'amortissement selon la revendication 5, dans laquelle ledit initiateur (III) est un initiateur photoradicalaire et/ou un initiateur thermo-radicalaire.

7. Composition durcissable pour des matériaux d'amortissement selon la revendication 6, dans laquelle ledit initiateur photoradicalaire est au moins un élément choisi dans le groupe constitué d'un composé présentant un groupe hydroxyle et une structure de phénylcétone, d'un composé présentant une structure de benzophénone et d'un composé présentant une structure d'oxyde d'acylphosphine.

8. Composition durcissable pour des matériaux d'amortissement selon l'une quelconque des revendications 1 à 7, dans laquelle ledit polymère de base vinylique (I) et/ou ledit polymère de base vinylique (II) présente une distribution de masse moléculaire inférieure à 1,8.

9. Composition durcissable pour des matériaux d'amortissement selon l'une quelconque des revendications 1 à 8, dans laquelle la chaîne principale dudit polymère de base vinylique (I) et/ou dudit polymère de base vinylique (II) est produite en polymérisant de manière prédominante au moins un monomère choisi dans le groupe constitué de monomères (méth)acryliques, de monomères à base d'acrylonitrile, de monomères de base vinylique aromatique, de monomères de base vinylique contenant du fluor et de monomères de base vinylique contenant du silicium.

10. Composition durcissable pour des matériaux d'amortissement selon l'une quelconque des revendications 1 à 9, dans laquelle ledit polymère de base vinylique (I) et/ou ledit polymère de base vinylique (II) est un polymère (méth)acrylique.

11. Composition durcissable pour des matériaux d'armor-tissement selon l'une quelconque des revendications 1 à 10, dans laquelle ladite polymérisation radicalaire vivante est une polymérisation radicalaire par transfert d'atome.

12. Matériau d'amortissement obtenu par durcissement de la composition durcissable pour des matériaux d'amortissement selon l'une quelconque des revendications 1 à 11.
